(19) Europäisches Patentamt
European Patent Office
Office européen des brevets

(11) EP 3 038 398 B1

(12) EUROPEAN PATENT SPECIFICATION

(45) Date of publication and mention
of the grant of the patent:
**18.07.2018 Bulletin 2018/29**

(51) Int Cl.:
*H04W 72/04* (2009.01)   *H04L 5/14* (2006.01)

(86) International application number:
**PCT/CN2013/084073**

(21) Application number: **13894665.2**

(22) Date of filing: **24.09.2013**

(87) International publication number:
**WO 2015/042771 (02.04.2015 Gazette 2015/13)**

(54) **SEMI-PERSISTENT SCHEDULING METHOD AND USER EQUIPMENT**

SEMIPERSISTENTES PLANUNGSVERFAHREN UND BENUTZERVORRICHTUNG

PROCÉDÉ DE PLANIFICATION SEMI-PERMANENTE ET ÉQUIPEMENT UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.06.2016 Bulletin 2016/26**

(73) Proprietor: **Huawei Technologies Co., Ltd.
Longgang District
Shenzhen, Guangdong 518129 (CN)**

(72) Inventors:
• **QUAN, Wei
Shenzhen
Guangdong 518129 (CN)**
• **LV, Yongxia
Shenzhen
Guangdong 518129 (CN)**
• **YANG, Xiaodong
Shenzhen
Guangdong 518129 (CN)**
• **ZHANG, Jian
Shenzhen
Guangdong 518129 (CN)**

(74) Representative: **Maiwald Patent- und Rechtsanwaltsgesellschaft mbH
Elisenhof
Elisenstraße 3
80335 München (DE)**

(56) References cited:
EP-A1- 2 408 237          WO-A1-2012/113131
CN-A- 102 647 718      CN-A- 103 313 254

• **SAMSUNG: "Semi-static reconfiguration of TDD UL-DL configuration", 3GPP DRAFT; R1-122266 SEMI-STATIC RECONFIGURATION OF TDD UL-DL CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050600529, [retrieved on 2012-05-12]**
• **NEW POSTCOM: "Discussion on signaling mechanisms for eIMTA", 3GPP DRAFT; R1-131113 DISCUSSION ON SIGNALLING MECHANISMS FOR EIMTA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG1, no. Chicago, USA; 20130415 - 20130419 6 April 2013 (2013-04-06), XP050697053, Retrieved from the Internet: URL:http://www.3gpp.org/ftp/tsg_ran/WG1_RL 1/TSGR1_72b/Docs/ [retrieved on 2013-04-06]**

**Description**

**TECHNICAL FIELD**

The present invention relates to the field of communications technologies, and in particular, to a semi-persistent scheduling method and user equipment.

**BACKGROUND**

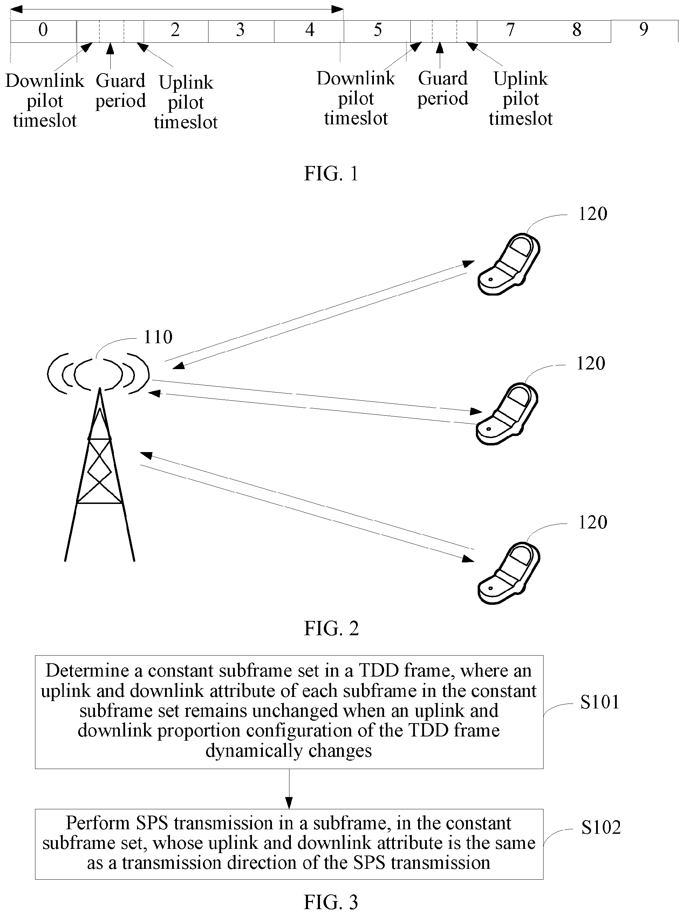

In an LTE system, two frame structures: frequency division duplex (FDD) frame structure and time division duplex (TDD) frame structure are supported. In a TDD frame structure, as shown in FIG. 1, a radio frame of 10 ms is divided into two half-frames of a length of 5 ms, and each half-frame includes five subframes of a length of 1 ms, which include four common subframes and one special subframe, where a length of the common subframe is two times of 0.5 ms, and the special subframe includes three special timeslots (an uplink pilot timeslot UpPTS, a guard period GP, and a downlink pilot timeslot DwPTS, where the DwPTS is used for sending a downlink signal, the UpPTS is used for sending an uplink signal, and the GP is a guard period of TDD uplink and downlink conversion).

SPS (Semi-Persistent Scheduling) is a semi-persistent scheduling mechanism, and a main method is setting one set of SPS related parameters for a UE by using a radio resource control (RRC) message, where, using uplink SPS as an example, configured parameters may include an SPS period, an implicit release condition for the uplink SPS, and the like; and using downlink SPS as an example, configured parameters may include parameters such as an SPS period, an uplink feedback resource corresponding to downlink SPS transmission, and an HARQ process quantity reserved for the SPS. Then, an SPS transmission resource is activated by using an SPS activation command, and the UE periodically uses the SPS transmission resource according to the SPS activation command, to perform SPS transmission.

WO 2012/113131 A1 discloses methods and systems allowing dynamic TDD UL/DL configuration that is able to adapt to an instantaneous traffic situation.

To better adapt to changes of different services, a TDD uplink and downlink proportion configuration configured for the UE may dynamically change. A result of the dynamic change of the TDD uplink and downlink proportion configuration is that directions of some subframes remain unchanged (for example, a constant uplink subframe or a constant downlink subframe), but directions of some subframes may change (for example, a flexible subframe). Due to existence of a flexible subframe, when the TDD uplink and downlink proportion configuration changes, a subframe that is originally used for the uplink SPS may change to downlink, or a subframe that is originally used for the downlink SPS may change to uplink. In this case, the SPS transmission is affected. In the prior art, there is no method for implementing and running the SPS mechanism when some subframes in a TDD system are used as a flexible subframe.

**SUMMARY**

A technical problem to be mainly resolved by this application is how to prevent existence of a flexible subframe from affecting normal SPS transmission in a case in which a TDD uplink and downlink proportion is dynamically configured for a UE.

Aspects of the present invention are defined by the independent claims. Further embodiments are provided by the dependent claims.

In view of this, this application provides a semi-persistent scheduling method, which can enable SPS transmission to be normally performed without being affected by a flexible subframe in a case in which a TDD uplink and downlink proportion is dynamically configured for a UE.

According to a first aspect, this application provides a semi-persistent scheduling method, including: determining a constant subframe set in a TDD frame, where an uplink and downlink attribute of each subframe in the constant subframe set remains unchanged when an uplink and downlink proportion configuration of the TDD frame dynamically changes; and performing SPS transmission in a subframe, in the constant subframe set, whose uplink and downlink attribute is the same as a transmission direction of the SPS transmission.

With reference to the first aspect, in a first possible implementation manner of the first aspect, the step of the determining a constant subframe set in a TDD frame includes: acquiring an uplink and downlink proportion configuration set of the TDD frame, where the uplink and downlink proportion configuration set includes at least two uplink and downlink proportion configurations; and determining subframes whose uplink and downlink attributes remain unchanged in the at least two uplink and downlink proportion configurations, to form the constant subframe set.

With reference to the first aspect, in a second possible implementation manner of the first aspect, the step of the determining a constant subframe set in a TDD frame includes: acquiring indication information, where the indication information directly specifies the subframe in the constant subframe set.

With reference to the first aspect, in a third possible implementation manner of the first aspect, the step of the determining a constant subframe set in a TDD frame includes:

acquiring at least one first reference uplink and downlink proportion configuration; and forming the constant subframe set by subframes with a specific attribute in the first reference uplink and downlink proportion configuration.

With reference to the first aspect or any one of the first to the third possible implementation manners of the first aspect, in a fourth possible implementation manner of the first aspect, the constant subframe set is at least one of a constant uplink subframe set and a constant downlink subframe set, where subframes in the constant uplink subframe set are all uplink subframes when the uplink and downlink proportion configuration of the TDD frame dynamically changes, and subframes in the constant downlink subframe set are all downlink subframes when the uplink and downlink proportion configuration of the TDD frame dynamically changes; and the step of the performing SPS transmission in the constant subframe set further includes: performing uplink SPS transmission in the constant uplink subframe set, or performing downlink SPS transmission in the constant downlink subframe set.

With reference to the fourth possible implementation manner of the first aspect, in a fifth possible implementation manner of the first aspect, the step of the forming the constant subframe set by subframes with a specific attribute in the first reference uplink and downlink proportion configuration further includes: forming the constant uplink subframe set by an uplink subframe in the first reference uplink and downlink proportion configuration, and forming the constant downlink subframe set by a downlink subframe and a special subframe in the first reference uplink and downlink proportion configuration.

With reference to the fifth possible implementation manner of the first aspect, in a sixth possible implementation manner of the first aspect, the first reference uplink and downlink proportion configuration used for forming the constant uplink subframe set is different from the first reference uplink and downlink proportion configuration used for forming the constant downlink subframe set.

With reference to the fifth possible implementation manner or the sixth possible implementation manner of the first aspect, in a seventh possible implementation manner of the first aspect, the first reference uplink and downlink proportion configuration used for forming the constant downlink subframe set is a proportion configuration indicated by a first system information block.

With reference to any one of the fifth to the seventh possible implementation manners of the first aspect, in an eighth possible implementation manner of the first aspect, the first reference uplink and downlink proportion configuration includes at least one of an uplink and downlink proportion configuration of downlink HARQ timing reference and an uplink and downlink proportion configuration of uplink HARQ timing reference, where the constant uplink subframe set is formed by an uplink subframe in the uplink and downlink proportion configuration of the downlink HARQ timing reference, and the constant downlink subframe set is formed by a downlink subframe and a special subframe in the uplink and downlink proportion configuration of the uplink HARQ timing reference.

With reference to the first aspect, in a ninth possible implementation manner of the first aspect, the step of the determining a constant subframe set in a TDD frame includes: acquiring an uplink and downlink proportion configuration set of the TDD frame, where the uplink and downlink proportion configuration set includes at least two uplink and downlink proportion configurations; and selecting, from the at least two uplink and downlink proportion configurations, an uplink and downlink proportion configuration with a minimum quantity of subframes whose uplink and downlink attributes are the same as the transmission direction of the SPS transmission, and forming the constant subframe set by subframes, in the selected uplink and downlink proportion configuration, whose uplink and downlink attributes are the same as the transmission direction of the SPS transmission.

With reference to any one of the fourth to the ninth possible implementation manners of the first aspect, in a tenth possible implementation manner of the first aspect, the uplink and downlink proportion configuration set of the TDD frame is acquired by using at least one of a system broadcast message and a dedicated RRC message.

With reference to the first aspect or any one of the first to the tenth possible implementation manners of the first aspect, in an eleventh possible implementation manner of the first aspect, the semi-persistent scheduling method further includes: performing, in a subframe, in the constant subframe set, whose uplink and downlink attribute is the same as a transmission direction of feedback transmission corresponding to the SPS transmission, the feedback transmission corresponding to the SPS transmission.

With reference to the first aspect or any one of the first to the eleventh possible implementation manners of the first aspect, in a twelfth possible implementation manner of the first aspect, the semi-persistent scheduling method further includes: acquiring an SPS control instruction from subframes, in the constant subframe set, whose uplink and downlink attributes are the same as a transmission direction of the SPS control instruction, where the SPS control instruction includes one or a combination of multiple of an SPS activation instruction, an SPS instruction for newly transmitting a data block, an SPS instruction for retransmitting a data block, and an SPS release instruction.

With reference to the twelfth possible implementation manner of the first aspect, in a thirteenth possible implementation manner of the first aspect, the subframe used for acquiring the SPS control instruction is a downlink subframe, in the constant subframe set, which can schedule the SPS transmission.

With reference to the first aspect or any one of the first to the thirteenth possible implementation manners of the first aspect, in a fourteenth possible implementation manner of the first aspect, the step of the performing SPS transmission in a subframe in the constant subframe set includes: acquiring a period offset of the uplink SPS transmission; and offsetting a transmission period of the uplink SPS transmission according to the period offset.

With reference to the fourteenth possible implementation manner of the first aspect, in a fifteenth possible implementation manner of the first aspect, the step of the acquiring a period offset of the uplink SPS transmission specifically includes: acquiring a second reference uplink and downlink proportion configuration, and determining the period offset of the uplink SPS transmission by using the second reference uplink and downlink proportion configuration and a subframe for the uplink SPS transmission.

With reference to the fifteenth possible implementation manner of the first aspect, in a sixteenth possible implementation manner of the first aspect, the second reference uplink and downlink proportion configuration is one of the uplink and downlink proportion configuration of the downlink HARQ timing reference, the uplink and downlink proportion configuration of the uplink HARQ timing reference, and an uplink and downlink proportion configuration, in the first reference uplink and downlink proportion configuration, with a minimum quantity of uplink subframes.

With reference to the fourteenth possible implementation manner of the first aspect, in a seventeenth possible implementation manner of the first aspect, the second reference uplink and downlink proportion configuration is a TDD uplink and downlink proportion configuration, in a TDD uplink and downlink proportion configuration set acquired by a UE, with a minimum quantity of uplink subframes.

With reference to any one of the fifteenth to the seventeenth possible implementation manners of the first aspect, in an eighteenth possible implementation manner of the first aspect, the second reference uplink and downlink proportion configuration is permanently configured or preconfigured in a protocol.

According to a second aspect, a semi-persistent scheduling method is provided, where the semi-persistent scheduling method includes: when an uplink and downlink proportion configuration of a TDD frame dynamically changes, determining whether an uplink and downlink attribute of an SPS available subframe for performing SPS transmission changes; and ignoring the SPS transmission if the uplink and downlink attribute changes.

With reference to the second aspect, in a first possible implementation manner of the second aspect, the semi-persistent scheduling method further includes: determining whether the SPS transmission is SPS new data transmission; and if the SPS transmission is SPS new data transmission, making a response to a subsequent scheduling instruction to perform the ignored SPS new data transmission again.

With reference to the second aspect, in a second possible implementation manner of the second aspect, the semi-persistent scheduling method further includes: delaying the SPS transmission to the $W^{th}$ SPS available subframe after the SPS available subframe whose uplink and downlink attribute changes, or advancing the SPS transmission to the $M^{th}$ SPS available subframe before the SPS available subframe whose uplink and downlink attribute changes, where W and M are both natural numbers.

According to a third aspect, user equipment is provided, where the user equipment includes a determining module and a first execution module, where the determining module is configured to determine a constant subframe set in a TDD frame, where an uplink and downlink attribute of each subframe in the constant subframe set remains unchanged when an uplink and downlink proportion configuration of the TDD frame dynamically changes; and the first execution module is configured to perform SPS transmission in a subframe, in the constant subframe set determined by the determining module, whose uplink and downlink attribute is the same as a transmission direction of the SPS transmission.

With reference to the third aspect, in a first possible implementation manner of the third aspect, the determining module is configured to acquire an uplink and downlink proportion configuration set of the TDD frame, where the uplink and downlink proportion configuration set includes at least two uplink and downlink proportion configurations; and determine subframes whose uplink and downlink attributes remain unchanged in the at least two uplink and downlink proportion configurations, to form the constant subframe set.

With reference to the third aspect, in a second possible implementation manner of the third aspect, the determining module is configured to acquire indication information, where the indication information directly specifies the subframe in the constant subframe set.

With reference to the third aspect, in a third possible implementation manner of the third aspect, the determining module is configured to acquire at least one first reference uplink and downlink proportion configuration; and form the constant subframe set by subframes with a specific attribute in the first reference uplink and downlink proportion configuration.

With reference to the third aspect or any one of the first to the third possible implementation manners of the third aspect, in a fourth possible implementation manner of the third aspect, the constant subframe set is at least one of a constant uplink subframe set and a constant downlink subframe set, where subframes in the constant uplink subframe set are all uplink subframes when the uplink and downlink proportion configuration of the TDD frame dynamically changes, and subframes in the constant downlink subframe set are all downlink subframes when the uplink and downlink proportion configuration of the TDD frame dynamically changes; and the first execution module is configured to perform uplink SPS transmission in the constant uplink subframe set, or perform downlink SPS transmission in the constant downlink subframe set.

With reference to the fourth possible implementation manner of the third aspect, in a fifth possible implementation manner of the third aspect, the determining module is configured to acquire the at least one first reference uplink and downlink proportion configuration; and form the constant uplink subframe set by an uplink subframe in the first reference uplink and downlink proportion configuration, and form the constant downlink subframe set by a downlink subframe and a special subframe in the first reference uplink and downlink proportion configuration.

With reference to the fifth possible implementation manner of the third aspect, in a sixth possible implementation manner of the third aspect, the first reference uplink and downlink proportion configuration used for forming the constant uplink subframe set is different from the first reference uplink and downlink proportion configuration used for forming the constant downlink subframe set.

With reference to the fifth or the sixth possible implementation manner of the third aspect, in a seventh possible implementation manner of the third aspect, the first reference uplink and downlink proportion configuration used for forming the constant downlink subframe set is a proportion configuration indicated by a first system information block.

With reference to any one of the fifth to the seventh possible implementation manners of the third aspect, in an eighth possible implementation manner of the third aspect, the first reference uplink and downlink proportion configuration includes an uplink and downlink proportion configuration of downlink HARQ timing reference and an uplink and downlink proportion configuration of uplink HARQ timing reference; and the determining module is configured to acquire the at least one first reference uplink and downlink proportion configuration, where the constant uplink subframe set is formed by an uplink subframe in the uplink and downlink proportion configuration of the downlink HARQ timing reference, and the constant downlink subframe set is formed by a downlink subframe and a special subframe in the uplink and downlink proportion configuration of the uplink HARQ timing reference.

With reference to the third aspect, in a ninth possible implementation manner of the third aspect, the determining module is configured to acquire an uplink and downlink proportion configuration set of the TDD frame, where the uplink and downlink proportion configuration set includes at least two uplink and downlink proportion configurations; and select, from the at least two uplink and downlink proportion configurations, an uplink and downlink proportion configuration with a minimum quantity of subframes whose uplink and downlink attributes are the same as the transmission direction of the SPS transmission, and form the constant subframe set by subframes, in the selected uplink and downlink proportion configuration, whose uplink and downlink attributes are the same as the transmission direction of the SPS transmission.

With reference to any one of the fourth to the ninth possible implementation manners of the third aspect, in a tenth possible implementation manner of the third aspect, the determining module is configured to acquire the uplink and downlink proportion configuration set of the TDD frame by using at least one of a system broadcast message and a dedicated RRC message.

With reference to the third aspect or any one of the first to the tenth possible implementation manners of the third aspect, in an eleventh possible implementation manner of the third aspect, the user equipment further includes a second execution module, where the second execution module is configured to perform, in a subframe, in the constant subframe set determined by the determining module, whose uplink and downlink attribute is the same as a transmission direction of feedback transmission corresponding to the SPS transmission, the feedback transmission corresponding to the SPS transmission.

With reference to the third aspect or any one of the first to the eleventh possible implementation manners of the third aspect, in a twelfth possible implementation manner of the third aspect, the user equipment further includes an acquiring module, where the acquiring module is configured to acquire an SPS control instruction from subframes, in the constant subframe set determined by the determining module, whose uplink and downlink attributes are the same as a transmission direction of the SPS control instruction, where the transmission control instruction includes one or a combination of multiple of an SPS activation instruction, an SPS instruction for newly transmitting a data block, an SPS instruction for retransmitting a data block, and an SPS release instruction.

With reference to the twelfth possible implementation manner of the third aspect, in a thirteenth possible implementation manner of the third aspect, the subframe used for acquiring the SPS control instruction is a downlink subframe, in the constant subframe set, which can schedule the SPS transmission.

With reference to the third aspect or any one of the first to the thirteenth possible implementation manners of the third aspect, in a fourteenth possible implementation manner of the third aspect, the first execution module is configured to acquire a period offset of the uplink SPS transmission; and offset a transmission period of the uplink SPS transmission according to the period offset.

With reference to the fourteenth possible implementation manner of the third aspect, in a fifteenth possible implementation manner of the third aspect, the first execution module is configured to acquire a second reference uplink and downlink proportion configuration, and determine the period offset of the uplink SPS transmission by using the second reference uplink and downlink proportion configuration and a subframe for the uplink SPS transmission.

With reference to the fifteenth possible implementation manner of the third aspect, in a sixteenth possible implementation manner of the third aspect, the second reference uplink and downlink proportion configuration is one of the uplink and downlink proportion configuration of the downlink HARQ timing reference, the uplink and downlink proportion configuration of the uplink HARQ timing reference, and an uplink and downlink proportion configuration, in the first reference uplink and downlink proportion configuration, with a minimum quantity of uplink subframes.

With reference to the fourteenth possible implementation manner of the third aspect, in a seventeenth possible implementation manner of the third aspect, the second reference uplink and downlink proportion configuration is a TDD uplink and downlink proportion configuration, in a TDD uplink and downlink proportion configuration set acquired by a UE, with a minimum quantity of uplink subframes.

With reference to any one of the fifteenth to the seventeenth possible implementation manners of the third aspect, in an eighteenth possible implementation manner of the third aspect, the second reference uplink and downlink proportion configuration is permanently configured or preconfigured in a protocol.

According to a fourth aspect, user equipment is provided, the user equipment includes a judging module and a transmission control module, where the judging module is configured to: when an uplink and downlink proportion configuration of a TDD frame dynamically changes, determine whether an uplink and downlink attribute of an SPS available subframe for performing SPS transmission changes; and when the judging module determines that the uplink and downlink attribute changes, the transmission control module ignores the SPS transmission.

With reference to the forth aspect, in a first possible implementation manner of the second aspect, the judging module is further configured to determine whether the SPS transmission is SPS new data transmission; and the transmission control module is further configured to: when the judging module determines that the SPS transmission is SPS new data transmission, make a response to a subsequent scheduling instruction to perform the ignored SPS new data transmission again.

With reference to the forth aspect, in a second possible implementation manner of the second aspect, the transmission control module is further configured to delay the SPS transmission to the $W^{th}$ SPS available subframe after the SPS available subframe whose uplink and downlink attribute changes, or advance the SPS transmission to the $M^{th}$ SPS available subframe before the SPS available subframe whose uplink and downlink attribute changes, where W and M are both natural numbers.

According to a fifth aspect, user equipment is provided, where the user equipment includes a memory and a processor, where the processor is electrically connected to the memory, where the processor is configured to determine a constant subframe set in a TDD frame, where an uplink and downlink attribute of each subframe in the constant subframe set remains unchanged when an uplink and downlink proportion configuration of the TDD frame dynamically changes; and perform SPS transmission in a subframe, in the constant subframe set, whose uplink and downlink attribute is the same as a transmission direction of the SPS transmission; and the memory is configured to store the constant subframe set in the TDD frame that is determined by the processor.

With reference to the fifth aspect, in a first possible implementation manner of the fifth aspect, the processor is configured to acquire an uplink and downlink proportion configuration set of the TDD frame, where the uplink and downlink proportion configuration set includes at least two uplink and downlink proportion configurations; and determine subframes whose uplink and downlink attributes remain unchanged in the at least two uplink and downlink proportion configurations, to form the constant subframe set.

With reference to the fifth aspect, in a second possible implementation manner of the fifth aspect, the processor is configured to acquire indication information, where the indication information directly specifies the subframe in the constant subframe set.

With reference to the fifth aspect, in a third possible implementation manner of the fifth aspect, the processor is configured to acquire at least one first reference uplink and downlink proportion configuration; and form the constant subframe set by subframes with a specific attribute in the first reference uplink and downlink proportion configuration.

With reference to the fifth aspect or any one of the first to the third possible implementation manners of the fifth aspect, in a fourth possible implementation manner of the fifth aspect, the constant subframe set is at least one of a constant uplink subframe set and a constant downlink subframe set, where subframes in the constant uplink subframe set are all uplink subframes when the uplink and downlink proportion configuration of the TDD frame dynamically changes, and subframes in the constant downlink subframe set are all downlink subframes when the uplink and downlink proportion configuration of the TDD frame dynamically changes; and the processor is further configured to perform uplink SPS transmission in the constant uplink subframe set, or perform downlink SPS transmission in the constant downlink subframe set.

With reference to the fourth possible implementation manner of the fifth aspect, in a fifth possible implementation manner of the fifth aspect, the processor is configured to acquire the at least one first reference uplink and downlink proportion configuration; and form the constant uplink subframe set by an uplink subframe in the first reference uplink and downlink proportion configuration, and form the constant downlink subframe set by a downlink subframe and a special subframe in the first reference uplink and downlink proportion configuration.

With reference to the fifth possible implementation manner of the fifth aspect, in a sixth possible implementation manner of the fifth aspect, the first reference uplink and downlink proportion configuration used for forming the constant uplink subframe set is different from the first reference uplink and downlink proportion configuration used for forming the constant downlink subframe set.

With reference to the fifth or the sixth possible implementation manner of the fifth aspect, in a seventh possible implementation manner of the fifth aspect, the first reference uplink and downlink proportion configuration used for forming the constant downlink subframe set is a proportion configuration indicated by a first system information block.

With reference to any one of the fifth to the seventh possible implementation manners of the fifth aspect, in an eighth possible implementation manner of the fifth aspect, the first reference uplink and downlink proportion configuration includes an uplink and downlink proportion configuration of downlink HARQ timing reference and an uplink and downlink proportion configuration of uplink HARQ timing reference; and the processor is configured to acquire the at least one first reference uplink and downlink proportion configuration, where the constant uplink subframe set is formed by an uplink subframe in the uplink and downlink proportion configuration of the downlink HARQ timing reference, and the constant downlink subframe set is formed by a downlink subframe and a special subframe in the uplink and downlink proportion configuration of the uplink HARQ timing reference.

With reference to the fifth aspect, in a ninth possible implementation manner of the fifth aspect, the processor is configured to acquire an uplink and downlink proportion configuration set of the TDD frame, where the uplink and downlink proportion configuration set includes at least two uplink and downlink proportion configurations; and select, from the at least two uplink and downlink proportion configurations, an uplink and downlink proportion configuration with a minimum quantity of subframes whose uplink and downlink attributes are the same as the transmission direction of the SPS transmission, and form the constant subframe set by subframes, in the selected uplink and downlink proportion configuration, whose uplink and downlink attributes are the same as the transmission direction of the SPS transmission.

With reference to any one of the fourth to the ninth possible implementation manners of the fifth aspect, in a tenth possible implementation manner of the fifth aspect, the processor acquires the uplink and downlink proportion configuration set of the TDD frame by using at least one of a system broadcast message and a dedicated RRC message.

With reference to the fifth aspect or any one of the first to the tenth possible implementation manners of the fifth aspect, in an eleventh possible implementation manner of the fifth aspect, the processor is further configured to perform, in a subframe, in the constant subframe set, whose uplink and downlink attribute is the same as a transmission direction of feedback transmission corresponding to the SPS transmission, the feedback transmission corresponding to the SPS transmission.

With reference to the fifth aspect or any one of the first to the eleventh possible implementation manners of the fifth aspect, in a twelfth possible implementation manner of the fifth aspect, the processor is further configured to acquire an SPS control instruction from subframes, in the constant subframe set, whose uplink and downlink attributes are the same as a transmission direction of the SPS control instruction, where the SPS control instruction includes one or a combination of multiple of an SPS activation instruction, an SPS instruction for newly transmitting a data block, an SPS instruction for retransmitting a data block, and an SPS release instruction.

With reference to the twelfth possible implementation manner of the fifth aspect, in a thirteenth possible implementation manner of the fifth aspect: the subframe used for acquiring the SPS control instruction is a downlink subframe, in the constant subframe set, which can schedule the SPS transmission.

With reference to the fifth aspect or any one of the first to the thirteenth possible implementation manners of the fifth aspect, in a fourteenth possible implementation manner of the fifth aspect, the processor is configured to acquire a period offset of the uplink SPS transmission; and offset a transmission period of the uplink SPS transmission according to the period offset.

With reference to the fourteenth possible implementation manner of the fifth aspect, in a fifteenth possible implementation manner of the fifth aspect, the processor is configured to acquire a second reference uplink and downlink proportion configuration, and determine the period offset of the uplink SPS transmission by using the second reference uplink and downlink proportion configuration and a subframe for the uplink SPS transmission.

With reference to the fifteenth possible implementation manner of the fifth aspect, in a sixteenth possible implementation manner of the fifth aspect, the second reference uplink and downlink proportion configuration is one of the uplink and downlink proportion configuration of the downlink HARQ timing reference, the uplink and downlink proportion configuration of the uplink HARQ timing reference, and an uplink and downlink proportion configuration, in the first reference uplink and downlink proportion configuration, with a minimum quantity of uplink subframes.

With reference to the fourteenth possible implementation manner of the fifth aspect, in a seventeenth possible implementation manner of the fifth aspect, the second reference uplink and downlink proportion configuration is a TDD uplink and downlink proportion configuration, in a TDD uplink and downlink proportion configuration set acquired by a UE, with a minimum quantity of uplink subframes.

With reference to any one of the fifteenth to the seventeenth possible implementation manners of the fifth aspect, in an eighteenth possible implementation manner of the fifth aspect, the second reference uplink and downlink proportion configuration is permanently configured or preconfigured in a protocol.

According to a sixth aspect, user equipment is provided, where the user equipment includes a processor and a memory, where the processor is electrically connected to the memory, where the processor is configured to: when an uplink and downlink proportion configuration of a TDD frame dynamically changes, determine whether an uplink and downlink attribute of an SPS available subframe for performing SPS transmission changes; and ignore the SPS transmission when the uplink and downlink attribute changes; and the memory is configured to store a set of SPS available subframes for performing the SPS transmission.

With reference to the sixth aspect, in a first possible implementation manner of the sixth aspect, the processor is further configured to determine whether the SPS transmission is SPS new data transmission; and when the SPS transmission is SPS new data transmission, make a response to a subsequent scheduling instruction to perform the ignored SPS new data transmission again.

With reference to the sixth aspect, in a second possible implementation manner of the sixth aspect, the processor is further configured to delay the SPS transmission to the $W^{th}$ SPS available subframe after the SPS available subframe whose uplink and downlink attribute changes, or advance the SPS transmission to the $M^{th}$ SPS available subframe before the SPS available subframe whose uplink and downlink attribute changes, where W and M are both natural numbers.

In the foregoing technical solutions, a constant subframe set is determined, where an uplink and downlink attribute of each subframe in the constant subframe set remains unchanged when an uplink and downlink proportion configuration of a TDD frame dynamically changes; and SPS transmission is performed in a subframe, in the constant subframe set, whose uplink and downlink attribute is the same as a transmission direction of the SPS transmission. In this way, SPS can be normally performed when a TDD uplink and downlink proportion is dynamically configured. The SPS can be normally performed in a case in which the TDD uplink and downlink proportion is dynamically configured, thereby improving performance of the SPS.

**BRIEF DESCRIPTION OF DRAWINGS**

FIG. 1 is a schematic diagram of a structure of a TDD frame;
FIG. 2 is a schematic structural diagram of an implementation manner of a semi-persistent scheduling system according to this application;
FIG. 3 is a flowchart of a first implementation manner of a semi-persistent scheduling method according to this application;
FIG. 4 is a flowchart of a possible solution 1 of determining a constant subframe set in a TDD frame in the first implementation manner of the semi-persistent scheduling method according to this application;
FIG. 5 is a flowchart of a possible solution 3 of determining a constant subframe set in a TDD frame in the first implementation manner of the semi-persistent scheduling method according to this application;
FIG. 6 is a flowchart of a possible solution 4 of determining a constant subframe set in a TDD frame in the first implementation manner of the semi-persistent scheduling method according to this application;
FIG. 7 is a flowchart of a second implementation manner of a semi-persistent scheduling method according to this application;
FIG. 8 is a flowchart of offsetting a transmission period of uplink SPS transmission in a third implementation manner of the semi-persistent scheduling method according to this application;
FIG. 9 is a flowchart of a fourth implementation manner of a semi-persistent scheduling method according to this application;
FIG. 10 is a flowchart of a fifth implementation manner of a semi-persistent scheduling method according to this application;
FIG. 11 is a schematic structural diagram of a first implementation manner of user equipment according to this application;
FIG. 12 is a schematic structural diagram of a second implementation manner of user equipment according to this application;
FIG. 13 is a schematic structural diagram of a third implementation manner of user equipment according to this application;
FIG. 14 is a schematic structural diagram of a first implementation manner of a base station according to this application;
FIG. 15 is a schematic structural diagram of a second implementation manner of a base station according to this application;
FIG. 16 is a schematic structural diagram of a fourth implementation manner of user equipment according to this application; and
FIG. 17 is a schematic structural diagram of a fifth implementation manner of user equipment according to this application.

## DESCRIPTION OF EMBODIMENTS

In the following description, to illustrate rather than limit, specific details such as a particular system structure, interface, and technology are provided to make a thorough understanding of this application. However, a person skilled in the art should know that this application can also be implemented in other implementation manners without the specific details. In other cases, detailed descriptions of well-known apparatuses, circuits, and methods are omitted, so that this application is described without being obscured by unnecessary details.

A time domain in a system includes radio frames (Radio Frames), where a radio frame is identified by using a system frame number (System Frame Number, SFN) $n_f$, and a radio frame is numbered in a polling manner by using an SFN according to a period. For example, if 10 bits are used to mark an SFN, $n_f$ =0, 1, 2, ..., 1023, that is, radio frames are numbered from 0 to 1023 and then numbered from 0 again. Each radio frame includes 10 subframes (subframes) of a length of 1 ms, and a subframe in each radio frame is identified by using a subframe number $n_{sbf}$, where $n_{sbf}$ =0, 1, 2, ..., 9. Therefore, in the system, one subframe is identified by using a system frame number $n_f$ and a subframe number $n_{sbf}$ in each radio frame, which is also applicable to subframes mentioned below (including an uplink subframe and a downlink subframe).

As a feature of a TDD system, time resources are allocated in uplink and downlink directions. A TDD frame structure supports seven different uplink and downlink time proportion allocations (that is, configurations 0 to 6). A configuration may be performed according to a feature of a traffic volume.

A current TDD system supports seven uplink and downlink configurations, and a specific configuration manner of each uplink and downlink configuration is shown in the following Table 1:

**Table 1**

| TDD uplink and downlink proportion configuration | Conversion interval period | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

U indicates an uplink subframe, D indicates a downlink subframe, and S indicates a special subframe (special subframe), which is mainly used for downlink transmission. In this application, a special subframe and a downlink subframe are collectively referred to as a downlink subframe.

SPS is a semi-persistent scheduling mechanism, and a main method is setting one set of SPS related parameters for a UE by using an RRC message, where, using uplink SPS as an example, configured parameters may include an SPS period, an implicit release condition for the uplink SPS, and the like; and using downlink SPS as an example, configured parameters may include parameters such as an SPS period, an uplink feedback resource corresponding to downlink SPS transmission, and an HARQ process quantity reserved for the SPS. Then, an SPS transmission resource is activated by using an SPS activation command, and the UE periodically uses the SPS transmission resource according to the SPS activation command, to perform SPS transmission.

Currently, to better adapt to changes of different services, a TDD uplink and downlink proportion configuration configured for the UE may dynamically change. When the TDD uplink and downlink proportion configuration changes, an uplink subframe that is originally used for uplink transmission may change to a downlink subframe, or a downlink subframe that is originally used for downlink transmission may change to an uplink subframe. For example, it is assumed that a change between the TDD uplink and downlink proportion configurations 0 and 1 in the foregoing table is configured for a UE, uplink and downlink attributes of subframes 0, 1, 2, 3, 5, 6, 7, and 8 in a radio LTE frame remain unchanged, where 0, 1, 5, and 6 are downlink subframes or special subframes, which may be referred to as a downlink subframe set or a constant downlink subframe set; 2, 3, 7, and 8 are uplink subframes, which may be referred to as an uplink subframe subset or a constant uplink subframe set; and subframes 4 and 9 may be used as uplink subframes or downlink subframes, and are flexible subframes, which may be referred to as a flexible subframe set. When the TDD uplink and downlink proportion configuration changes from 0 to 1, as can be learned from the foregoing Table 1, the subframe 4 is an uplink subframe in the TDD uplink and downlink proportion configuration 0, while the subframe 4 changes to a downlink subframe in the TDD uplink and downlink proportion configuration 1; and similarly, the subframe 9 in the TDD uplink and downlink proportion configuration 0 originally is an uplink subframe, while the subframe 9 changes to a downlink subframe in the TDD uplink and downlink proportion configuration 1. This may cause that SPS data transmission is affected.

For the foregoing analysis, this application provides the following embodiments of the present invention, which can enable SPS transmission to be normally performed without being affected by a flexible subframe in a case in which a TDD uplink and downlink proportion is dynamically configured for a UE.

Referring to FIG. 2, FIG. 2 is a schematic structural diagram of an implementation manner of a semi-persistent scheduling system according to this application. The semi-persistent scheduling system in this implementation manner includes a base station 110 and one or more user equipments UEs 120, where a system of the base station 110 can be compatible with multiple UEs 120 at the same time, and the base station 110 may separately communicate with multiple UEs. A parameter may be configured for the UE 120 by using the base station 110.

Referring to FIG. 3, FIG. 3 is a flowchart of a first implementation manner of a semi-persistent scheduling method according to this application. In this implementation manner, an example in which UE executes the method is used for description, and the semi-persistent scheduling method in this implementation manner may include:

S101: Determine a constant subframe set in a TDD frame, where an uplink and downlink attribute of each subframe in the constant subframe set remains unchanged when an uplink and downlink proportion configuration of the TDD frame dynamically changes.

The UE determines the constant subframe set in the TDD frame according to parameter information configured for the UE. The parameter information may be configured for the UE by using a base station or by using a protocol. The parameter information configured for the UE includes at least one or more of parameters such as a possible TDD uplink and downlink proportion configuration set, a TDD uplink and downlink proportion configuration of downlink HARQ (Hybrid Automatic Repeat Request, hybrid automatic repeat request) timing reference, a TDD uplink and downlink proportion configuration of uplink HARQ timing reference, a period of a change of a TDD uplink and downlink proportion configuration, and a moment at which a TDD uplink and downlink proportion configuration change instruction is sent. The parameter information configured for the UE is one or a combination of two of parameter information of uplink SPS and parameter information of downlink SPS.

In addition, the parameter information configured for the UE may further include a conventional SPS configuration parameter, for example, if the parameter information of the uplink SPS is configured for the UE, the SPS configuration parameter may include one or more of an SPS period and an implicit release condition for the uplink SPS; if the parameter information of the downlink SPS is configured for the UE, the SPS configuration parameter may include parameters such as an SPS period, an uplink feedback resource corresponding to downlink SPS transmission, and an HARQ process quantity reserved for the SPS. The UE may be notified of only the parameter information of the uplink SPS, or the UE may be notified of only the parameter information of the downlink SPS, or the UE may be notified of both the parameter information of the uplink SPS and the parameter information of the downlink SPS.

Herein, the constant subframe set is at least one of a constant uplink subframe set and a constant downlink subframe set, where subframes in the constant uplink subframe set are all uplink subframes when the uplink and downlink proportion configuration of the TDD frame dynamically changes, and subframes in the constant downlink subframe set are all downlink subframes when the uplink and downlink proportion configuration of the TDD frame dynamically changes.

The uplink and downlink attribute of each subframe in the constant subframe set remains unchanged when the uplink and downlink proportion configuration of the TDD frame dynamically changes. For example, for a dynamic change in {0, 1} of the TDD uplink and downlink proportion configuration of the TDD, as can be learned from the foregoing Table 1, in the configurations {0, 1}, the subframes {0, 1, 5, 6} are all downlink subframes, that is, {0, 1, 5, 6} form a constant downlink subframe set, while {2, 3, 7, 8} are all uplink subframes, that is, {2, 3, 7, 8} form a constant uplink subframe set. Alternatively, for a dynamic change in {1, 2} of the TDD uplink and downlink proportion configuration, as can be learned from the foregoing Table 1, in the configurations {1, 2}, the subframes {0, 1, 5, 9} are all downlink subframes, that is, {0, 1, 5, 9} form a constant downlink subframe set, while {2, 7} are both uplink subframes, that is, {2, 7} form a constant uplink subframe set.

This implementation manner provides four possible implementation solutions of determining the constant subframe set in the TDD frame:

Solution 1:

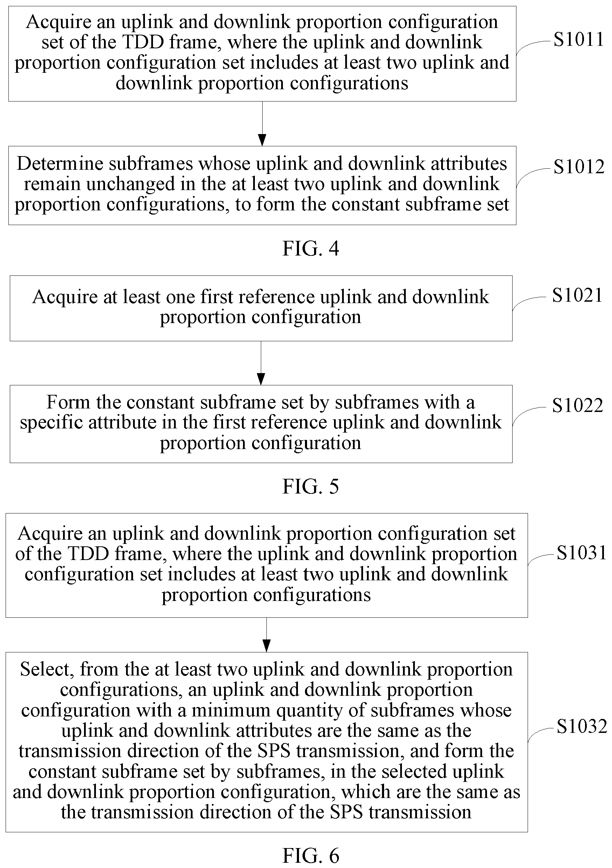

Referring to FIG. 4, FIG. 4 is a flowchart of a possible solution 1 of determining the constant subframe set in the TDD frame that is provided by this implementation manner. In this solution, the determining a constant subframe set in a TDD frame includes the following steps:

S1011: Acquire an uplink and downlink proportion configuration set of the TDD frame, where the uplink and downlink proportion configuration set includes at least two uplink and downlink proportion configurations.

The UE may acquire the uplink and downlink proportion configuration set of the TDD frame by using a broadcast message or a dedicated RRC message or another message, where the uplink and downlink proportion configuration set includes two or more uplink and downlink proportion configurations, which, for example, may be the proportion configurations {0, 1}, {1, 2, 3}, {2, 3}, or the like in the foregoing Table 1, that is, may be a combination of any two or more of the uplink and downlink proportion configurations in the foregoing Table 1. Optionally, the uplink and downlink proportion configuration set of the TDD frame may be permanently configured or preconfigured in a protocol. In this case, the base station eNB may not need to notify the UE of the uplink and downlink proportion configuration set of the TDD frame by using a broadcast message or a dedicated RRC message or another message. Optionally, the uplink and downlink proportion configuration set may further include an uplink and downlink proportion configuration that is not in the uplink and downlink proportion configurations in the foregoing Table 1, which is not limited in the present invention.

S1012: Determine subframes whose uplink and downlink attributes remain unchanged in the at least two uplink and downlink proportion configurations, to form the constant subframe set.

Subframes, which are specifically included in the constant subframe set, in a Long Term Evolution (LTE, Long Term Evolution) radio frame may be determined according to the acquired uplink and downlink proportion configuration set of the TDD frame. For example, it is assumed that the uplink and downlink proportion configuration set of the TDD frame that is configured for the UE is the TDD uplink and downlink proportion configurations {0, 1} in the foregoing Table 1, the UE may determine that in the LTE radio frame, subframes {0, 1, 5, 6} are downlink subframes, that is, a constant downlink subframe set, and {2, 3, 7, 8} are uplink subframes, that is, a constant uplink subframe set. Although, in the LTE radio frame, subframes {4, 9} may be used for uplink transmission, but may also be used for downlink transmission, and therefore, are flexible subframes. Therefore, the subframes {4, 9} are not used as subframes in the constant subframe set in this implementation manner. That is, in the uplink and downlink proportion configurations {0, 1}, if the parameter information of the downlink SPS is configured for the UE, the UE determines that only one or more of the subframes {0, 1, 5, 6} can be used for SPS transmission, while, if the parameter information of the uplink SPS is configured for the UE, the UE determines that only one or more of the subframes {2, 3, 7, 8} can be used for the SPS transmission. For example, it is assumed that the uplink and downlink proportion configuration set of the TDD frame that is configured for the UE is {1, 2}, the UE may determine that in the LTE radio frame, {0, 1, 5, 9} are downlink subframes, that is, the constant downlink subframe set, and {2, 7} are uplink subframes, that is, the constant uplink subframe set. In the uplink and downlink proportion configurations {1, 2}, for the downlink SPS, the UE determines that the SPS transmission can be performed in only one or more of the subframes {0, 1, 5, 9}, and for the uplink SPS, the UE determines that the SPS transmission can be performed in only one or two of the subframes {2, 7}.

Solution 2:

In the solution 2, the UE acquires indication information, where the indication information directly specifies a subframe in the constant subframe set. That is, the UE does not need to determine the constant subframe set by using the uplink and downlink proportion configuration set, but directly uses the specified subframe in the constant subframe set to perform SPS transmission. Herein, the specified subframe in the constant subframe set may be one or more subframes in the constant subframe set obtained by using the TDD uplink and downlink proportion configuration set. When the downlink SPS is configured for the UE, the specified subframe in the constant subframe set may be one or more subframes in the constant downlink subframe set obtained by using the configured TDD uplink and downlink proportion configuration set, and the uplink SPS is similar to this. The UE may acquire the indication information by using a broadcast message or a dedicated RRC message or another message.

For example, it is assumed that the TDD uplink and downlink proportion configuration set configured for the UE is the TDD uplink and downlink proportion configurations {0, 1} in the foregoing Table 1, in the LTE radio frame, the subframes {0, 1, 5, 6} are downlink subframes, that is, the constant downlink subframe set, and {2, 3, 7, 8} are uplink subframes, that is, the constant uplink subframe set. In this case, if the parameter information of the downlink SPS is configured for the UE, the indication information may directly specify that a subframe in the constant subframe set is one or more subframes in {0, 1, 5, 6}, for example, {0, 1}, {0, 5}, {0, 1, 6}, or the like. If the parameter information of the uplink SPS is configured for the UE, the indication information may directly specify that a subframe in the constant subframe set is one or more subframes in {2, 3, 7, 8}, for example, {2, 3}, {3, 8}, {2, 7, 8}, or the like. Another uplink and downlink proportion configuration set is similar to this, which is not described by using an example in this implementation manner one by one.

Solution 3:

Referring to FIG. 5, FIG. 5 is a flowchart of a possible solution 3 of determining the constant subframe set in the TDD frame that is provided by this implementation manner. In this solution, the determining a constant subframe set in a TDD frame includes the following steps:

S1021: Acquire at least one first reference uplink and downlink proportion configuration.

There may be one or more first reference uplink and downlink proportion configurations, and first reference uplink and downlink proportion configurations of uplink SPS reference and downlink SPS reference may be different. Specifically, the first reference uplink and downlink proportion configuration may include at least one of a TDD uplink and downlink proportion configuration of downlink HARQ timing reference and a TDD uplink and downlink proportion configuration of uplink HARQ timing reference. For example, when a parameter information of the downlink SPS is configured for the UE, the first reference uplink and downlink proportion configuration may be the TDD uplink and downlink proportion configuration of the uplink HARQ timing reference, and when a parameter information of the uplink SPS is configured for the UE, the first reference uplink and downlink proportion configuration may be the TDD uplink and downlink proportion configuration of the downlink HARQ timing reference.

The UE may acquire the first reference uplink and downlink proportion configuration by using a broadcast message or a dedicated RRC message or another message.

The UE may be notified of the first reference uplink and downlink proportion configuration of the downlink SPS reference by using a SIB 1 (first system information block, System Information Block 1). Specifically, the first reference uplink and downlink proportion configuration is a TDD uplink and downlink proportion configuration in the SIB 1.

Optionally, the first reference uplink and downlink proportion configuration to which the UE makes reference for the uplink SPS transmission may be a preconfigured uplink and downlink proportion configuration; in this case, the first reference uplink and downlink proportion configuration may be permanently configured or preconfigured in a protocol, and the UE may not need to be notified by the eNB.

S1022: Form the constant subframe set by subframes with a specific attribute in the first reference uplink and downlink proportion configuration.

The constant subframe set is formed by the subframes with the specific attribute in the first reference uplink and downlink proportion configuration. The constant subframe set is at least one of the constant uplink subframe set and the constant downlink subframe set.

When the uplink SPS and the downlink SPS separately use different first reference uplink and downlink proportion configurations, for the uplink SPS, the constant uplink subframe set is formed by an uplink subframe in the uplink and downlink proportion configuration of the uplink SPS reference, and for the downlink SPS, the constant downlink subframe set is formed by a downlink subframe in the uplink and downlink proportion configuration of the downlink SPS reference.

When the uplink SPS and the downlink SPS use a same first reference uplink and downlink proportion configuration, the constant uplink subframe set is formed by an uplink subframe in the first reference uplink and downlink proportion configuration, where subframes in the constant uplink subframe set are all uplink subframes when the uplink and downlink proportion configuration dynamically changes, and the constant downlink subframe set is formed by a downlink subframe in the first reference uplink and downlink proportion configuration, where subframes in the constant downlink subframe set are all downlink subframes when the uplink and downlink proportion configuration dynamically changes.

To provide a further detailed description, a description is provided by using an example.

It is assumed that the uplink and downlink proportion configuration set configured for the UE is {0, 1}, the uplink and downlink proportion configuration of the uplink HARQ timing reference is 0. In this case, if the parameter information of the downlink SPS is configured for the UE, the first reference uplink and downlink proportion configuration may be 0, and the UE may determine, according to the first reference uplink and downlink proportion configuration 0, that the downlink subframes {0, 1, 5, 6} used for the downlink SPS form the constant downlink subframe set (according to the foregoing Table 1, the subframes {0, 1, 5, 6} in the TDD uplink and downlink proportion configuration 0 are downlink subframes). That is, in the first reference uplink and downlink proportion configuration 0, the UE may use one or more of the subframes {0, 1, 5, 6} in the LTE radio frame to perform SPS transmission. If the uplink and downlink proportion configuration set configured for the UE is {0, 1}, the uplink and downlink proportion configuration of the downlink HARQ timing reference is 1. In this case, if the parameter information of the uplink SPS is configured for the UE, the first reference uplink and downlink proportion configuration may be 1, and the UE may determine, according to the first reference uplink and downlink proportion configuration 1, that the uplink subframes {2, 3, 7, 8} used for the uplink SPS form the constant uplink subframe set (according to the foregoing Table 1, the subframes {2, 3, 7, 8} in the TDD uplink and downlink proportion configuration 1 are uplink subframes). That is, in the first reference uplink and downlink proportion configuration 1, the UE may use one or more of the subframes {2, 3, 7, 8} in the LTE radio frame to perform the SPS transmission.

It is assumed that the uplink and downlink proportion configuration set configured for the UE is {0, 1}, and the uplink and downlink proportion configuration of the downlink HARQ timing reference is 2. In this case, if the parameter information of the uplink SPS is configured for the UE, the first reference uplink and downlink proportion configuration may be 2, and the UE may determine, according to the first reference uplink and downlink proportion configuration 2, that the uplink subframes {2, 7} used for the uplink SPS form the constant uplink subframe set (according to the foregoing Table 1, the subframes {2, 7} in the TDD uplink and downlink proportion configuration 2 are uplink subframes). That is, in the first reference uplink and downlink proportion configuration 2, the UE may use one or more of the subframes {2, 7} in the LTE radio frame to perform the SPS transmission.

Solution 4:

Referring to FIG. 6, FIG. 6 is a flowchart of a possible solution 4 of determining the constant subframe set in the TDD frame that is provided by this implementation manner. In this solution, the determining a constant subframe set in a TDD frame includes the following steps:

S1031: Acquire an uplink and downlink proportion configuration set of the TDD frame, where the uplink and downlink proportion configuration set includes at least two uplink and downlink proportion configurations.

The UE may acquire the uplink and downlink proportion configuration set of the TDD frame by using a broadcast message or a dedicated RRC message or another message, where the uplink and downlink proportion configuration set includes two or more uplink and downlink proportion configurations, which, for example, may be the proportion configurations {0, 1}, {1, 2, 3}, {2, 3}, or the like in the foregoing Table 1, that is, may be a combination of any two or more of the uplink and downlink proportion configurations in the foregoing Table 1, or may be an uplink and downlink proportion configuration that is not in the foregoing Table 1. Optionally, the uplink and downlink proportion configuration set of the TDD frame may be permanently configured or preconfigured in a protocol. In this case, the eNB may not need to notify the UE of the uplink and downlink proportion configuration set of the TDD frame by using a broadcast message or a dedicated RRC message or another message.

S1032: Select, from the at least two uplink and downlink proportion configurations, an uplink and downlink proportion configuration with a minimum quantity of subframes whose uplink and downlink attributes are the same as a transmission direction of SPS transmission, and form the constant subframe set by subframes, in the selected uplink and downlink proportion configuration, whose uplink and downlink attributes are the same as the transmission direction of the SPS transmission.

The UE may select, from the acquired at least two uplink and downlink proportion configurations and according to indication information of selecting an uplink and downlink proportion configuration with a minimum quantity of subframes whose uplink and downlink attributes are the same as the transmission direction of the SPS transmission, the uplink and downlink proportion configuration with the minimum quantity of subframes whose uplink and downlink attributes are the same as the transmission direction of the SPS transmission, and determine that the subframes that are the same as the transmission direction of the SPS transmission to form the constant subframe set. For the downlink SPS transmission, an uplink and downlink proportion configuration with a minimum quantity of downlink subframes is selected from the at least two uplink and downlink proportion configurations, and a downlink subframe acquired in the uplink and downlink proportion configuration forms the constant downlink subframe set. For the uplink SPS transmission, an uplink and downlink proportion configuration with a minimum quantity of uplink subframes is selected from the at least two uplink and downlink proportion configurations, and an uplink subframe acquired in the uplink and downlink proportion configuration forms the constant uplink subframe set.

For example, it is assumed that the uplink and downlink proportion configuration set configured for the UE is {0, 1}, as can be learned from the foregoing Table 1, a quantity of downlink subframes (including a special subframe) (which are {0, 1, 5, 6} in the uplink and downlink proportion configuration 0, and which are {0, 1, 4, 5, 6, 9} in the uplink and downlink proportion configuration 1) in the LTE radio frame in the TDD uplink and downlink proportion configuration 0 is the minimum, so that the UE can use a downlink subframe in the TDD uplink and downlink proportion configuration 0 for the downlink SPS transmission. If the uplink and downlink proportion configuration set configured for the UE is {1, 2}, as can be learned from Table 1, a quantity of downlink subframes in the LTE radio frame in the uplink and downlink proportion configuration 1 is the minimum, so that the UE can use a downlink subframe in the uplink and downlink configuration 1 for the downlink SPS transmission. For the uplink SPS transmission, the UE may make reference to a TDD uplink and downlink proportion configuration with a minimum quantity of uplink subframes in a next LTE radio frame in the TDD uplink and downlink proportion configuration set. It is assumed that the TDD uplink and downlink proportion configuration set is the TDD uplink and downlink proportion configurations {0, 1} in the foregoing Table 1, as can be learned from the foregoing Table 1, a quantity of uplink subframes (which are {2, 3, 4, 7, 8, 9} in the uplink and downlink proportion configuration 0, and which are {2, 3, 7, 8} in the uplink and downlink proportion configuration 1) in the LTE radio frame in the TDD uplink and downlink proportion configuration 1 is the minimum, so that the UE can use an uplink subframe in the TDD uplink and downlink proportion configuration 1 for the uplink SPS transmission. Another uplink and downlink proportion configuration set may be deduced by analogy.

S102: Perform SPS transmission in a subframe, in the constant subframe set, whose uplink and downlink attribute is the same as a transmission direction of the SPS transmission.

Specifically, the uplink SPS transmission is performed in a subframe in the constant uplink subframe set, or the downlink SPS transmission is performed in a subframe in the constant downlink subframe set. An example in which the TDD uplink and downlink proportion configuration set is {0, 1} in the foregoing Table 1 is used, and it is assumed that the constant subframe set is determined by using the foregoing solution 1. It is assumed that the downlink SPS is configured, an SPS period is 20 ms (a length of one subframe is 1 ms), and a moment at which the SPS transmission is activated is 0, a moment at which the UE performs the downlink SPS transmission is 0, 20, 40, .... That is, the UE separately performs the SPS transmission in the corresponding downlink subframes {0, 1, 5, 6} at 0, 20, 40, ....

The semi-persistent scheduling method in this implementation manner may further include: acquiring an SPS control instruction from subframes, in the constant subframe set, whose uplink and downlink attributes are the same as a transmission direction of the SPS control instruction, where the SPS control instruction includes one or a combination of multiple of an SPS activation instruction, an SPS instruction for newly transmitting a data block, an SPS instruction for retransmitting a data block, and an SPS release instruction. The SPS control instruction may indicate one piece of or a combination of multiple pieces of information such as a physical resource used by the UE for performing the SPS transmission, a modulation and coding scheme, and an SPS transmission moment. The subframe used for acquiring the SPS control instruction is a downlink subframe, in the constant subframe set, which can schedule the SPS transmission. Specifically, that the SPS control instruction is acquired from the subframes, in the constant subframe set, which are the same as the transmission direction of the SPS control instruction refers to that the UE receives, in the subframe, a PDCCH control instruction masked by using an SPS C-RNTI.

When the SPS control instruction is used for indicating SPS activation, the SPS control instruction is the SPS activation instruction. The UE acquires the SPS activation instruction from subframes that are the same as a transmission direction of the SPS activation instruction, and then activates the subframe used for the SPS transmission. SPS activation instructions of the uplink SPS and the downlink SPS can only be both acquired from a downlink subframe.

An SPS activation instruction of each subframe can be transmitted only in a downlink subframe that can schedule the subframe. Generally, downlink scheduling command transmission and downlink data transmission are performed in a same subframe, that is, a downlink SPS activation instruction can activate downlink SPS transmission in a subframe that transmits the SPS activation instruction, and subsequently the SPS transmission may be performed periodically. Using uplink as an example, the SPS activation instruction can be transmitted only in a downlink subframe that can schedule a corresponding uplink subframe, and generally uplink scheduling command transmission is performed in K subframes before uplink data transmission, where a value of K varies with different TDD uplink and downlink proportion configurations, for example, K may be 4, 6, or the like. For example, for an SPS activation instruction of the uplink subframe 2 for the uplink SPS in the uplink and downlink proportion configurations {0, 1}, if K is 6, the SPS activation instruction of the subframe 2 can be transmitted only in a downlink subframe 6 of a previous frame (the sixth downlink subframe before the subframe 2 is the downlink subframe 6 of the previous frame). An SPS activation command of the downlink subframe 1 in the uplink and downlink proportions {0, 1} and data transmitted by using the downlink subframe 1 are both transmitted in the downlink subframe 1, and an SPS activation instruction of the downlink subframe 5 and data transmitted by using the downlink subframe 5 are both transmitted in the downlink subframe 5. The rest may be deduced by analogy.

Actually, for the UE, the UE listens to the SPS activation instruction only at a moment at which the SPS activation instruction can be transmitted, or the UE does not listen to the SPS activation instruction at another moment, or the UE ignores the SPS activation instruction after listening to and detecting the SPS activation instruction at another moment. Specifically, an example in which the TDD uplink and downlink proportion configuration set is the TDD uplink and downlink proportion configurations {0, 1} in the foregoing Table 1 is used. It is assumed that the constant subframe set is determined by using the foregoing solution 1, a moment at which the downlink SPS transmission is performed may be the subframes {0, 1, 5, 6}, and the downlink SPS activation instruction can be transmitted only in the subframes {0, 1, 5, 6} in the LTE radio frame, or is not transmitted in another subframe.

For the SPS activation instruction, for a subframe that has been activated, if the SPS activation instruction is received again, the SPS activation instruction may also be considered as an SPS modification instruction.

When data transmission has been completed in a subframe, a resource allocated by using the SPS activation instruction may be released by receiving an SPS scheduling instruction, to be used for subsequent data scheduling, so as to avoid a waste of the resource. In this case, when the SPS scheduling instruction is used for indicating SPS release, the SPS scheduling instruction may be referred to as an SPS release instruction.

Optionally, the SPS release instruction may be transmitted in a downlink subframe that can schedule a corresponding subframe.

Using uplink as an example, the SPS release instruction can be transmitted only in a downlink subframe that can schedule a corresponding uplink subframe. For example, for an SPS release instruction of the uplink subframe 2 for the uplink SPS in the uplink and downlink proportions {0, 1}, if K is 6, the SPS release instruction of the subframe 2 can be transmitted only in a downlink subframe 6 of a previous frame (the sixth downlink subframe before the subframe 2 is the downlink subframe 6 of the previous frame). An SPS release instruction of the downlink subframe 1 in the uplink and downlink proportions {0, 1} is transmitted in the downlink subframe 1, and an SPS release instruction of the downlink subframe 5 is transmitted in the downlink subframe 5. The rest may be deduced by analogy.

Further, optionally, the SPS release instruction may also be transmitted at an actually used moment that can schedule the SPS transmission. Specifically, an example in which the uplink and downlink proportion configuration set is {0, 1} is used. It is assumed that the constant subframe set is determined by using the foregoing manner 1, if the parameter information of the downlink SPS is configured, the SPS period is 20 ms (a length of one subframe is 1 ms), it is assumed that a moment at which the SPS transmission is activated is 0, and then moments at which the UE performs the downlink SPS transmission are 0, 20, 40, ..., and the SPS release instruction may be transmitted at an actually used moment that can schedule the SPS transmission, such as 20 or 40.

Optionally, because after the constant subframe set is determined, specific subframes in which the UE can perform the SPS transmission may be determined, the SPS activation instruction may be not limited to being transmitted in the constant downlink subframe, but can be transmitted in any downlink subframe, including a constant subframe and a flexible subframe; therefore, the SPS activation instruction may indicate a subframe available next time most recently for performing the SPS transmission. In this way, before the SPS transmission is performed in the subframe available next time most recently, the eNB may send an SPS activation instruction multiple times, to improve reliability of the SPS activation instruction. In this case, if the UE has received an SPS activation instruction, when the UE receives the same SPS activation instruction again, the UE may apply any one of the SPS activation instructions. Specifically, the UE may ignore or discard the same SPS activation instruction that is received subsequently. Similarly, similar processing may also be performed on the SPS release instruction.

Optionally, the SPS transmission may include uplink or downlink SPS new data transmission, uplink or downlink SPS retransmitted data transmission, or an SPS control instruction, where the SPS control instruction may include one or a combination of multiple of an uplink or downlink SPS activation instruction, an uplink or downlink SPS instruction for newly transmitting a data block, an uplink or downlink SPS instruction for retransmitting a data block, and an uplink or downlink SPS release instruction. That is, in this embodiment of the present invention, the determined SPS transmission moment can be applied to SPS data transmission or transmission of the SPS control instruction.

Through the description of the foregoing implementation manner, it can be understood that, according to the semi-persistent scheduling method provided by this implementation manner of this application, a constant subframe set in a TDD frame is determined, where an uplink and downlink attribute of each subframe in the constant subframe set remains unchanged when an uplink and downlink proportion configuration of the TDD frame dynamically changes; and SPS transmission is performed in a subframe, in the constant subframe set, whose uplink and downlink attribute is the same as a transmission direction of the SPS transmission. In this way, SPS can be normally performed when a TDD uplink and downlink proportion is dynamically configured, thereby improving performance of the SPS, and reducing complexity of performing the SPS by UE.

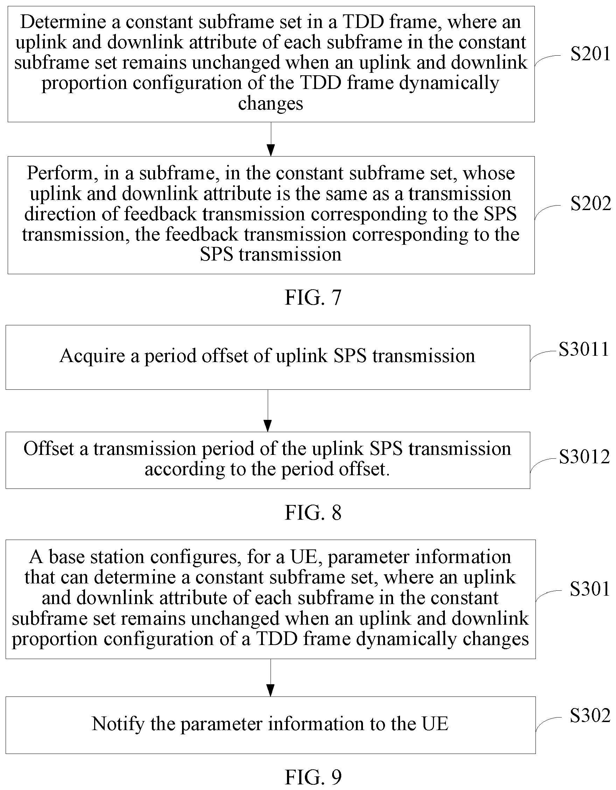

The semi-persistent scheduling method in the foregoing implementation manner is mainly used for SPS transmission. The semi-persistent scheduling method in this application may be further used for feedback transmission of the SPS transmission. Referring to FIG. 7, FIG. 7 is a flowchart of a second implementation manner of a semi-persistent scheduling method according to this application. In this implementation manner, that UE executes the method is used for description, and the semi-persistent scheduling method in this implementation manner includes the following steps:

S201: Determine a constant subframe set in a TDD frame, where an uplink and downlink attribute of each subframe in the constant subframe set remains unchanged when an uplink and downlink proportion configuration of the TDD frame dynamically changes.

The UE determines the constant subframe set in the TDD frame according to parameter information configured for the UE. The parameter information may be configured for the UE by using a base station or a protocol. The parameter information configured for the UE includes at least one or more of parameters such as a possible TDD uplink and downlink proportion configuration set, a TDD uplink and downlink proportion configuration of downlink HARQ timing reference, a TDD uplink and downlink proportion configuration of uplink HARQ timing reference, a period of a change of a TDD uplink and downlink proportion configuration, and a moment at which a TDD uplink and downlink proportion configuration change instruction is sent. The parameter information configured for the UE is one or a combination of two of parameter information of uplink SPS and parameter information of downlink SPS.

A possible implementation solution of determining the constant subframe set in the TDD frame is the same as the four possible implementation solutions provided by the foregoing implementation manner.

For example, a constant downlink subframe set of downlink feedback transmission corresponding to uplink SPS transmission may be formed by a constant downlink subframe of a reference TDD uplink and downlink proportion configuration. A constant uplink subframe set of uplink feedback transmission corresponding to downlink SPS transmission may be formed by a constant uplink subframe of a reference TDD uplink and downlink proportion configuration. Herein, the reference TDD uplink and downlink proportion configuration may be or may be not the first reference uplink and downlink proportion configuration in the foregoing implementation manner.

Herein, the reference TDD uplink and downlink proportion configuration may be at least one of the TDD uplink and downlink proportion configuration of the downlink HARQ timing reference and the TDD uplink and downlink proportion configuration of the uplink HARQ timing reference. For example, when the feedback transmission corresponding to the downlink SPS transmission is configured for the UE, the TDD uplink and downlink proportion configuration of the uplink HARQ timing reference may be used, and when the feedback transmission corresponding to the uplink SPS transmission is configured for the UE, the TDD uplink and downlink proportion configuration of the downlink HARQ timing reference may be used.

The eNB may notify the TDD uplink and downlink proportion configuration set to the UE by using a broadcast message or a dedicated RRC message or another message.

Optionally, a TDD uplink and downlink proportion configuration to which the UE makes reference for the feedback transmission corresponding to the uplink SPS transmission may be a TDD uplink and downlink proportion configuration notified in a SIB1. In this case, the TDD uplink and downlink proportion configuration to which reference is made for the feedback transmission corresponding to the uplink SPS transmission may be preconfigured or permanently configured in a protocol; in this case, the eNB may not need to notify the UE.

Optionally, a TDD uplink and downlink proportion configuration to which the UE makes reference for the feedback transmission corresponding to the downlink SPS transmission may be a preconfigured TDD uplink and downlink proportion configuration, such as 2 or 5; in this case, information about the TDD uplink and downlink proportion configuration to which reference is made for the feedback transmission corresponding to the uplink SPS transmission may be permanently configured or preconfigured in a protocol; in this case, the eNB may not need to notify the UE.

S202: Perform, in a sub frame, in the constant subframe set, whose uplink and downlink attribute is the same as a transmission direction of feedback transmission corresponding to the SPS transmission, the feedback transmission corresponding to the SPS transmission.

Specifically, the feedback transmission corresponding to the uplink SPS transmission is performed in a subframe in the constant uplink subframe set, or the feedback transmission corresponding to the downlink SPS transmission is performed in a subframe in the constant downlink subframe set.

The semi-persistent scheduling method in this implementation manner may further include: acquiring an SPS control instruction from subframes, in the constant subframe set, whose uplink and downlink attributes are the same as a transmission direction of the SPS control instruction, where the SPS control instruction includes one or a combination of multiple of an SPS activation instruction, an SPS instruction for newly transmitting a data block, an SPS instruction for retransmitting a data block, and an SPS release instruction. The SPS control instruction may indicate one piece of or a combination of multiple pieces of information such as a physical resource used by the UE for performing the SPS transmission, a modulation and coding scheme, and an SPS transmission moment. The subframe used for acquiring the SPS control instruction is a downlink subframe, in the constant subframe set, which can schedule the SPS transmission. Specifically, that the SPS control instruction is acquired from the subframes, in the constant subframe set, which are the same as the transmission direction of the SPS control instruction refers to that the UE receives, in the subframe, a PDCCH control instruction masked by using an SPS C-RNTI. A specific implementation process is the same as that in the foregoing implementation manner, and details are not provided herein again.

The foregoing first implementation manner and second implementation manner of the semi-persistent scheduling method in this application may be mutually combined, that is, during the SPS transmission and the feedback transmission corresponding to the SPS, both can be used for the semi-persistent scheduling method in this application.

In a TDD system, in order to avoid a conflict between SPS new data transmission and data retransmission in a same TTI (Transmission Time Interval, transmission time interval), for the uplink SPS, in different TDD uplink and downlink proportion configurations, there may be an offset in a period.

In different TDD uplink and downlink proportion configurations, for an offset of an uplink SPS period, reference may be made to the following Table 2:

**Table 2**

| TDD uplink and downlink proportion configuration | Subframe number | Offset |
|---|---|---|
| 0 | N/A | 0 |
| 1 | 2, 7 | 1 |
| | 3, 8 | -1 |
| 2 | 2 | 5 |
| | 7 | -5 |
| 3 | 2, 3 | 1 |
| | 4 | -2 |
| 4 | 2 | 1 |
| | 3 | -1 |
| 5 | N/A | 0 |
| 6 | N/A | 0 |

By using the TDD uplink and downlink proportion configuration and the foregoing Table 2, with reference to the following formula 1, a specific moment of each SPS transmission after the uplink SPS transmission is activated can be calculated:

$$T=[(10{\times}S+Q)+N{\times}C]+V{\times}(N \bmod 2)] \bmod 10240 \qquad \text{(formula 1),}$$

where

T indicates a moment of the SPS transmission, S indicates a number of a radio frame in which the SPS transmission is performed the first time after the SPS transmission is activated, Q indicates a number of a subframe in which the SPS transmission is performed the first time after the SPS transmission is activated, N indicates a sequential number of a period, that is, which time the SPS transmission is performed, N=0 may indicate the first SPS transmission, N=1 indicates the second SPS transmission, C indicates a period, V indicates an offset, mod is a modulus, N mod 2 means that a reminder is obtained by dividing N by 2, and the following mod 10240 is for normalization.

The following uses an example to describe how to specifically calculate a specific moment of each SPS transmission.

For example, it is assumed that the uplink SPS period C is 10 ms, a time Q at which the uplink SPS transmission is activated is the subframe 2, it starts from the 0th radio frame by default, that is, S is 0, an offset V of the subframe 2 in the TDD uplink and downlink proportion configuration 1 is 1, and the first transmission starting from the activation time is the 0th period, a moment T of the first transmission starting from the activation time is equal to [(10×0+2)+0×10+1×(0 mod 2)]mod 10240, that is, 2; for a moment of another transmission starting from the activation time is also calculated according to the foregoing formula. Therefore, according to the foregoing formula, it may be calculated that for the SPS transmission, starting from the activation time, times at which all transmissions are performed are: 2, 13, 22, 33, ....

If the time Q at which the uplink SPS transmission is activated is changed to the subframe 3, and other parameters remain unchanged, according to the foregoing formula, it may be calculated that for the SPS transmission, starting from the activation time, times at which all transmissions are performed are: 3, 12, 23, 32, ....

Because, for the uplink SPS, in different TDD uplink and downlink proportion configurations, the offset of the period may be different. In order to adapt to the dynamic change of the TDD uplink and downlink proportion configuration to better implement normal SPS, in the semi-persistent scheduling method in this application, when the uplink SPS transmission is performed in the uplink subframe, a transmission period of the uplink SPS transmission may be offset.

Therefore, in a third implementation manner of the semi-persistent scheduling method in this application, a method for offsetting the transmission period of the uplink SPS transmission is further provided. By offsetting the transmission period of the uplink SPS transmission, the conflict between the SPS new data transmission and the data retransmission can be effectively avoided in the same TTI.

Referring to FIG. 8, FIG. 8 is a flowchart of offsetting the transmission period of the uplink SPS transmission in the third implementation manner of the semi-persistent scheduling method according to this application, which includes the following steps:

S3011: Acquire a period offset of uplink SPS transmission.

In this implementation manner, the acquiring a period offset of the uplink SPS transmission may specifically be acquiring a second reference uplink and downlink proportion configuration, and determining, by using the second reference uplink and downlink proportion configuration and a subframe specifically used for the uplink SPS transmission, the period offset of the uplink SPS transmission of the subframe. For example, the acquired second reference uplink and downlink proportion configuration is 1, as can be learned from the foregoing Table 2, a period offset of uplink SPS transmission of the subframe 2 is 1. Alternatively, the acquired second reference uplink and downlink proportion configuration is 3, as can be learned from the foregoing Table 2, a period offset of uplink SPS transmission of the subframe 4 is -2. Herein, the second reference uplink and downlink proportion configuration may be the same as or may be different from the first reference uplink and downlink proportion configuration mentioned in the foregoing implementation manner.

The second reference uplink and downlink proportion configuration may be one of the uplink and downlink proportion configuration of the downlink HARQ timing reference, the uplink and downlink proportion configuration of the uplink HARQ timing reference, an uplink and downlink proportion configuration with a minimum quantity of uplink subframes in the first reference uplink and downlink proportion configuration in the parameter information configured for the UE. Specifically, for example, when the parameter information of the uplink SPS is configured for the UE, the TDD uplink and downlink proportion configuration of the downlink HARQ timing reference may be used. The second reference uplink and downlink proportion configuration may be configured by using a broadcast message or an RRC message or another message.

Optionally, the second reference uplink and downlink proportion configuration may be a preconfigured TDD uplink and downlink proportion configuration; in this case, the second reference uplink and downlink proportion configuration may be permanently configured or preconfigured in a protocol; in this case, the eNB may not need to notify the UE.

Optionally, the second reference uplink and downlink proportion configuration may be a TDD uplink and downlink proportion configuration, in the TDD uplink and downlink proportion set configured for the UE, with a minimum quantity of uplink subframes in an LTE frame. It is assumed that the TDD uplink and downlink proportion configuration set is the TDD uplink and downlink proportion configurations {0, 1} in the foregoing Table 1, as can be learned from the foregoing Table 1, a quantity of uplink subframes in the LTE radio frame in the TDD uplink and downlink proportion configuration 1 is the minimum, and the second reference uplink and downlink proportion configuration is 1.

The second reference uplink and downlink proportion configuration may be configured by using a broadcast message or a dedicated RRC message. Optionally, the second reference uplink and downlink proportion configuration may be permanently configured or preconfigured in a protocol; in this case, the eNB may not need to notify the UE.

Optionally, in this implementation manner, the acquiring a period offset of the uplink SPS transmission may further specifically be obtaining by acquiring specific information of the offset, for example, that which specific subframe or which specific subframes uses/use information about which offset or information about which offsets is configured by using a broadcast message or a dedicated RRC message. The UE may perform period offsetting according to this configuration information. Optionally, the specific information may be permanently configured or preconfigured in a protocol; in this case, the eNB may not need to notify the UE.

S3012: Offset a transmission period of the uplink SPS transmission according to the period offset.

The transmission period of the uplink SPS transmission is offset according to the period offset. A specific moment of the uplink SPS transmission for which the transmission period is offset may be calculated according to the offset and the foregoing formula 1, and new data transmission is performed at the calculated specific moment.

For example, it is assumed that the second reference uplink and downlink proportion configuration is 1, the period C of the uplink SPS is 10 ms, the time Q at which the uplink SPS transmission is activated is the subframe 2, it starts from the $0^{th}$ radio frame by default, that is, S is 0, and the offset V of the subframe 2 in the TDD uplink and downlink proportion configuration 1 is 1, according to the foregoing formula 1, it may be calculated that, for the SPS transmission, starting from the activation time, times at which all transmissions are performed are: 2, 13, 22, 33, .... While, times at which retransmitted data that appears after all transmission failures is sent are separately: 12, 23, 32, 43, .... In this way, a conflict between the retransmitted data and newly transmitted data is avoided in a same TTI.

Similarly, it is assumed that the second reference uplink and downlink proportion configuration is 1, the period C of the uplink SPS is 10 ms, the time Q at which the uplink SPS transmission is activated is the subframe 3, it starts from the 0th radio frame by default, that is, S is 0, and the offset V of the subframe 3 in the TDD uplink and downlink proportion configuration 1 is -1, according to the foregoing formula 1, it may be calculated that, for the SPS transmission, starting from the activation time, times at which all transmissions are performed are: 3, 12, 23, 32, .... While, times at which retransmitted data that appears after all transmission failures is sent are separately: 13, 22, 33, 42, ....

In this implementation manner of this application, an SPS period offset of an uplink subframe can be determined by using a constant second reference uplink and downlink proportion configuration, and a transmission period of an uplink SPS transmission is offset according to the SPS period offset. Therefore, a conflict between SPS new data transmission and data retransmission can be effectively avoided in a same TTI.

The method for offsetting the transmission period of the uplink SPS transmission in this implementation manner may be separately used, or may be applied to the first or the second implementation manner of the semi-persistent scheduling method, or to an implementation manner combined by the first and the second implementation manners.

Referring to FIG. 9, FIG. 9 is a flowchart of a fourth implementation manner of a semi-persistent scheduling method according to this application. In this implementation manner, a base station executes the method. The semi-persistent scheduling method in this implementation manner includes:

S301: A base station configures, for a UE, parameter information that can determine a constant subframe set, where an uplink and downlink attribute of each subframe in the constant subframe set remains unchanged when an uplink and downlink proportion configuration of a TDD frame dynamically changes.

The parameter information configured by the base station for the UE includes indication information and further includes at least one or more of parameters such as a possible TDD uplink and downlink proportion configuration set, a TDD uplink and downlink proportion configuration of downlink HARQ timing reference, a period of a change of a TDD uplink and downlink proportion configuration, and a moment at which a TDD uplink and downlink proportion configuration change instruction is sent. The indication information is used for instructing the UE to use which manner to determine the constant subframe set in the TDD frame. This implementation manner provides the following several possible cases for the indication information notified by the base station to the UE:

For example, the indication information notified by the base station to the UE is determining the constant subframe set by using a configured TDD uplink and downlink proportion configuration set. By acquiring the TDD uplink and downlink proportion configuration set, the UE forms a constant uplink subframe set by subframes that are all uplink sub frames when the uplink and downlink proportion configuration of the TDD frame dynamically changes, and forms a constant downlink subframe set by subframes that are all downlink subframes when the uplink and downlink proportion configuration of the TDD frame dynamically changes.

For example, the indication information notified by the base station to the UE is using a constant subframe set directly specified by the configured indication information. The base station determines the constant subframe set or one or more subsets of the constant subframe set according to the TDD uplink and downlink proportion configuration set configured for the UE. A subframe in the constant subframe set is directly specified by using the indication information. For example, it is assumed that the TDD uplink and downlink proportion configuration set configured for the UE is {0, 1}, subframes {0, 1, 5, 6} in an LTE radio frame are downlink subframes or special subframes, that is, a constant downlink subframe set, and {2, 3, 7, 8} are uplink subframes, that is, a constant uplink subframe set. In this case, if a downlink SPS configuration parameter is configured for the UE, the base station may directly specify by using the indication information that the constant subframe set may be a set formed by one or more subframes in {0, 1, 5, 6}, for example, {0, 1} or {1, 5, 6}, and if an uplink SPS configuration parameter is configured for the UE, the base station may directly specify by using the indication information that the constant subframe set may be a set formed by one or more subframes in {2, 3, 7, 8}, for example, {2, 3} or {7, 8}.

For example, the indication information notified by the base station to the UE is determining the constant subframe set by using a reference TDD uplink and downlink proportion configuration; in this case, at the same time when the base station notifies the indication information to the UE, the base station may further configure at least one reference TDD uplink and downlink proportion configuration for the UE. The UE determines the constant subframe set by using the reference TDD uplink and downlink proportion configuration. Uplink SPS and downlink SPS may separately use different reference TDD uplink and downlink proportion configurations, or may use a same reference TDD uplink and downlink proportion configuration. For the uplink SPS, the constant uplink subframe set may be formed by using an uplink subframe in the reference TDD uplink and downlink proportion configuration, and for the downlink SPS, the constant downlink subframe set may be formed by using a downlink subframe in the reference TDD uplink and downlink proportion configuration.

The reference TDD uplink and downlink proportion configuration may include at least one of the uplink and downlink proportion configuration of the downlink HARQ timing reference and the uplink and downlink proportion configuration of the uplink HARQ timing reference. When parameter information of the uplink SPS is configured for the UE, the uplink and downlink proportion configuration of the downlink HARQ timing reference is used, and when parameter information of the downlink SPS is configured for the UE, the uplink and downlink proportion configuration of the uplink HARQ timing reference is used.

For example, what is notified by the base station to the UE is determining the constant subframe set by using an uplink and downlink proportion configuration, in the configured TDD uplink and downlink proportion configuration set, with a minimum quantity of subframes whose uplink and downlink attributes are the same as a transmission direction of SPS transmission. In this case, the base station may configure a TDD uplink and downlink proportion configuration set for the UE, so that the UE finds, according to the TDD uplink and downlink proportion configuration set, a TDD uplink and downlink proportion configuration with a minimum quantity of subframes whose uplink and downlink attributes are the same as the transmission direction of the SPS transmission.

S302: Notify the parameter information to the UE.

The UE may be notified of the parameter information configured by the base station for the UE by using a system broadcast message, or by using a dedicated RRC message such as an RRC reconfiguration message or another message, or a combination of the two. That is, the UE is notified of a part of the parameter information by using a system broadcast message, and the UE is notified of the other part of the parameter information the UE by using a dedicated RRC message such as an RRC reconfiguration message or another message. When the UE is notified of a part of all of the parameter information by using a dedicated RRC message, the UE may send an RRC completion message to the base station.

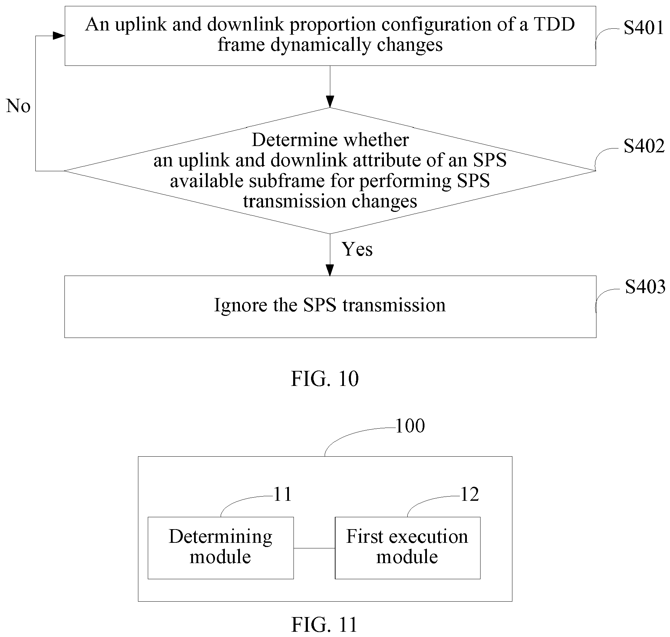

Referring to FIG. 10, FIG. 10 is a flowchart of a fifth implementation manner of a semi-persistent scheduling method according to this application. The semi-persistent scheduling method in this implementation manner includes the following steps:

S401: An uplink and downlink proportion configuration of a TDD frame dynamically changes.

When the uplink and downlink proportion configuration of the TDD frame dynamically changes, S402 is performed.

S402: Determine whether an uplink and downlink attribute of an SPS available subframe for performing SPS transmission changes.

When the uplink and downlink proportion configuration of the TDD frame dynamically changes, it is determined whether the uplink and downlink attribute of the SPS available subframe for performing the SPS transmission also changes. For example, a TDD uplink and downlink proportion configuration dynamically changes in {0, 1}, when the TDD uplink and downlink proportion configuration changes from 0 to 1, subframes {0, 1, 5, 6} are all downlink subframes, and subframes {2, 3, 7, 8} are all uplink subframes, while a subframe 4 that is an uplink subframe when the TDD uplink and downlink proportion configuration is 0 changes to a downlink subframe when the uplink and downlink proportion configuration is 1, and a subframe 9 that is an uplink subframe when the TDD uplink and downlink proportion configuration is 0 changes to a downlink subframe when the uplink and downlink proportion configuration is 1. Therefore, when the TDD uplink and downlink proportion changes from 0 to 1, uplink and downlink attributes of the subframes {0, 1, 5, 6} and the subframes {2, 3, 7, 8} remain unchanged, and uplink and downlink attributes of the subframes {4, 9} change.

When the uplink and downlink attribute of the SPS available subframe for performing the SPS transmission changes, S403 is performed.

S403: Ignore the SPS transmission.

The SPS transmission in the subframe whose uplink and downlink attribute changes is ignored.

As an exemplary implementation manner, the semi-persistent scheduling method in this implementation manner may further include: further determining whether the ignored SPS transmission is new data transmission, and when it is determined that the ignored SPS transmission is new data transmission, further making a response to a subsequent scheduling instruction to perform the ignored SPS new data transmission again.

In another exemplary implementation manner, the semi-persistent scheduling method in this implementation manner may further include: delaying the ignored SPS transmission to the $W^{th}$ SPS available subframe after the SPS available subframe whose uplink and downlink attribute changes, or advancing the ignored SPS transmission to the $M^{th}$

SPS available subframe before the SPS available subframe whose uplink and downlink attribute changes, where W and M are both natural numbers.

W and M may be configured by using an RRC message, or preconfigured in advance, for example, W=1 refers to that the UE delays a moment of the ignored SPS transmission to a next available moment. For example, if a moment of uplink SPS transmission changes to downlink, the UE delays the moment of the SPS transmission to a next uplink moment. For example, M=1 refers to that the UE advances the moment of the ignored SPS transmission to a next available moment.

For example, as shown in the following Table 3, it is assumed that a TDD uplink and downlink proportion configuration set of the UE is {0, 1}, and in the configuration 0, uplink SPS transmission of the UE is performed in the subframe 4, when the configuration changes to 1, a transmission direction of the subframe 4 changes to downlink, the UE may ignore the uplink SPS transmission, the UE may delay the ignored SPS transmission to the next uplink subframe 7 (when W=1), or advance the ignored SPS transmission to the previous uplink subframe 3 (M=1). Downlink is similar to this, and details are not provided again.

**Table 3**

| TDD uplink and downlink proportion configuration | Conversion interval period | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |

According to the semi-persistent scheduling method in this implementation manner, when an uplink and downlink proportion configuration of a TDD frame dynamically changes, it is determined whether an uplink and downlink attribute of an SPS available subframe for performing SPS transmission changes; and when the uplink and downlink attribute changes, the SPS transmission in the subframe whose uplink and downlink attribute changes is ignored. In this way, a processing manner for SPS data transmission is provided when uplink and downlink attributes of some available subframes for performing the SPS transmission change because a TDD uplink and downlink proportion configuration changes.

In addition, according to the semi-persistent scheduling method in this implementation manner, a processing manner for the ignored SPS transmission is further provided, that is, when the ignored SPS transmission is SPS new data transmission, a response is further made to a subsequent scheduling instruction to perform the ignored SPS transmission again, thereby ensuring a data loss in the ignored SPS new data transmission.

Further, the ignored SPS transmission may be delayed to an available subframe in the rear or be advanced to an available subframe in the front for transmission. In this way, a data loss caused by a change of an uplink and downlink attribute of a subframe can be effectively avoided, and performance and reliability of the SPS transmission are improved.

A current study further finds that there is a big difference between interference to the UE in a constant uplink subframe and interference to the UE in uplink and downlink flexible subframes.

In an LTE wireless communications system, when a terminal meets a preset trigger condition and a reporting condition, the terminal reports power headroom to a base station, which is referred to as a power headroom report (Power Headroom Report, PHR). The PHR is used for reporting a difference between maximum transmit power of the terminal and estimated uplink transmit power to the base station, so that the base station performs power control and uplink scheduling on the terminal according to the reported power headroom.

In the prior art, trigger of PHR reporting mainly includes the following several cases: 1. a periodic PHR timer expires; 2. a prohibit PHR timer expires or times out, and a path loss change exceeds a threshold after PHR reporting last time; 3. an uplink secondary component carrier is activated, and the like. Generally, PHR parameter configurations may include three RRC configuration parameters: a periodic PHR timer (Periodic PHR-Timer), a prohibit PHR timer (Prohibit PHR-Timer), and a downlink path loss change (dl-Pathloss Change).

However, a trigger condition of PHR reporting in the prior art is that a terminal performs PHR reporting according to a constant subframe that is sent under the premise that a base station persistently configures TDD configuration information for a cell, and acquired information has a limitation; therefore, for an application scenario in which the base station dynamically configures the TDD configuration information for the cell, a new method for triggering PHR reporting and new reporting may be needed, so that the base station accurately performs uplink scheduling.

A solution in this embodiment of the present invention includes that: when a TDD uplink and downlink proportion is dynamically configured, different PHR parameter sets may be set for different subframe sets.

A specific method in this embodiment may include:

Step 501: UE receives a first PHR parameter and a second PHR parameter, where the first PHR parameter includes at least one of a first periodic PHR timer, a first prohibit PHR timer, and a first downlink path loss change, and the first PHR parameter is applied to a constant subframe set; and the second PHR parameter includes at least one of a second periodic PHR timer, a second prohibit PHR timer, and a second downlink path loss change, and the second PHR parameter is applied to a flexible subframe set.

The first PHR parameter and the second PHR parameter may be notified by a base station to the UE by using a broadcast message or a dedicated RRC message or another message, or may be preconfigured, which is not limited herein.

Further, optionally, the UE receives a third PHR parameter, where the third PHR parameter includes at least one of a third periodic PHR timer, a third prohibit PHR timer, and a third downlink path loss change. The third PHR parameter may be a parameter that is included in neither the first PHR parameter nor the second PHR parameter. The third PHR parameter may be combined with the first PHR parameter to be applied to a PHR of the constant subframe set, or the third PHR parameter may be combined with the second PHR parameter and applied to a PHR of the flexible subframe set. That is, the PHR of the constant subframe set and the PHR of the flexible subframe set may partially use their respective PHR parameter, and for the other part, refer to the third PHR parameter.

The third PHR parameter may be notified by the base station to the UE by using a broadcast message or a dedicated RRC message or another message, or may be preconfigured, which is not limited herein.

Step 502: The UE applies the received first PHR parameter and second PHR parameter, and triggers a PHR of the constant subframe set and/or a PHR of the flexible subframe set.

Specifically, for example, when the first periodic PHR timer times out, the PHR of the constant subframe set is triggered, and after the PHR of the constant subframe set is sent, the first periodic PHR timer is started again; and when the second periodic PHR timer times out, the PHR of the flexible subframe set is triggered, and after the PHR of the flexible subframe set is sent, the second periodic PHR timer is started again.

Further, optionally, the UE applies the received third PHR parameter, and separately triggers the PHR of the constant subframe set and/or the PHR of the flexible subframe set.

Specifically, for example, when the third PHR parameter includes the third downlink path loss change, for triggering of the PHR of the constant subframe set and/or the PHR of the flexible subframe set, refer to a value of the third downlink path loss change. When the third PHR parameter includes the third periodic PHR timer, for triggering of the PHR of the constant subframe set and/or the PHR of the flexible subframe set, refer to a value of the third periodic PHR timer.

By configuring different PHR parameters for a constant subframe set and/or a flexible subframe set for a UE, timely triggering of a PHR of the constant subframe set and/or a PHR of the flexible subframe set can be separately implemented, thereby more effectively assisting a base station to perform scheduling.

Referring to FIG. 11, FIG. 11 is a schematic structural diagram of a first implementation manner of user equipment 100 according to this application. The user equipment 100 in this implementation manner includes a determining module 11 and a first execution module 12.

The determining module 11 is configured to determine a constant subframe set in a TDD frame, where an uplink and downlink attribute of each subframe in the constant subframe set remains unchanged when an uplink and downlink proportion configuration of the TDD frame dynamically changes.

The determining module 11 determines the constant subframe set in the TDD frame according to parameter information configured for the UE. The parameter information may be configured for the UE by using a base station or a protocol. The parameter information configured for the UE includes at least one or more of parameters such as a possible TDD uplink and downlink proportion configuration set, a TDD uplink and downlink proportion configuration of downlink HARQ (Hybrid Automatic Repeat Request, hybrid automatic repeat request) timing reference, a TDD uplink and downlink proportion configuration of uplink HARQ timing reference, a period of a change of a TDD uplink and downlink proportion configuration, and a moment at which a TDD uplink and downlink proportion configuration change instruction is sent. The parameter information configured for the UE is one or a combination of two of parameter information of uplink SPS and parameter information of downlink SPS.

In addition, the parameter information configured for the UE may further include a conventional SPS configuration parameter, for example, if the parameter information of the uplink SPS is configured for the UE, the SPS configuration parameter may include one or more of an SPS period and an implicit release condition for the uplink SPS; and if the parameter information of the downlink SPS is configured for the UE, the SPS configuration parameter may include parameters such as an SPS period, an uplink feedback resource corresponding to downlink SPS transmission, and an HARQ process quantity reserved for the SPS. The UE may be notified of only the parameter information of the uplink SPS, or the UE may be notified of only the parameter information of the downlink SPS, or the UE may be notified of both the parameter information of the uplink SPS and the parameter information of the downlink SPS.

Herein, the constant subframe set is at least one of a constant uplink subframe set and a constant downlink subframe set, where subframes in the constant uplink subframe set are all uplink subframes when the uplink and downlink proportion configuration of the TDD frame dynamically changes, and subframes in the constant downlink subframe set are all downlink subframes when the uplink and downlink proportion configuration of the TDD frame dynamically changes.

The uplink and downlink attribute of each subframe in the constant subframe set remains unchanged when the uplink and downlink proportion configuration of the TDD frame dynamically changes.

This implementation manner provides four possible implementation solutions of determining, by the determining module 11, the constant subframe set in the TDD frame.

In a solution 1, the determining module 11 is configured to acquire an uplink and downlink proportion configuration set of the TDD frame, where the uplink and downlink proportion configuration set includes at least two uplink and downlink proportion configurations; and determine subframes whose uplink and downlink attributes remain unchanged in the at least two uplink and downlink proportion configurations, to form the constant subframe set.

The determining module 11 may acquire the uplink and downlink proportion configuration set of the TDD frame by using a broadcast message or a dedicated RRC message or another message, where the uplink and downlink proportion configuration set includes two or more uplink and downlink proportion configurations, which, for example, may be the proportion configurations {0, 1}, {1, 2, 3}, {2, 3}, or the like in the foregoing Table 1, Optionally, the uplink and downlink proportion configuration set of the TDD frame may be permanently configured or preconfigured in a protocol. In this case, the eNB may not need to notify the UE of the uplink and downlink proportion configuration set of the TDD frame by using a broadcast message or a dedicated RRC message or another message. Optionally, the uplink and downlink proportion configuration set may further include an uplink and downlink proportion configuration that is not in the uplink and downlink proportion configurations in the foregoing Table 1, which is not limited in the present invention.

The determining module 11 may determine, according to the acquired uplink and downlink proportion configuration set of the TDD frame, subframes specifically included in the constant subframe set in a Long Term Evolution (LTE, Long Term Evolution) radio frame. For example, it is assumed that the uplink and downlink proportion configuration set of the TDD frame that is configured for the UE is the TDD uplink and downlink proportion configurations {0, 1} in the foregoing Table 1, the UE may determine that in the LTE radio frame, subframes {0, 1, 5, 6} are downlink subframes, that is, a constant downlink subframe set, and {2, 3, 7, 8} are uplink subframes, that is, a constant uplink subframe set. Although, in the LTE radio frame, subframes {4, 9} may be used for uplink transmission, but may also be used for downlink transmission, and therefore, are flexible subframes. Therefore, the subframes {4, 9} are not used as subframes in the constant subframe set in this implementation manner. That is, in the uplink and downlink proportion configurations {0, 1}, if the parameter information of the downlink SPS is configured for the UE, the UE determines that only one or more of the subframes {0, 1, 5, 6} can be used for SPS transmission, while, if the parameter information of the uplink SPS is configured for the UE, the UE determines that only one or more of the subframes {2, 3, 7, 8} can be used for the SPS transmission.

In a solution 2, the determining module 11 is configured to acquire indication information, where the indication information directly specifies a subframe in the constant subframe set.

The determining module 11 acquires the indication information, where the indication information directly specifies the subframe in the constant subframe set. That is, the UE does not need to determine the constant subframe set by using the uplink and downlink proportion configuration set, but directly uses the specified subframe in the constant subframe set to perform SPS transmission. Herein, the specified subframe in the constant subframe set may be one or more subframes in the constant subframe set obtained by using the TDD uplink and downlink proportion configuration set. When the downlink SPS is configured for the UE, the subframe in the constant subframe set may be one or more subframes in the constant downlink subframe set obtained by using the configured TDD uplink and downlink proportion configuration set, and the uplink SPS is similar. The UE may acquire the indication information by using a broadcast message or a dedicated RRC message or another message.

For example, it is assumed that the TDD uplink and downlink proportion configuration set configured for the UE is the TDD uplink and downlink proportion configurations {0, 1} in the foregoing Table 1, in the LTE radio frame, the subframes {0, 1, 5, 6} are downlink subframes, that is, the constant downlink subframe set, and {2, 3, 7, 8} are uplink subframes, that is, the constant uplink subframe set. In this case, if the parameter information of the downlink SPS is configured for the UE, the indication information may directly indicate that a subframe in the constant subframe set is one or more subframes in {0, 1, 5, 6}, for example, {0, 1}, {0, 5}, {0, 1, 6}, or the like. If the parameter information of the uplink SPS is configured for the UE, the indication information may directly specify that a subframe in the constant subframe set is one or more subframes in {2, 3, 7, 8}, for example, {2, 3}, {3, 8}, {2, 7, 8}, or the like.

In a solution 3, the determining module 11 is configured to acquire at least one first reference uplink and downlink proportion configuration; and form the constant subframe set by subframes with a specific attribute in the first reference uplink and downlink proportion configuration.

The constant subframe set is at least one of a constant uplink subframe set and a constant downlink subframe set, where subframes in the constant uplink subframe set are all uplink subframes when the uplink and downlink proportion configuration of the TDD frame dynamically changes, and subframes in the constant downlink subframe set are all downlink subframes when the uplink and downlink proportion configuration of the TDD frame dynamically changes.

The determining module 11 is configured to acquire the at least one first reference uplink and downlink proportion configuration, where there may be one or more first reference uplink and downlink proportion configurations. Optionally, a first reference uplink proportion configuration of uplink SPS reference is different from a first reference uplink and downlink proportion configuration of downlink SPS reference. When the uplink SPS and the downlink SPS separately use different first reference uplink and downlink proportion configurations, for the uplink SPS, the constant uplink subframe set is formed by an uplink subframe in the uplink and downlink proportion configuration of the uplink SPS reference, and for the downlink SPS, the constant downlink subframe set is formed by a downlink subframe in the uplink and downlink proportion configuration of the downlink SPS reference.

When the uplink SPS and the downlink SPS use a same first reference uplink and downlink proportion configuration, the constant uplink subframe set is formed by an uplink subframe in the first reference uplink and downlink proportion configuration, and the constant downlink subframe set is formed by a downlink subframe and a special subframe in the first reference uplink and downlink proportion configuration.

Optionally, the first reference uplink and downlink proportion configuration used for forming the constant downlink subframe set is a proportion configuration indicated by a SIB1. Specifically, the first reference uplink and downlink proportion configuration is a TDD uplink and downlink proportion configuration in the SIB1.

Specifically, the first reference uplink and downlink proportion configuration may include at least one of a TDD uplink and downlink proportion configuration of downlink HARQ timing reference and a TDD uplink and downlink proportion configuration of uplink HARQ timing reference. For example, when a parameter information of the downlink SPS is configured for the UE, the first reference uplink and downlink proportion configuration may be the TDD uplink and downlink proportion configuration of the uplink HARQ timing reference, and when a parameter information of the uplink SPS is configured for the UE, the first reference uplink and downlink proportion configuration may be the TDD uplink and downlink proportion configuration of the downlink HARQ timing reference. Specifically, the determining module 11 is configured to acquire the at least one first reference uplink and downlink proportion configuration, for the uplink SPS, form the constant uplink subframe set by an uplink subframe in the uplink and downlink proportion configuration of the downlink HARQ timing reference, and for the downlink SPS, form the constant downlink subframe set by a downlink subframe and a special subframe in the uplink and downlink proportion configuration of the uplink HARQ timing reference.

Optionally, the first reference uplink and downlink proportion configuration to which the UE makes reference for the uplink SPS transmission may be a preconfigured uplink and downlink proportion configuration; in this case, the first reference uplink and downlink proportion configuration may be permanently configured or preconfigured in a protocol, and the UE may not need to be notified by the eNB.

In a solution 4, the determining module 11 is configured to acquire an uplink and downlink proportion configuration set of the TDD frame, where the uplink and downlink proportion configuration set includes at least two uplink and downlink proportion configurations; and select, from the at least two uplink and downlink proportion configurations, an uplink and downlink proportion configuration with a minimum quantity of subframes whose uplink and downlink attributes are the same as the transmission direction of the SPS transmission, and form the constant subframe set by subframes, in the selected uplink and downlink proportion configuration, whose uplink and downlink attributes are the same as the transmission direction of the SPS transmission.

The determining module 11 may acquire the uplink and downlink proportion configuration set of the TDD frame by using a broadcast message or a dedicated RRC message or another message, where the uplink and downlink proportion configuration set includes two or more uplink and downlink proportion configurations, which, for example, may be the proportion configurations {0, 1}, {1, 2, 3}, {2, 3}, or the like in the foregoing Table 1, that is, may be a combination of any two or more of the uplink and downlink proportion configurations in the foregoing Table 1, or may be an uplink and downlink proportion configuration that is not in the foregoing Table 1. Optionally, the uplink and downlink proportion configuration set of the TDD frame may be permanently configured or preconfigured in a protocol; in this case, the eNB may not need to notify the UE of the uplink and downlink proportion configuration set of the TDD frame by using a broadcast message or a dedicated RRC message or another message.

The determining module 11 may select, from the acquired at least two uplink and downlink proportion configurations according to indication information of selecting an uplink and downlink proportion configuration with a minimum quantity of subframes whose uplink and downlink attributes are the same as the transmission direction of the SPS transmission, the uplink and downlink proportion configuration with the minimum quantity of subframes whose uplink and downlink attributes are the same as the transmission direction of the SPS transmission, and determine that the subframes that are the same as the transmission direction of the SPS transmission to form the constant subframe set. For the downlink SPS transmission, an uplink and downlink proportion configuration with a minimum quantity of downlink subframes is selected from the at least two uplink and downlink proportion configurations, and a downlink subframe acquired in the uplink and downlink proportion configuration forms the constant downlink subframe set. For the uplink SPS transmission, an uplink and downlink proportion configuration with a minimum quantity of uplink subframes is selected from the at least two uplink and downlink proportion configurations, and an uplink subframe acquired in the uplink and downlink proportion configuration forms the constant uplink subframe set.

The first execution module 12 is configured to perform SPS transmission in a subframe, in the constant subframe set determined by the determining module 11, whose uplink and downlink attribute is the same as a transmission direction of the SPS transmission.

Specifically, the first execution module 12 performs the uplink SPS transmission in a subframe in the constant uplink subframe set, or performs the downlink SPS transmission in a subframe in the constant downlink subframe set. An example in which the TDD uplink and downlink proportion configuration set is {0, 1} in the foregoing Table 1 is used, and it is assumed that the constant subframe set is determined by using the foregoing solution 1. It is assumed that the downlink SPS is configured, an SPS period is 20 ms (a length of one subframe is 1 ms), and a moment at which the SPS transmission is activated is 0, a moment at which the UE performs the downlink SPS transmission is 0, 20, 40, .... That is, the UE separately performs the SPS transmission in the corresponding downlink subframes {0, 1, 5, 6} at 0, 20, 40, ....

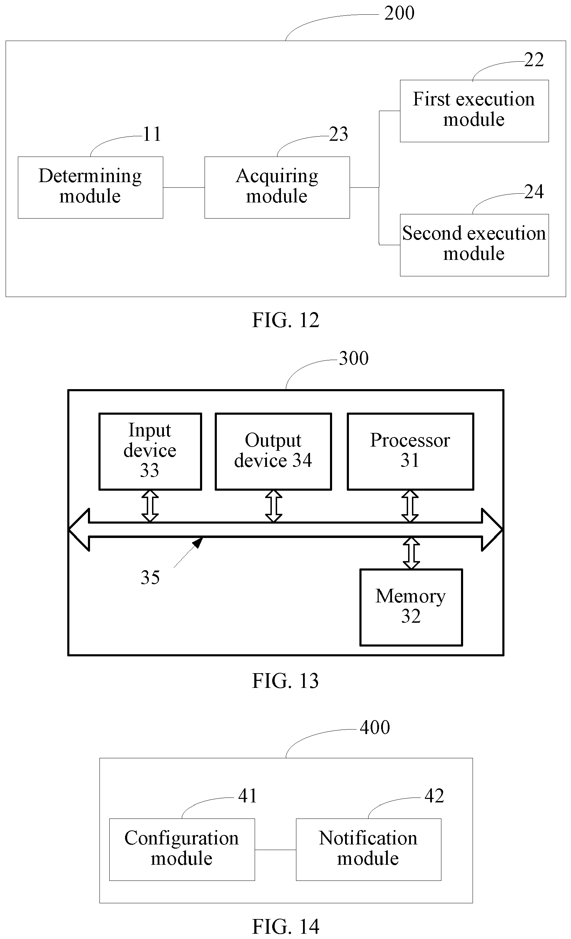

Referring to FIG. 12, FIG. 12 is a schematic structural diagram of a second implementation manner of user equipment according to this application. The user equipment 200 in this implementation manner includes a determining module 21, a first execution module 22, an acquiring module 23, and a second execution module 23.

The determining module 21 is configured to determine a constant subframe set in a TDD frame, where an uplink and downlink attribute of each subframe in the constant subframe set remains unchanged when an uplink and downlink proportion configuration of the TDD frame dynamically changes.

The first execution module 22 is configured to perform SPS transmission in a subframe, in the constant subframe set determined by the determining module, whose uplink and downlink attribute is the same as a transmission direction of the SPS transmission.

Specific implementation processes of functions of the determining module 21 and the first execution module 22 are the same as implementation processes of corresponding modules in the first implementation manner of the user equipment in this application, for details, refer to detailed descriptions of the implementation manner shown in FIG. 11, and details are not provided herein again.

The user equipment in this implementation manner further includes the acquiring module 23, where the acquiring module 23 is configured to acquire an SPS control instruction from subframes, in the constant subframe set determined by the determining module 21, whose uplink and downlink attributes are the same as a transmission direction of the SPS control instruction, where the SPS control instruction includes one or a combination of multiple of an SPS activation instruction, an SPS instruction for newly transmitting a data block, an SPS instruction for retransmitting a data block, and an SPS release instruction.

According to the user equipment in this implementation manner, the acquiring module 23 may further acquire an SPS control instruction from subframes, in the constant subframe set, whose uplink and downlink attributes are the same as a transmission direction of the SPS control instruction, where the SPS control instruction includes one or a combination of multiple of an SPS activation instruction, an SPS instruction for newly transmitting a data block, an SPS instruction for retransmitting a data block, and an SPS release instruction. The SPS control instruction may indicate one piece of or a combination of multiple pieces of information such as a physical resource used by the UE for performing the SPS transmission, a modulation and coding scheme, and an SPS transmission moment.

The subframe used for acquiring the SPS control instruction is a downlink subframe, in the constant subframe set, which can schedule the SPS transmission. Specifically, that the SPS control instruction is acquired from the subframes, in the constant subframe set, which are the same as the transmission direction of the SPS control instruction refers to that the UE receives, in the subframe, a PDCCH control instruction masked by using an SPS C-RNTI.

When the SPS control instruction is used for indicating SPS activation, the SPS control instruction is the SPS activation instruction. The acquiring module 23 acquires the SPS activation instruction from subframes that are the same as a transmission direction of the SPS activation instruction, and then activates the subframe used for the SPS transmission. SPS activation instructions of the uplink SPS and the downlink SPS can only be both acquired from a downlink subframe.

An SPS activation instruction of each subframe can be transmitted only in a downlink subframe that can schedule the subframe. Generally, downlink scheduling command transmission and downlink data transmission are performed in a same subframe, that is, a downlink SPS activation instruction can activate downlink SPS transmission in a subframe that transmits the SPS activation instruction, and subsequently, the SPS transmission may be performed periodically. Using uplink as an example, the SPS activation instruction can be transmitted only in a downlink subframe that can schedule a corresponding uplink subframe, and generally, uplink scheduling command transmission is performed in K subframes before uplink data transmission, where a value of K varies with different TDD uplink and downlink proportion configurations, for example, K may be 4, 6, or the like.

In fact, for the UE, the acquiring module 23 listens to the SPS activation instruction only at a moment at which the SPS activation instruction can be transmitted, or the UE does not listen to the SPS activation instruction at another moment, or the UE ignores the SPS activation instruction after listening to and detecting the SPS activation instruction at another moment. Specifically, an example in which the TDD uplink and downlink proportion configuration set is the TDD uplink and downlink proportion configurations {0, 1} in the foregoing Table 1 is used. It is assumed that the constant subframe set is determined by using the foregoing solution 1, a moment at which the downlink SPS transmission is performed may be the subframes {0, 1, 5, 6}, and the downlink SPS activation instruction can be transmitted only in the subframes {0, 1, 5, 6} in the LTE radio frame, or is not transmitted in another subframe.

For the SPS activation instruction, for a subframe that has been activated, if the SPS activation instruction is received again, the SPS activation instruction may also be considered as an SPS modification instruction.

When data transmission has been completed in a subframe, a resource allocated by using the SPS activation instruction may be released by receiving an SPS scheduling instruction, to be used for subsequent data scheduling, so as to avoid a waste of the resource. In this case, when the SPS scheduling instruction acquired by the acquiring module 23 is used for indicating SPS release, the SPS scheduling instruction may be referred to as an SPS release instruction.

Optionally, the SPS release instruction may be transmitted in a downlink subframe that can schedule a corresponding subframe.

Using uplink as an example, the SPS release instruction can be transmitted only in a downlink subframe that can schedule a corresponding uplink subframe. For example, for an SPS release instruction of the uplink subframe 2 for the uplink SPS in the uplink and downlink proportions {0, 1}, if K is 6, the SPS release instruction of the subframe 2 can be transmitted only in a downlink subframe 6 of a previous frame (the sixth downlink subframe before the subframe 2 is the downlink subframe 6 of the previous frame). An SPS release command of the downlink subframe 1 in the uplink and downlink proportions {0, 1} is transmitted in the downlink subframe 1, and an SPS release instruction of the downlink subframe 5 is transmitted in the downlink subframe 5. The rest may be deduced by analogy.

Further, optionally, the SPS release instruction may also be transmitted at an actually used moment that can schedule the SPS transmission. Specifically, an example in which the uplink and downlink proportion configuration set is {0, 1} is used. It is assumed that the constant subframe set is determined by using the foregoing manner 1, if the parameter information of the downlink SPS is configured, the SPS period is 20 ms (a length of one subframe is 1 ms), it is assumed that a moment at which the SPS transmission is activated is 0, and then moments at which the UE performs the downlink SPS transmission are 0, 20, 40, ..., and the SPS release command may be transmitted at an actually used moment that can schedule the SPS transmission, such as 20 or 40.

Optionally, because, after the constant subframe set is determined, specific subframes in which the UE can perform the SPS transmission may be determined, the SPS activation instruction may be not limited to being transmitted in the constant downlink subframe, but can be transmitted in any downlink subframe, including a constant subframe and a flexible subframe; therefore, the SPS activation instruction may indicate a subframe available next time most recently for performing the SPS transmission. In this way, before the SPS transmission is performed in the subframe available next time most recently, the eNB may send an SPS activation instruction multiple times, to improve reliability of the SPS activation instruction; in this case, if the UE has received an SPS activation instruction, when the UE receives the same SPS activation instruction again, the UE may apply any one of the SPS activation instructions. Specifically, the UE may ignore or discard the same SPS activation instruction that is received subsequently. Similarly, similar processing may also be performed on the SPS release instruction.

Optionally, the SPS transmission may include uplink or downlink SPS new data transmission, uplink or downlink SPS retransmitted data transmission, or an SPS control instruction, where the SPS control instruction may include one or a combination of multiple of an uplink or downlink SPS activation instruction, an uplink or downlink SPS instruction for newly transmitting a data block, an uplink or downlink SPS instruction for retransmitting a data block, and an uplink or downlink SPS release instruction. That is, in this embodiment of the present invention, the determined SPS transmission moment can be applied to SPS data transmission or transmission of the SPS control instruction.

The second execution module 24 is configured to perform, in a subframe, in the constant subframe set determined by the determining module 21, whose uplink and downlink attribute is the same as a transmission direction of feedback transmission corresponding to the SPS transmission, the feedback transmission corresponding to the SPS transmission.

The determining module 21 determines the constant subframe set in the TDD frame according to parameter information configured for the UE. The parameter information may be configured for the UE by using a base station or a protocol. The parameter information configured for the UE includes at least one or more of parameters such as a possible TDD uplink and downlink proportion configuration set, a TDD uplink and downlink proportion configuration of downlink HARQ timing reference, a TDD uplink and downlink proportion configuration of uplink HARQ timing reference, a period of a change of a TDD uplink and downlink proportion configuration, and a moment at which a TDD uplink and downlink proportion configuration change instruction is sent. The parameter information configured for the UE is one or a combination of two of parameter information of uplink SPS and parameter information of downlink SPS.

A possible implementation solution of determining, by the determining module 21, the constant subframe set in the TDD frame is the same as the four possible implementation solutions provided by the foregoing implementation manner shown in FIG. 11.

For example, a constant downlink subframe set of downlink feedback transmission corresponding to uplink SPS transmission may be formed by a constant downlink subframe of a reference TDD uplink and downlink proportion configuration. A constant uplink subframe set of uplink feedback transmission corresponding to downlink SPS transmission may be formed by a constant uplink subframe of a reference TDD uplink and downlink proportion configuration. Herein, the reference TDD uplink and downlink proportion configuration may be or may be not the first reference uplink and downlink proportion configuration in the foregoing implementation manner.

Herein, the reference TDD uplink and downlink proportion configuration may be at least one of the TDD uplink and downlink proportion configuration of the downlink HARQ timing reference and the TDD uplink and downlink proportion configuration of the uplink HARQ timing reference. For example, when the feedback transmission corresponding to the downlink SPS transmission is configured for the UE, the TDD uplink and downlink proportion configuration of the uplink HARQ timing reference may be used, and when the feedback transmission corresponding to the uplink SPS transmission is configured for the UE, the TDD uplink and downlink proportion configuration of the downlink HARQ timing reference may be used.

The eNB may notify the TDD uplink and downlink proportion configuration set to the UE by using a broadcast message or a dedicated RRC message or another message.

Optionally, a TDD uplink and downlink proportion configuration to which the UE makes reference for the feedback transmission corresponding to the uplink SPS transmission may be a TDD uplink and downlink proportion configuration notified in a SIB1. In this case, the TDD uplink and downlink proportion configuration to which reference is made for the feedback transmission corresponding to the uplink SPS transmission may be preconfigured or permanently configured in a protocol; in this case, the eNB may not need to notify the UE.

Optionally, a TDD uplink and downlink proportion configuration to which the UE makes reference for the feedback transmission corresponding to the downlink SPS transmission may be a preconfigured TDD uplink and downlink proportion configuration, such as 2 or 5; in this case, information about the TDD uplink and downlink proportion configuration to which reference is made for the feedback transmission corresponding to the uplink SPS transmission may be permanently configured or preconfigured in a protocol; in this case, the eNB may not need to notify the UE.

Specifically, the second execution module 24 performs the feedback transmission corresponding to the uplink SPS transmission in a subframe in the constant uplink subframe set, or performs the feedback transmission corresponding to the downlink SPS transmission in a subframe in the constant downlink subframe set.

According to the user equipment in this implementation manner, the acquiring module 23 may be further configured to acquire an SPS control instruction from subframes, in the constant subframe set, whose uplink and downlink attributes are the same as a transmission direction of the SPS control instruction, where the SPS control instruction includes one or a combination of multiple of an SPS activation instruction, an SPS instruction for newly transmitting a data block, an SPS instruction for retransmitting a data block, and an SPS release instruction. The SPS control instruction may indicate one piece of or a combination of multiple pieces of information such as a physical resource used by the UE for performing the SPS transmission, a modulation and coding scheme, and an SPS transmission moment. The subframe used for acquiring the SPS control instruction is a downlink subframe, in the constant subframe set, which can schedule the SPS transmission. Specifically, that the SPS control instruction is acquired from the subframes, in the constant subframe set, which are the same as the transmission direction of the SPS control instruction refers to that the UE receives, in the subframe, a PDCCH control instruction masked by using an SPS C-RNTI. A specific implementation process is the same as that in the foregoing related description about the acquiring module 23 in this implementation manner, and details are not provided herein again.

Further, the first execution module 22 is configured to acquire a period offset of the uplink SPS transmission; and offset a transmission period of the uplink SPS transmission according to the period offset.

In a TDD system, in order to avoid a conflict between SPS new data transmission and data retransmission in a same TTI, for the uplink SPS, in different TDD uplink and downlink proportion configurations, there may be an offset in a period. In different specific TDD uplink and downlink proportion configurations, offsets of an uplink SPS period may be different, and for details, refer to what are shown in the foregoing Table 2.

After the uplink and downlink proportion configuration is determined, with reference to Table 2, in the uplink and downlink proportion configuration, an offset of an SPS period offset of an uplink subframe may be learned, a specific moment of each SPS transmission after the uplink SPS transmission is activated may be calculated by using the formula 1 in the foregoing implementation manner in this application. For specific calculation, refer to the description of the example in the foregoing implementation manner.

In this implementation manner, the first execution module 22 is configured to acquire a second reference uplink and downlink proportion configuration, and determine the period offset of the uplink SPS transmission by using the second reference uplink and downlink proportion configuration and a subframe for the uplink SPS transmission.

The second reference uplink and downlink proportion configuration may be one of the uplink and downlink proportion configuration of the downlink HARQ timing reference, the uplink and downlink proportion configuration of the uplink HARQ timing reference, an uplink and downlink proportion configuration with a minimum quantity of uplink subframes in the first reference uplink and downlink proportion configuration in the parameter information configured for the UE. Specifically, for example, when the parameter information of the uplink SPS is configured for the UE, the TDD uplink and downlink proportion configuration of the downlink HARQ timing reference may be used. The second reference uplink and downlink proportion configuration may be configured by using a broadcast message or an RRC message or another message.

Optionally, the second reference uplink and downlink proportion configuration may be a preconfigured TDD uplink and downlink proportion configuration; in this case, the second reference uplink and downlink proportion configuration may be permanently configured or preconfigured in a protocol; in this case, the eNB may not need to notify the UE.

Optionally, the second reference uplink and downlink proportion configuration may be a TDD uplink and downlink proportion configuration, in the TDD uplink and downlink proportion set configured for the UE, with a minimum quantity of uplink subframes in an LTE frame. It is assumed that the TDD uplink and downlink proportion configuration set is the TDD uplink and downlink proportion configurations {0, 1} in the foregoing Table 1, as can be learned from the foregoing Table 1, a quantity of uplink subframes in the LTE radio frame in the TDD uplink and downlink proportion configuration 1 is the minimum, and the second reference uplink and downlink proportion configuration is 1.

The second reference uplink and downlink proportion configuration may be configured by using a broadcast message or a dedicated RRC message. Optionally, the second reference uplink and downlink proportion configuration may be permanently configured or preconfigured in a protocol; in this case, the eNB may not need to notify the UE.

Optionally, in this implementation manner, the acquiring, by the acquiring module 23, a period offset of the uplink SPS transmission may further specifically be obtaining by acquiring specific information of the offset, for example, that which specific subframe or which specific subframes uses/use information about which offset or information about which offsets is configured by using a broadcast message or a dedicated RRC message. The UE may perform period offsetting according to this configuration information. Optionally, the specific information may be permanently configured or preconfigured in a protocol; in this case, the eNB may not need to notify the UE.

The first execution module 22 acquires the second reference uplink and downlink proportion configuration, and with reference to Table 2, an SPS period offset of an uplink subframe in the uplink and downlink proportion configuration may be learned. For example, the second reference uplink and downlink proportion configuration acquired by the first execution module 22 is 1, and as can be learned from the foregoing Table 2, a period offset of uplink SPS transmission of the subframe 2 is 1. Alternatively, the acquired second reference uplink and downlink proportion configuration is 3, as can be learned from the foregoing Table 2, a period offset of uplink SPS transmission of the subframe 4 is -2. Herein, the second reference uplink and downlink proportion configuration may be the same as or may be different from the first reference uplink and downlink proportion configuration mentioned in the foregoing implementation manner.

The first execution module 22 may calculate, according to the offset and the foregoing formula 1, a specific moment of the uplink SPS transmission for which the transmission period is offset, and perform new data transmission at the calculated specific moment.

For example, it is assumed that the second reference uplink and downlink proportion configuration is 1, a period C of the uplink SPS is 10 ms, a time Q at which the uplink SPS transmission is activated is the subframe 2, it starts from the $0^{th}$ radio frame by default, that is, S is 0, and an offset V of the subframe 2 in the TDD uplink and downlink proportion configuration 1 is 1, according to the foregoing formula 1, it may be calculated that, for the SPS transmission, starting from the activation time, times at which all transmissions are performed are: 2, 13, 22, 33, .... While, times at which retransmitted data that appears after all transmission failures is sent are separately: 12, 23, 32, 43, .... In this way, a conflict between the retransmitted data and newly transmitted data is avoided in a same TTI.

In this implementation manner of this application, an SPS period offset of an uplink subframe can be determined by using a constant second reference uplink and downlink proportion configuration, and a transmission period of an uplink SPS transmission is offset according to the SPS period offset. Therefore, a conflict between SPS new data transmission and data retransmission can be effectively avoided in a same TTI.

Referring to FIG. 13, FIG. 13 is a schematic structural diagram of a third implementation manner of user equipment according to this application. The user equipment 300 in this implementation manner includes a processor 31, a memory 32, an input device 33, an output device 34, and a bus system 35.

The processor 31 controls an operation of the user equipment 300, and the processor 31 may be further referred to as a CPU (Central Processing Unit, central processing unit). The processor 31 may be an integrated circuit chip, and has a signal processing capability. The processor 31 may further be a general processor, a digital signal processor (DSP), an application specific integrated circuit (ASIC), a field programmable gate array (FPGA), another programmable logical device, a discrete gate, a transistor logical device, or a discrete hardware component. The general processor may be a microprocessor, or the processor may be any conventional processor.

The memory 32 may include a read-only memory and a random access memory, and provides an instruction and data to the processor 31. A part of the memory 32 may further include a non-volatile random access memory (NVRAM).

In addition, components of the user equipment 300 are coupled together by using the bus system 35, and besides including a data bus, the bus system 35 further includes a power bus, a control bus, and a state signal bus. However, for clear description, various buses are marked as the bus system 35 in the figure.

The memory 32 stores the following elements, executable modules or data structures, or a subset thereof, or an extension set thereof:

operation instructions: including various operation instructions, configured to implement various operations; and an operating system: including various system programs, configured to implement various fundamental services and process a hardware-based task.

In this embodiment of the present invention, the processor 31 performs the following operations by invoking an operation instruction (the operation instruction may be stored in an operating system) stored in the memory 32:

The processor 31 is configured to determine a constant subframe set, where an uplink and downlink attribute of each subframe in the constant subframe set remains unchanged when an uplink and downlink proportion configuration of a TDD frame dynamically changes; and SPS transmission is performed in a subframe, in the constant subframe set, whose uplink and downlink attribute is the same as a transmission direction of the SPS transmission.

The constant subframe set is at least one of a constant uplink subframe set and a constant downlink subframe set, where subframes in the constant uplink subframe set are all uplink subframes when the uplink and downlink proportion configuration of the TDD frame dynamically changes, and subframes in the constant downlink subframe set are all downlink subframes when the uplink and downlink proportion configuration of the TDD frame dynamically changes.

The processor 31 performs uplink SPS transmission in the constant uplink subframe set, or performs downlink SPS transmission in the constant downlink subframe set.

Optionally, the processor 31 may determine the constant subframe set in the TDD frame by using the following four possible implementation solutions:

A solution 1: The processor 31 is configured to acquire an uplink and downlink proportion configuration set of the TDD frame, where the uplink and downlink proportion configuration set includes at least two uplink and downlink proportion configurations; and determine subframes whose uplink and downlink attributes remain unchanged in the at least two uplink and downlink proportion configurations, to form the constant subframe set.

The uplink and downlink proportion configuration set may include two or more uplink and downlink proportion configurations, which, for example, may be the proportion configurations {0, 1}, {1, 2, 3}, {2, 3}, or the like in the foregoing Table 1, The processor 31 may determine, according to the acquired uplink and downlink proportion configuration set of the TDD frame, subframes specifically included in the constant subframe set in a Long Term Evolution (LTE, Long Term Evolution) radio frame. For example, it is assumed that the uplink and downlink proportion configuration set of the TDD frame that is configured for the UE is the TDD uplink and downlink proportion configurations {0, 1} in the foregoing Table 1, the UE may determine that in the LTE radio frame, subframes {0, 1, 5, 6} are downlink subframes, that is, a constant downlink subframe set, and {2, 3, 7, 8} are uplink subframes, that is, a constant uplink subframe set. Optionally, the uplink and downlink proportion configuration set may further include an uplink and downlink proportion configuration that is not in the uplink and downlink proportion configurations in the foregoing Table 1, which is not limited in the present invention.

Optionally, the uplink and downlink proportion configuration set of the TDD frame may be permanently configured or preconfigured in a protocol; in this case, the eNB may not need to notify the UE of the uplink and downlink proportion configuration set of the TDD frame by using a broadcast message or a dedicated RRC message or another message.

A solution 2: The processor 31 acquires an uplink and downlink proportion configuration set of the TDD frame, where the uplink and downlink proportion configuration set includes at least two uplink and downlink proportion configurations; and determine subframes whose uplink and downlink attributes remain unchanged in the at least two uplink and downlink proportion configurations, to form the constant subframe set.

That is, in the solution 2, the processor 31 does not need to determine the constant subframe set by using the uplink and downlink proportion configuration set, but directly uses a specified subframe in the constant subframe set to perform the SPS transmission. Herein, the specified constant subframe set may be one or more subsets of the constant subframe set of the constant subframe set obtained by using the TDD uplink and downlink proportion configuration set. When the downlink SPS is configured for the UE, the constant subframe set may be one or more subsets of the constant downlink subframe set or the constant downlink subframe set obtained by using the configured TDD uplink and downlink proportion configuration set, and the uplink SPS is similar to this. The UE may acquire the indication information by using a broadcast message or a dedicated RRC message or another message.

A solution 3: The processor 31 acquires at least one first reference uplink and downlink proportion configuration, and form the constant uplink subframe set by an uplink subframe in the first reference uplink and downlink proportion configuration, and form the constant downlink subframe set by a downlink subframe and a special subframe in the first reference uplink and downlink proportion configuration.

The constant subframe set is at least one of a constant uplink subframe set and a constant downlink subframe set, where subframes in the constant uplink subframe set are all uplink subframes when the uplink and downlink proportion configuration of the TDD frame dynamically changes, and subframes in the constant downlink subframe set are all downlink subframes when the uplink and downlink proportion configuration of the TDD frame dynamically changes.

The processor 31 acquires the at least one first reference uplink and downlink proportion configuration, where there may be one or more first reference uplink and downlink proportion configurations. Optionally, a first reference uplink proportion configuration of uplink SPS reference is different from a first reference uplink and downlink proportion configuration of downlink SPS reference. When the uplink SPS and the downlink SPS separately use different first reference uplink and downlink proportion configurations, for the uplink SPS, the constant uplink subframe set is formed by an uplink subframe in the uplink and downlink proportion configuration of the uplink SPS reference, and for the downlink SPS, the constant downlink subframe set is formed by a downlink subframe in the uplink and downlink proportion configuration of the downlink SPS reference.

When the uplink SPS and the downlink SPS use a same first reference uplink and downlink proportion configuration, the constant uplink subframe set is formed by an uplink subframe in the first reference uplink and downlink proportion configuration, and the constant downlink subframe set is formed by a downlink subframe and a special subframe in the first reference uplink and downlink proportion configuration.

Optionally, the first reference uplink and downlink proportion configuration used for forming the constant downlink subframe set is a proportion configuration indicated by a SIB1. Specifically, the first reference uplink and downlink proportion configuration is a TDD uplink and downlink proportion configuration in the SIB1.

The first reference uplink and downlink proportion configuration may include at least one of a TDD uplink and downlink proportion configuration of downlink HARQ timing reference and a TDD uplink and downlink proportion configuration of uplink HARQ timing reference. For example, when a parameter information of the downlink SPS is configured for the UE, the first reference uplink and downlink proportion configuration may be the TDD uplink and downlink proportion configuration of the uplink HARQ timing reference, and when a parameter information of the uplink SPS is configured for the UE, the first reference uplink and downlink proportion configuration may be the TDD uplink and downlink proportion configuration of the downlink HARQ timing reference. Specifically, the processor 31 acquires the at least one first reference uplink and downlink proportion configuration, for the uplink SPS, form the constant uplink subframe set by an uplink subframe in the uplink and downlink proportion configuration of the downlink HARQ timing reference, and for the downlink SPS, form the constant downlink subframe set by a downlink subframe and a special subframe in the uplink and downlink proportion configuration of the uplink HARQ timing reference.

Optionally, the first reference uplink and downlink proportion configuration to which the UE makes reference for the uplink SPS transmission may be a preconfigured uplink and downlink proportion configuration; in this case, the first reference uplink and downlink proportion configuration may be permanently configured or preconfigured in a protocol, and the UE may not need to be notified by the eNB.

A solution 4: The processor 31 acquires an uplink and downlink proportion configuration set of the TDD frame, where the uplink and downlink proportion configuration set includes at least two uplink and downlink proportion configurations; and select, from the at least two uplink and downlink proportion configurations, an uplink and downlink proportion configuration with a minimum quantity of subframes whose uplink and downlink attributes are the same as the transmission direction of the SPS transmission, and form the constant subframe set by subframes, in the selected uplink and downlink proportion configuration, whose uplink and downlink attributes are the same as the transmission direction of the SPS transmission.

The processor 31 may acquire the uplink and downlink proportion configuration set of the TDD frame by using a broadcast message or a dedicated RRC message or another message, where the uplink and downlink proportion configuration set includes two or more uplink and downlink proportion configurations, which, for example, may be the proportion configurations {0, 1}, {1, 2, 3}, {2, 3}, or the like in the foregoing Table 1, that is, may be a combination of any two or more of the uplink and downlink proportion configurations in the foregoing Table 1, or may be an uplink and downlink proportion configuration that is not in the foregoing Table 1. Optionally, the uplink and downlink proportion configuration set of the TDD frame may be permanently configured or preconfigured in a protocol; in this case, the eNB may not need to notify the UE of the uplink and downlink proportion configuration set of the TDD frame by using a broadcast message or a dedicated RRC message or another message.

The processor 31 may select, from the acquired at least two uplink and downlink proportion configurations according to indication information of selecting an uplink and downlink proportion configuration with a minimum quantity of subframes whose uplink and downlink attributes are the same as the transmission direction of the SPS transmission, the uplink and downlink proportion configuration with the minimum quantity of subframes whose uplink and downlink attributes are the same as the transmission direction of the SPS transmission, and determine that the subframes that are the same as the transmission direction of the SPS transmission to form the constant subframe set. For the downlink SPS transmission, an uplink and downlink proportion configuration with a minimum quantity of downlink subframes is selected from the at least two uplink and downlink proportion configurations, and a downlink subframe acquired in the uplink and downlink proportion configuration forms the constant downlink subframe set. For the uplink SPS transmission, an uplink and downlink proportion configuration with a minimum quantity of uplink subframes is selected from the at least two uplink and downlink proportion configurations, and an uplink subframe acquired in the uplink and downlink proportion configuration forms the constant uplink subframe set.

The memory 32 further stores the constant subframe set in the TDD frame that is determined by the processor 31.

Optionally, the processor 31 may be further configured to acquire an SPS control instruction from subframes, in the constant subframe set, whose uplink and downlink attributes are the same as a transmission direction of the SPS control instruction, where the SPS control instruction includes one or a combination of multiple of an SPS activation instruction, an SPS instruction for newly transmitting a data block, an SPS instruction for retransmitting a data block, and an SPS release instruction. The SPS control instruction may indicate one piece of or a combination of multiple pieces of information such as a physical resource used by the UE for performing the SPS transmission, a modulation and coding scheme, and an SPS transmission moment.

The processor 31 acquires the SPS control instruction from a downlink subframe, in the constant subframe set, which can schedule the SPS transmission. Specifically, that the SPS control instruction is acquired from the subframes, in the constant subframe set, which are the same as the transmission direction of the SPS control instruction refers to that the UE receives, in the subframe, a PDCCH control instruction masked by using an SPS C-RNTI.

When the SPS control instruction is used for indicating SPS activation, the SPS control instruction is the SPS activation instruction. The processor 31 acquires the SPS activation instruction from subframes that are the same as a transmission direction of the SPS activation instruction, and then activates the subframe used for the SPS transmission. SPS activation instructions of the uplink SPS and the downlink SPS can only be both acquired from a downlink subframe.

An SPS activation instruction of each subframe can be transmitted only in a downlink sub frame that can schedule the sub frame. Generally, downlink scheduling command transmission and downlink data transmission are performed in a same subframe, that is, a downlink SPS activation instruction can activate downlink SPS transmission in a subframe that transmits the SPS activation instruction, and subsequently, the SPS transmission may be performed periodically. Using uplink as an example, the SPS activation instruction can be transmitted only in a downlink subframe that can schedule a corresponding uplink subframe, and generally, uplink scheduling command transmission is performed in K subframes before uplink data transmission, where a value of K varies with different TDD uplink and downlink proportion configurations, for example, K may be 4, 6, or the like.

In fact, for the UE, the processor 31 listens to the SPS activation instruction only at a moment at which the SPS activation instruction can be transmitted, or the UE does not listen to the SPS activation instruction at another moment, or the UE ignores the SPS activation instruction after listening to and detecting the SPS activation instruction at another moment.

For the SPS activation instruction, for a subframe that has been activated, if the SPS activation instruction is received again, the SPS activation instruction may also be considered as an SPS modification instruction.

When data transmission has been completed in a subframe, a resource allocated by using the SPS activation instruction may be released by receiving an SPS scheduling instruction, to be used for subsequent data scheduling, so as to avoid a waste of the resource. In this case, when the SPS scheduling instruction acquired by the acquiring module 31 is used for indicating SPS release, the SPS scheduling instruction may be referred to as an SPS release instruction.

Optionally, the SPS release instruction may be transmitted in a downlink subframe that can schedule a corresponding subframe.

Using uplink as an example, the SPS release instruction can be transmitted only in a downlink subframe that can schedule a corresponding uplink subframe. For example, for an SPS release command of the uplink subframe 2 for the uplink SPS in the uplink and downlink proportions {0, 1}, if K is 6, the SPS release instruction of the subframe 2 can be transmitted only in a downlink subframe 6 of a previous frame. An SPS release command of the downlink subframe 1 in the uplink and downlink proportions {0, 1} is transmitted in the downlink subframe 1, and an SPS release command of the downlink subframe 5 is transmitted in the downlink subframe 5. The rest may be deduced by analogy.

Further, optionally, the SPS release instruction may also be transmitted at an actually used moment that can schedule the SPS transmission. Specifically, an example in which the uplink and downlink proportion configuration set is {0, 1} is used. It is assumed that the constant subframe set is determined by using the foregoing manner 1, if the parameter information of the downlink SPS is configured, the SPS period is 20 ms (a length of one subframe is 1 ms), it is assumed that a moment at which the SPS transmission is activated is 0, and then moments at which the UE performs the downlink SPS transmission are 0, 20, 40, ..., and the SPS release command may be transmitted at an actually used moment that can schedule the SPS transmission, such as 20 or 40.

Optionally, because, after the constant subframe set is determined, specific subframes in which the UE can perform the SPS transmission may be determined, the SPS activation instruction may be not limited to being transmitted in the constant downlink subframe, but can be transmitted in any downlink subframe, including a constant subframe and a flexible subframe; therefore, the SPS activation instruction may indicate a subframe available next time most recently for performing the SPS transmission. In this way, before the SPS transmission is performed in the subframe available next time most recently, the eNB may send an SPS activation instruction multiple times, to improve reliability of the SPS activation instruction; in this case, if the UE has received an SPS activation instruction, when the UE receives the same SPS activation instruction again, the UE may apply any one of the SPS activation instructions. Specifically, the UE may ignore or discard the same SPS activation instruction that is received subsequently. Similarly, similar processing may also be performed on the SPS release instruction.

Optionally, the SPS transmission may include uplink or downlink SPS new data transmission, uplink or downlink SPS retransmitted data transmission, or an SPS control instruction, where the SPS control instruction may include one or a combination of multiple of an uplink or downlink SPS activation instruction, an uplink or downlink SPS instruction for newly transmitting a data block, an uplink or downlink SPS instruction for retransmitting a data block, and an uplink or downlink SPS release instruction. That is, in this embodiment of the present invention, the determined SPS transmission moment can be applied to SPS data transmission or transmission of the SPS control instruction.

Optionally, the processor 31 may be further configured to perform, in a subframe, in the constant subframe set, whose uplink and downlink attribute is the same as a transmission direction of feedback transmission corresponding to the SPS transmission, the feedback transmission corresponding to the SPS transmission.

The processor 31 performs the feedback transmission corresponding to the uplink SPS transmission in a subframe in the constant uplink subframe set, or performs the feedback transmission corresponding to the downlink SPS transmission in a subframe in the constant downlink subframe set.

The processor 31 is further configured to acquire an SPS control instruction from subframes, in the constant subframe set, whose uplink and downlink attributes are the same as a transmission direction of the SPS control instruction, where the SPS control instruction includes one or a combination of multiple of an SPS activation instruction, an SPS instruction for newly transmitting a data block, an SPS instruction for retransmitting a data block, and an SPS release instruction. The SPS control instruction may indicate one piece of or a combination of multiple pieces of information such as a physical resource used by the UE for performing the SPS transmission, a modulation and coding scheme, and an SPS transmission moment. The subframe used for acquiring the SPS control instruction is a downlink subframe, in the constant subframe set, which can schedule the SPS transmission. Specifically, that the SPS control instruction is acquired from the subframes, in the constant subframe set, which are the same as the transmission direction of the SPS control instruction refers to that the UE receives, in the subframe, a PDCCH control instruction masked by using an SPS C-RNTI. A specific implementation process is similar to that of acquiring the SPS control instruction in the foregoing implementation manner, and details are not provided herein again.

Optionally, the processor 31 may further acquire a period offset of the uplink SPS transmission; and offset a transmission period of the uplink SPS transmission according to the period offset.

The processor 31 acquires a second reference uplink and downlink proportion configuration, and determines the period offset of the uplink SPS transmission by using the second reference uplink and downlink proportion configuration and a subframe for the uplink SPS transmission.

The second reference uplink and downlink proportion configuration may be one of the uplink and downlink proportion configuration of the downlink HARQ timing reference, the uplink and downlink proportion configuration of the uplink HARQ timing reference, an uplink and downlink proportion configuration with a minimum quantity of uplink subframes in the first reference uplink and downlink proportion configuration in the parameter information configured for the UE. Specifically, for example, when the parameter information of the uplink SPS is configured for the UE, the TDD uplink and downlink proportion configuration of the downlink HARQ timing reference may be used. The second reference uplink and downlink proportion configuration may be configured by using a broadcast message or an RRC message or another message.

Optionally, the second reference uplink and downlink proportion configuration may be a preconfigured TDD uplink and downlink proportion configuration; in this case, the second reference uplink and downlink proportion configuration may be permanently configured or preconfigured in a protocol; in this case, the eNB may not need to notify the UE.

Optionally, the second reference uplink and downlink proportion configuration may be a TDD uplink and downlink proportion configuration, in the TDD uplink and downlink proportion set configured for the UE, with a minimum quantity of uplink subframes in an LTE frame. It is assumed that the TDD uplink and downlink proportion configuration set is the TDD uplink and downlink proportion configurations {0, 1} in the foregoing Table 1, as can be learned from the foregoing Table 1, a quantity of uplink subframes in the LTE radio frame in the TDD uplink and downlink proportion configuration 1 is the minimum, and the second reference uplink and downlink proportion configuration is 1.

The second reference uplink and downlink proportion configuration may be configured by using a broadcast message or a dedicated RRC message. Optionally, the second reference uplink and downlink proportion configuration may be permanently configured or preconfigured in a protocol; in this case, the eNB may not need to notify the UE.

Optionally, in this implementation manner, the acquiring, by the processor 31, a period offset of the uplink SPS transmission may further specifically be obtaining by acquiring specific information of the offset, for example, that which specific subframe or which specific subframes uses/use information about which offset or information about which offsets is configured by using a broadcast message or a dedicated RRC message. The UE may perform period offsetting according to this configuration information. Optionally, the specific information may be permanently configured or preconfigured in a protocol; in this case, the eNB may not need to notify the UE.

The processor 31 acquires the second reference uplink and downlink proportion configuration, and with reference to Table 2, an SPS period offset of an uplink subframe in the uplink and downlink proportion configuration may be learned. For example, the second reference uplink and downlink proportion configuration acquired by the processor 31 is 1, as can be learned from the foregoing Table 2, a period offset of uplink SPS transmission of the subframe 2 is 1. Alternatively, the acquired second reference uplink and downlink proportion configuration is 3, as can be learned from the foregoing Table 2, a period offset of uplink SPS transmission of the subframe 4 is -2. Herein, the second reference uplink and downlink proportion configuration may be the same as or may be different from the first reference uplink and downlink proportion configuration mentioned in the foregoing implementation manner.

The processor 31 may calculate, according to the offset and the foregoing formula 1, a specific moment of the uplink SPS transmission for which the transmission period is offset, and perform new data transmission at the calculated specific moment.

For example, it is assumed that the second reference uplink and downlink proportion configuration is 1, a period C of the uplink SPS is 10 ms, a time Q at which the uplink SPS transmission is activated is the sub frame 3, it starts from the $0^{th}$ radio frame by default, that is, S is 0, and an offset V of the subframe 3 in the TDD uplink and downlink proportion configuration 1 is -1, according to the foregoing formula 1, it may be calculated that, for the SPS transmission, starting from the activation time, times at which all transmissions are performed are: 3, 12, 23, 32, .... While, times at which retransmitted data that appears after all transmission failures is sent are separately: 13, 22, 33, 42, .... In this way, a conflict between the retransmitted data and newly transmitted data is avoided in a same TTI.

In this way, an SPS period offset of an uplink subframe can be determined by using a constant second reference uplink and downlink proportion configuration, and a transmission period of an uplink SPS transmission is offset according to the SPS period offset. Therefore, a conflict between SPS new data transmission and data retransmission can be effectively avoided in a same TTI.

The methods disclosed in the implementation manners of this application may be applied to the processor 31 or implemented by the processor 31. In an implementation process, the steps of the foregoing methods can be completed by using an integrated logical circuit of hardware or an instruction in a software form in the processor 31. The methods, steps, and logical block diagrams disclosed in the embodiments of the present invention may be implemented or performed. With reference to the methods disclosed in the implementation manners of this application, steps may be represented directly as being implemented by a hardware decoding processor, or implemented by a combination of hardware and software modules in a decoding processor. The software module may be located in a storage medium mature in the art, such as a random access memory, a flash memory, a read-only memory, a programmable read-only memory, an electrically erasable programmable memory, or a register. The storage medium is located in the memory 32, and the processor 31 reads information in the memory 32 and completes the steps of the foregoing methods in combination with hardware thereof.

The user equipment provided by this implementation manner of this application determines a constant subframe set, where an uplink and downlink attribute of each subframe in the constant subframe set remains unchanged when an uplink and downlink proportion configuration of a TDD frame dynamically changes; and performs SPS transmission in a subframe, in the constant subframe set, whose uplink and downlink attribute is the same as a transmission direction of the SPS transmission. In this way, SPS can be normally performed when a TDD uplink and downlink proportion is dynamically configured, thereby improving performance of the SPS, and reducing complexity of performing the SPS by UE.

This application further provides an implementation manner of a base station. Referring to FIG. 14, FIG. 14 is a schematic structural diagram of an implementation manner of a base station according to this application. The base station 400 in this implementation manner includes a configuration module 41 and a notification module 42.

The configuration module 41 is configured to configure, for a UE, parameter information that can determine a constant subframe set, where an uplink and downlink attribute of each subframe in the constant subframe set remains unchanged when an uplink and downlink proportion configuration of a TDD frame dynamically changes.

The parameter information configured by the configuration module 41 for the UE includes indication information and further includes at least one or more of parameters such as a possible TDD uplink and downlink proportion configuration set, a TDD uplink and downlink proportion configuration of downlink HARQ timing reference, a period of a change of a TDD uplink and downlink proportion configuration, and a moment at which a TDD uplink and downlink proportion configuration change command is sent. The indication information is used for instructing the UE to use which manner to determine the constant subframe set in the TDD frame. This implementation manner provides the following several possible cases for the indication information notified by the base station to the UE:

For example, the indication information notified by the base station to the UE is determining the constant subframe set by using a configured TDD uplink and downlink proportion configuration set. By acquiring the TDD uplink and downlink proportion configuration set, the UE forms a constant uplink subframe set by subframes that are all uplink subframes when the uplink and downlink proportion configuration of the TDD frame dynamically changes, and forms a constant downlink subframe set by subframes that are all downlink subframes when the uplink and downlink proportion configuration of the TDD frame dynamically changes.

For example, the indication information notified by the base station to the UE is using a constant subframe set directly specified by the configured indication information. The base station determines the constant subframe set or one or more subsets of the constant subframe set according to the TDD uplink and downlink proportion configuration set configured for the UE. A subframe in the constant subframe set is directly specified by using the indication information. For example, it is assumed that the TDD uplink and downlink proportion configuration set configured for the UE is {0, 1}, subframes {0, 1, 5, 6} in an LTE radio frame are downlink subframes or special subframes, that is, a constant downlink subframe set, and {2, 3, 7, 8} are uplink subframes, that is, a constant uplink subframe set. In this case, if a downlink SPS configuration parameter is configured for the UE, the base station may directly specify by using the indication information that the constant subframe set may be a set formed by one or more subframes in {0, 1, 5, 6}, for example, {0, 1} or {1, 5, 6}, and if an uplink SPS configuration parameter is configured for the UE, the base station may directly specify by using the indication information that the constant subframe set may be a set formed by one or more subframes in {2, 3, 7, 8}, for example, {2, 3} or {7, 8}.

For example, the indication information notified by the base station to the UE is determining the constant subframe set by using a reference TDD uplink and downlink proportion configuration; in this case, at the same time when the base station notifies the indication information to the UE, the base station may further configure at least one reference TDD uplink and downlink proportion configuration for the UE. The UE determines the constant subframe set by using the reference TDD uplink and downlink proportion configuration. Uplink SPS and downlink SPS may separately use different reference TDD uplink and downlink proportion configurations, or may use a same reference TDD uplink and downlink proportion configuration. For the uplink SPS, the constant uplink subframe set may be formed by using an uplink subframe in the reference TDD uplink and downlink proportion configuration, and for the downlink SPS, the constant downlink subframe set may be formed by using a downlink subframe in the reference TDD uplink and downlink proportion configuration.

The reference TDD uplink and downlink proportion configuration may include at least one of the uplink and downlink proportion configuration of the downlink HARQ timing reference and the uplink and downlink proportion configuration of the uplink HARQ timing reference. When parameter information of the uplink SPS is configured for the UE, the uplink and downlink proportion configuration of the downlink HARQ timing reference is used, and when parameter information of the downlink SPS is configured for the UE, the uplink and downlink proportion configuration of the uplink HARQ timing reference is used.

For example, what is notified by the base station to the UE is determining the constant subframe set by using an uplink and downlink proportion configuration, in the configured TDD uplink and downlink proportion configuration set, with a minimum quantity of subframes whose uplink and downlink attributes are the same as a transmission direction of SPS transmission. In this case, the base station may configure a TDD uplink and downlink proportion configuration set for the UE, so that the UE finds, according to the TDD uplink and downlink proportion configuration set, a TDD uplink and downlink proportion configuration with a minimum quantity of subframes whose uplink and downlink attributes are the same as the transmission direction of the SPS transmission.

The notification module 42 notifies the parameter information configured for the UE to the UE, and the notification module 42 may notify the UE by using a system broadcast message, or may notify the UE by using a dedicated RRC message such as an RRC reconfiguration message or another message, or a combination of the two. That is, the UE is notified of a part of the parameter information the UE by using a system broadcast message, and the UE is notified of the other part of the parameter information the UE by using a dedicated RRC message such as an RRC reconfiguration message or another message. When the UE is notified of a part of all of the parameter information by using a dedicated RRC message, the UE may send an RRC completion message to the base station.

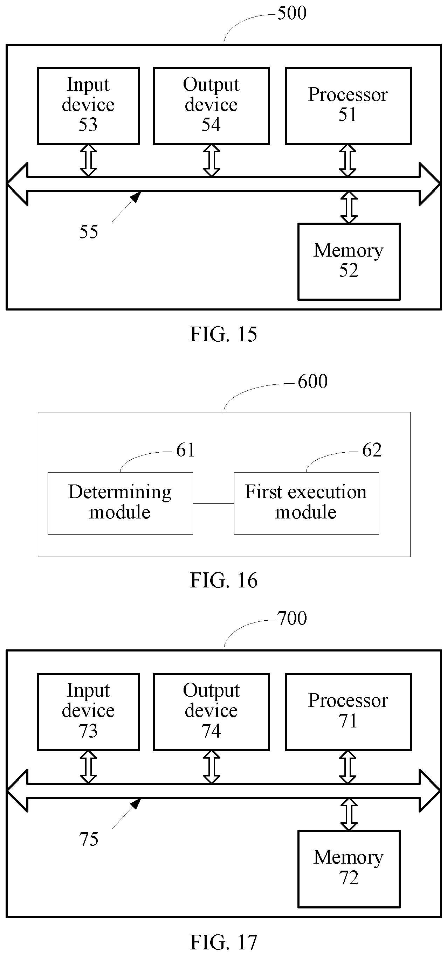

Referring to FIG. 15, FIG. 15 is a schematic structural diagram of a second implementation manner of a base station according to this application. The base station 500 in this implementation manner includes a processor 51, a memory 52, an input device 53, an output device 54, and a bus system 55.

The processor 51 controls an operation of the base station 500, and the processor 51 may be further referred to as a CPU (Central Processing Unit, central processing unit). The processor 51 may be an integrated circuit chip, and has a signal processing capability. The processor 51 may further be a general processor, a digital signal processor (DSP), an application specific integrated circuit (ASIC), a field programmable gate array (FPGA), another programmable logical device, a discrete gate, a transistor logical device, or a discrete hardware component. The general processor may be a microprocessor, or the processor may be any conventional processor.

The memory 52 may include a read-only memory and a random access memory, and provides an instruction and data to the processor 51. A part of the memory 52 may further include a non-volatile random access memory (NVRAM).

In addition, components of the base station 500 are coupled together by using the bus system 55, and besides including a data bus, the bus system 55 further includes a power bus, a control bus, and a state signal bus. However, for clear description, various buses are marked as the bus system 55 in the figure.

The memory 52 stores the following elements, executable modules or data structures, or a subset thereof, or an extension set thereof:

operation instructions: including various operation instructions, configured to implement various operations; and an operating system: including various system programs, configured to implement various fundamental services and process a hardware-based task.

In this embodiment of the present invention, the processor 51 performs the following operations by invoking an operation instruction (the operation instruction may be stored in an operating system) stored in the memory 52:

The processor 51 configures, for a UE, parameter information that can determine a constant subframe set and notify the parameter information to the UE, where an uplink and downlink attribute of each subframe in the constant subframe set remains unchanged when an uplink and downlink proportion configuration of a TDD frame dynamically changes.

The parameter information configured by the processor 51 for the UE includes indication information and further includes at least one or more of parameters such as a possible TDD uplink and downlink proportion configuration set, a TDD uplink and downlink proportion configuration of downlink HARQ timing reference, a period of a change of a TDD uplink and downlink proportion configuration, and a moment at which a TDD uplink and downlink proportion configuration change command is sent. The indication information is used for instructing the UE to use which manner to determine the constant subframe set in the TDD frame. This implementation manner provides the following several possible cases for the indication information notified by the base station to the UE:

For example, the indication information notified by the base station to the UE is determining the constant subframe set by using a configured TDD uplink and downlink proportion configuration set. By acquiring the TDD uplink and downlink proportion configuration set, the UE forms a constant uplink subframe set by subframes that are all uplink subframes when the uplink and downlink proportion configuration of the TDD frame dynamically changes, and forms a constant downlink subframe set by subframes that are all downlink subframes when the uplink and downlink proportion configuration of the TDD frame dynamically changes.

For example, the indication information notified by the base station to the UE is using a constant subframe set directly specified by the configured indication information. The base station determines the constant subframe set or one or more subsets of the constant subframe set according to the TDD uplink and downlink proportion configuration set configured for the UE. A subframe in the constant subframe set is directly specified by using the indication information.

For example, the indication information notified by the base station to the UE is determining the constant subframe set by using a reference TDD uplink and downlink proportion configuration; in this case, at the same time when the base station notifies the indication information to the UE, the base station may further configure at least one reference TDD uplink and downlink proportion configuration for the UE. The UE determines the constant subframe set by using the reference TDD uplink and downlink proportion configuration. Uplink SPS and downlink SPS may separately use different reference TDD uplink and downlink proportion configurations, or may use a same reference TDD uplink and downlink proportion configuration. For the uplink SPS, the constant uplink subframe set may be formed by using an uplink subframe in the reference TDD uplink and downlink proportion configuration, and for the downlink SPS, the constant downlink subframe set may be formed by using a downlink subframe in the reference TDD uplink and downlink proportion configuration.

For example, what is notified by the base station to the UE is determining the constant subframe set by using an uplink and downlink proportion configuration, in the configured TDD uplink and downlink proportion configuration set, with a minimum quantity of subframes whose uplink and downlink attributes are the same as a transmission direction of SPS transmission. In this case, the base station may configure a TDD uplink and downlink proportion configuration set for the UE, so that the UE finds, according to the TDD uplink and downlink proportion configuration set, a TDD uplink and downlink proportion configuration with a minimum quantity of subframes whose uplink and downlink attributes are the same as the transmission direction of the SPS transmission.

The processor 51 may notify the UE by using a system broadcast message, or may notify the UE by using a dedicated RRC message such as an RRC reconfiguration message or another message, or a combination of the two. That is, the UE is notified of a part of the parameter information by using a system broadcast message, and the UE is notified of the other part of the parameter information by using a dedicated RRC message such as an RRC reconfiguration message or another message. When the UE is notified of a part of all of the parameter information by using a dedicated RRC message, the UE may send an RRC completion message to the base station.

The methods disclosed in the implementation manners of this application may be applied to the processor 51 or implemented by the processor 51. In an implementation process, the steps of the foregoing methods can be completed by using an integrated logical circuit of hardware or an instruction in a software form in the processor 51. The methods, steps, and logical block diagrams disclosed in the embodiments of the present invention may be implemented or performed. With reference to the methods disclosed in the implementation manners of this application, steps may be represented directly as being implemented by a hardware decoding processor, or implemented by a combination of hardware and software modules in a decoding processor. The software module may be located in a storage medium mature in the art, such as a random access memory, a flash memory, a read-only memory, a programmable read-only memory, an electrically erasable programmable memory, or a register. The storage medium is located in the memory 52, and the processor 51 reads information in the memory 52 and completes the steps of the foregoing methods in combination with hardware thereof.

Referring to FIG. 16, FIG. 16 is a schematic structural diagram of a fourth implementation manner of user equipment according to this application. The user equipment 600 in this implementation manner includes a judging module 61 and a transmission control module 62.

The judging module 61 is configured to: when an uplink and downlink proportion configuration of a TDD frame dynamically changes, determine whether an uplink and downlink attribute of an SPS available subframe for performing SPS transmission changes.

When the uplink and downlink proportion configuration of the TDD frame dynamically changes, the judging module 61 determines whether the uplink and downlink attribute of the SPS available subframe for performing the SPS transmission also changes. For example, a TDD uplink and downlink proportion configuration dynamically changes in {0, 1}, when the TDD uplink and downlink proportion configuration changes from 0 to 1, subframes {0, 1, 5, 6} are all downlink subframes, and subframes {2, 3, 7, 8} are all uplink subframes, while a subframe 4 that is an uplink subframe when the TDD uplink and downlink proportion configuration is 0 changes to a downlink subframe when the uplink and downlink proportion configuration is 1, and a subframe 9 that is an uplink subframe when the TDD uplink and downlink proportion configuration is 0 changes to a downlink subframe when the uplink and downlink proportion configuration is 1. Therefore, when the TDD uplink and downlink proportion changes from 0 to 1, uplink and downlink attributes of the subframes {0, 1, 5, 6} and the subframes {2, 3, 7, 8} remain unchanged, and uplink and downlink attributes of the subframes {4, 9} change. A determining result is output to the transmission control module 62.

The transmission control module 62 ignores the SPS transmission when the judging module 61 determines that the uplink and downlink attribute changes.

When the judging module 61 determines that the uplink and downlink attribute of the SPS available subframe for performing the SPS transmission changes, the transmission control module 62 ignores the SPS transmission in the subframe whose uplink and downlink attribute changes.

As an exemplary implementation manner, the judging module 61 of the user equipment in this implementation manner may be further configured to determine whether the ignored SPS transmission is SPS new data transmission. A determining result is output to the transmission control module 62.

The transmission control module 62 is further configured to: when the judging module 61 determines that the SPS transmission is SPS new data transmission, make a response to a subsequent scheduling instruction to perform the ignored SPS new data transmission again.

As another exemplary implementation manner, the transmission control module 62 of the user equipment in this implementation manner may be further configured to delay the SPS transmission to the $W^{th}$ SPS available subframe after the SPS available subframe whose uplink and downlink attribute changes, or advance the SPS transmission to the $M^{th}$ SPS available subframe before the SPS available subframe whose uplink and downlink attribute changes, where W and M are both natural numbers.

W and M may be configured by using an RRC message, or preconfigured in advance, for example, W=1 refers to that the UE delays a moment of the ignored SPS transmission to a next available moment. For example, if a moment of uplink SPS transmission changes to downlink, the UE delays the moment of the SPS transmission to a next uplink moment. For example, M=1 refers to that the UE advances the moment of the ignored SPS transmission to a next available moment.

For example, it is assumed that a TDD uplink and downlink proportion configuration set of the UE is {0, 1}, and in the configuration 0, uplink SPS transmission of the UE is performed in the subframe 4, when the configuration changes to 1, a transmission direction of the subframe 4 changes to downlink, the UE may ignore the uplink SPS transmission, the UE may delay the ignored SPS transmission to the next uplink subframe 7 (when W=1), or advance the ignored SPS transmission to the previous uplink subframe 3 (M=1). Downlink is similar to this, and details are not provided again.

The user equipment provided by this implementation manner determines, when an uplink and downlink proportion configuration of a TDD frame dynamically changes, whether an uplink and downlink attribute of an SPS available subframe for performing SPS transmission changes; and when the uplink and downlink attribute changes, ignores the SPS transmission in the subframe whose uplink and downlink attribute changes. In this way, a processing manner for SPS data transmission is provided when uplink and downlink attributes of some available subframes for performing the SPS transmission change because a TDD uplink and downlink proportion configuration changes.

In addition, the user equipment provided by this implementation manner may further process the ignored SPS transmission, that is, when the ignored SPS transmission is SPS new data transmission, further make a response to a subsequent scheduling instruction to perform the ignored SPS transmission again, thereby ensuring a data loss in the ignored SPS new data transmission.

Further, the user equipment provided by this implementation manner may further delay the ignored SPS transmission to an available subframe in the rear or advance the ignored SPS transmission to an available subframe in the front for transmission. In this way, a data loss caused by a change of an uplink and downlink attribute of a subframe can be effectively avoided, and performance and reliability of the SPS transmission are improved.

Referring to FIG. 17, FIG. 17 is a schematic structural diagram of a fifth implementation manner of user equipment according to this application. The user equipment 700 in this implementation manner includes a processor 71, a memory 72, an input device 73, an output device 74, and a bus system 75.

The processor 71 controls an operation of the user equipment 700, and the processor 71 may be further referred to as a CPU (Central Processing Unit, central processing unit). The processor 71 may be an integrated circuit chip, and has a signal processing capability. The processor 71 may further be a general processor, a digital signal processor (DSP), an application specific integrated circuit (ASIC), a field programmable gate array (FPGA), another programmable logical device, a discrete gate, a transistor logical device, or a discrete hardware component. The general processor may be a microprocessor, or the processor may be any conventional processor.

The memory 72 may include a read-only memory and a random access memory, and provides an instruction and data to the processor 71. A part of the memory 72 may further include a non-volatile random access memory (NVRAM).

In addition, components of the user equipment 700 are coupled together by using the bus system 75, and besides including a data bus, the bus system 75 further includes a power bus, a control bus, and a state signal bus. However, for clear description, various buses are marked as the bus system 75 in the figure.

The memory 72 stores the following elements, executable modules or data structures, or a subset thereof, or an extension set thereof:

> operation instructions: including various operation instructions, configured to implement various operations; and
> an operating system: including various system programs, configured to implement various fundamental services and process a hardware-based task.

In this embodiment of the present invention, the processor 71 performs the following operations by invoking an operation instruction (the operation instruction may be stored in an operating system) stored in the memory 72:

The processor 71 is configured to: when an uplink and downlink proportion configuration of a TDD frame dynamically changes, determine whether an uplink and downlink attribute of an SPS available subframe for performing SPS transmission changes; and ignore the SPS transmission when the uplink and downlink attribute changes.

When the uplink and downlink proportion configuration of the TDD frame dynamically changes, the processor 71 determines whether the uplink and downlink attribute of the SPS available subframe for performing the SPS transmission also changes. For example, a TDD uplink and downlink proportion configuration dynamically changes in {0, 1}, when the TDD uplink and downlink proportion configuration changes from 0 to 1, subframes {0, 1, 5, 6} are all downlink subframes, and subframes {2, 3, 7, 8} are all uplink subframes, while a subframe 4 that is an uplink subframe when the TDD uplink and downlink proportion configuration is 0 changes to a downlink subframe, and a subframe 9 that is an uplink subframe when the TDD uplink and downlink proportion configuration is 0 changes to a downlink subframe. Therefore, when the TDD uplink and downlink proportion changes from 0 to 1, uplink and downlink attributes of the subframes {0, 1, 5, 6} and the subframes {2, 3, 7, 8} remain unchanged, and uplink and downlink attributes of the subframes {4, 9} change.

When determining that the uplink and downlink attribute of the SPS available subframe for performing the SPS transmission changes, the processor 71 ignores the SPS transmission in the subframe whose uplink and downlink attribute changes.

As an exemplary implementation manner, the processor 71 in this implementation manner may further determine whether the ignored SPS transmission is SPS new data transmission, and when the ignored SPS transmission is SPS new data transmission, make a response to a subsequent scheduling instruction to perform the ignored SPS new data transmission again.

As another exemplary implementation manner, the processor 71 in this implementation manner may be further configured to delay the SPS transmission to the $W^{th}$ SPS available subframe after the SPS available subframe whose uplink and downlink attribute changes, or advance the SPS transmission to the $M^{th}$ SPS available subframe before the SPS available subframe whose uplink and downlink attribute changes, where W and M are both natural numbers.

W and M may be configured by using an RRC message, or preconfigured in advance, for example, W=1 refers to that the UE delays a moment of the ignored SPS transmission to a next available moment. For example, if a moment of uplink SPS transmission changes to downlink, the UE delays the moment of the SPS transmission to a next uplink moment. For example, M=1 refers to that the UE advances the moment of the ignored SPS transmission to a next available moment.

For example, it is assumed that a TDD uplink and downlink proportion configuration set of the UE is {0, 1}, and in the configuration 0, uplink SPS transmission of the UE is performed in the subframe 4, when the configuration changes to 1, a transmission direction of the subframe 4 changes to downlink, the UE may ignore the uplink SPS transmission, the UE may delay the ignored SPS transmission to the next uplink subframe 7 (when W=1), or advance the ignored SPS transmission to the previous uplink subframe 3 (M=1). Downlink is similar to this, and details are not provided again.

The methods disclosed in the implementation manners of this application may be applied to the processor 71 or implemented by the processor 71. In an implementation process, the steps of the foregoing methods can be completed by using an integrated logical circuit of hardware or an instruction in a software form in the processor 71. The methods, steps, and logical block diagrams disclosed in the embodiments of the present invention may be implemented or performed. With reference to the methods disclosed in the implementation manners of this application, steps may be represented directly as being implemented by a hardware decoding processor, or implemented by a combination of hardware and software modules in a decoding processor. The software module may be located in a storage medium mature in the art, such as a random access memory, a flash memory, a read-only memory, a programmable read-only memory, an electrically erasable programmable memory, or a register. The storage medium is located in the memory 72, and the processor 71 reads information in the memory 72 and completes the steps of the foregoing methods in combination with hardware thereof.

The user equipment provided by this implementation manner determines, when an uplink and downlink proportion configuration of a TDD frame dynamically changes, whether an uplink and downlink attribute of an SPS available subframe for performing SPS transmission changes; and when the uplink and downlink attribute changes, ignores the SPS transmission in the subframe whose uplink and downlink attribute changes. In this way, a processing manner for SPS data transmission is provided when uplink and downlink attributes of some available subframes for performing the SPS transmission change because a TDD uplink and downlink proportion configuration changes.

In addition, the user equipment provided by this implementation manner may further process the ignored SPS transmission, that is, when the ignored SPS transmission is SPS new data transmission, further make a response to a subsequent scheduling instruction to perform the ignored SPS transmission again, thereby ensuring a data loss in the ignored SPS new data transmission.

Further, the user equipment provided by this implementation manner may further delay the ignored SPS transmission to an available subframe in the rear or advance the ignored SPS transmission to an available subframe in the front for transmission. In this way, a data loss caused by a change of an uplink and downlink attribute of a subframe can be effectively avoided, and performance and reliability of the SPS transmission are improved.

According to the semi-persistent scheduling method and the user equipment that are provided by the implementation manners, a constant subframe set is determined, where an uplink and downlink attribute of each subframe in the constant subframe set remains unchanged when an uplink and downlink proportion configuration of a TDD frame dynamically changes; and SPS transmission is performed in a subframe, in the constant subframe set, whose uplink and downlink attribute is the same as a transmission direction of the SPS transmission. In this way, SPS can be normally performed when a TDD uplink and downlink proportion is dynamically configured, thereby improving performance of the SPS, and reducing complexity of performing the SPS by UE.

In the several implementation manners provided by this application, it should be understood that the disclosed system, apparatus, and method may be implemented in other manners. For example, the described implementation manner of the apparatus is merely exemplary. For example, the module or unit division is merely a logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual needs to achieve the objectives of the solutions of the implementation manners.

In addition, functional units in the implementation manners of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the implementation manners of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely implementation manners of this application but are not intended to limit the patent scope of this application. An equivalent structural or equivalent process alternation made by using the content of the specification and the accompanying drawings of this application for direct or indirect use in other relevant technical fields shall also be encompassed in the patent protection scope of this application.

**Claims**

1. A semi-persistent scheduling method, wherein the semi-persistent scheduling method comprises:

    determining (S101) a constant subframe set in a Time Division Duplex, TDD, frame, wherein an uplink and downlink attribute of each subframe in the constant subframe set remains unchanged when an uplink and downlink proportion configuration of the TDD frame dynamically changes; and
    performing (S102) Semi-Persistent Scheduling, SPS, transmission in a subframe, in the constant subframe set, whose uplink and downlink attribute is the same as a transmission direction of the SPS transmission; characterized in that
    the constant subframe set is at least one of a constant uplink subframe set and a constant downlink subframe set, wherein subframes in the constant uplink subframe set are all uplink subframes when the uplink and downlink proportion configuration of the TDD frame dynamically changes, and subframes in the constant downlink subframe set are all downlink subframes when the uplink and downlink proportion configuration of the TDD frame dynamically changes; and
    the step of performing SPS transmission in a subframe, in the constant subframe set, whose uplink and downlink attribute is the same as a transmission direction of the SPS transmission further comprises:
    performing uplink SPS transmission in the constant uplink subframe set, or performing downlink SPS transmission in the constant downlink subframe set.

2. The semi-persistent scheduling method according to claim 1, wherein the step of the forming the constant subframe set by subframes with a specific attribute in the first reference uplink and downlink proportion configuration further comprises:
    forming the constant uplink subframe set by an uplink subframe in the first reference uplink and downlink proportion configuration, and forming the constant downlink subframe set by a downlink subframe and a special subframe in the first reference uplink and downlink proportion configuration.

3. The semi-persistent scheduling method according to claim 2, wherein the first reference uplink and downlink proportion configuration used for forming the constant downlink subframe set is a proportion configuration indicated by a first system information block.

4. The semi-persistent scheduling method according to claim 2 or 3, wherein the first reference uplink and downlink proportion configuration comprises at least one of an uplink and downlink proportion configuration of downlink HARQ timing reference and an uplink and downlink proportion configuration of uplink HARQ timing reference, wherein the constant uplink subframe set is formed by an uplink subframe in the uplink and downlink proportion configuration of the downlink HARQ timing reference, and the constant downlink subframe set is formed by a downlink subframe and a special subframe in the uplink and downlink proportion configuration of the uplink HARQ timing reference.

5. The semi-persistent scheduling method according to any one of claims 1 to 4, wherein the uplink and downlink proportion configuration set of the TDD frame is acquired by using at least one of a system broadcast message and a dedicated, Radio Resource Control, RRC message.

6. The semi-persistent scheduling method according to any one of claims 1 to 5, wherein the semi-persistent scheduling method further comprises:
    acquiring an SPS control instruction from subframes, in the constant subframe set, whose uplink and downlink attributes are the same as a transmission direction of the SPS control instruction, wherein the SPS control instruction comprises one or a combination of multiple of an SPS activation instruction, an SPS instruction for newly transmitting a data block, an SPS instruction for retransmitting a data block, and an SPS release instruction.

7. The semi-persistent scheduling method according to any one of claims 1 to 6, wherein the step of the performing SPS transmission in a subframe in the constant subframe set comprises:

acquiring a period offset of the uplink SPS transmission; and
offsetting a transmission period of the uplink SPS transmission according to the period offset.

8. The semi-persistent scheduling method according to claim 7, wherein the step of the acquiring a period offset of the uplink SPS transmission specifically comprises:
acquiring a second reference uplink and downlink proportion configuration, and determining the period offset of the uplink SPS transmission by using the second reference uplink and downlink proportion configuration and a subframe for the uplink SPS transmission.

9. The semi-persistent scheduling method according to claim 8, wherein the second reference uplink and downlink proportion configuration is one of the uplink and downlink proportion configuration of the downlink HARQ timing reference, the uplink and downlink proportion configuration of the uplink HARQ timing reference, and an uplink and downlink proportion configuration, in the first reference uplink and downlink proportion configuration, with a minimum quantity of uplink subframes.

10. User equipment (100), wherein the user equipment comprises a determining module (11) and a first execution module (12), wherein
the determining module is configured to determine a constant subframe set in a TDD frame, wherein an uplink and downlink attribute of each subframe in the constant subframe set remains unchanged when an uplink and downlink proportion configuration of the TDD frame dynamically changes; and
the first execution module is configured to perform SPS transmission in a subframe, in the constant subframe set determined by the determining module, whose uplink and downlink attribute is the same as a transmission direction of the SPS transmission; **characterized in that**
the constant subframe set is at least one of a constant uplink subframe set and a constant downlink subframe set, wherein subframes in the constant uplink subframe set are all uplink subframes when the uplink and downlink proportion configuration of the TDD frame dynamically changes, and subframes in the constant downlink subframe set are all downlink subframes when the uplink and downlink proportion configuration of the TDD frame dynamically changes; and the first execution module is configured to perform uplink SPS transmission in the constant uplink subframe set, or perform downlink SPS transmission in the constant downlink subframe set.

11. The user equipment according to claim 10, wherein the determining module is configured to acquire the at least one first reference uplink and downlink proportion configuration; and form the constant uplink subframe set by an uplink subframe in the first reference uplink and downlink proportion configuration, and form the constant downlink subframe set by a downlink subframe and a special subframe in the first reference uplink and downlink proportion configuration.

12. The user equipment according to claim 10 or 11, wherein the first reference uplink and downlink proportion configuration used for forming the constant downlink subframe set is a proportion configuration indicated by a first system information block.

13. The user equipment according to claim 10 or 12, wherein the first reference uplink and downlink proportion configuration comprises at least one of an uplink and downlink proportion configuration of downlink HARQ timing reference and an uplink and downlink proportion configuration of uplink HARQ timing reference; and the determining module is configured to acquire the at least one first reference uplink and downlink proportion configuration, wherein the constant uplink subframe set is formed by an uplink subframe in the uplink and downlink proportion configuration of the downlink HARQ timing reference, and the constant downlink subframe set is formed by a downlink subframe and a special subframe in the uplink and downlink proportion configuration of the uplink HARQ timing reference.

14. The user equipment according to any one of claims 10 to 13, wherein the determining module is configured to acquire the uplink and downlink proportion configuration set of the TDD frame by using at least one of a system broadcast message and a dedicated RRC message.

15. The user equipment according to any one of claims 10 to 14, wherein the user equipment further comprises an acquiring module, wherein the acquiring module is configured to acquire an SPS control instruction from subframes, in the constant subframe set determined by the determining module, whose uplink and downlink attributes are the same as a transmission direction of the SPS control instruction, wherein the transmission control instruction comprises one or a combination of multiple of an SPS activation instruction, an SPS instruction for newly transmitting a data block, an SPS instruction for retransmitting a data block, and an SPS release instruction.

16. The user equipment according to any one of claims 10 to 15, wherein the first execution module is configured to acquire a period offset of the uplink SPS transmission; and offset a transmission period of the uplink SPS transmission according to the period offset.

17. The user equipment according to claim 16, wherein the first execution module is configured to acquire a second reference uplink and downlink proportion configuration, and determine the period offset of the uplink SPS transmission by using the second reference uplink and downlink proportion configuration and a subframe for the uplink SPS transmission.

18. The user equipment according to claim 17, wherein the second reference uplink and downlink proportion configuration is one of the uplink and downlink proportion configuration of the downlink HARQ timing reference, the uplink and downlink proportion configuration of the uplink HARQ timing reference, and an uplink and downlink proportion configuration, in the first reference uplink and downlink proportion configuration, with a minimum quantity of uplink subframes.

## Patentansprüche

1. Verfahren für semipersistente Planung, wobei das Verfahren für semipersistente Planung umfasst:

Ermitteln (S101) eines konstanten Subrahmensatzes in einem Zeitduplex-Rahmen, TDD-Rahmen, wobei ein Aufwärtsstrecken- und Abwärtsstreckenattribut jedes Subrahmens im konstanten Subrahmensatz unverändert bleibt, wenn sich eine Konfiguration des Aufwärtsstrecken- und Abwärtsstreckenverhältnisses des TDD-Rahmens dynamisch ändert; und
Durchführen (S102) einer semipersistenten Planungssendung, SPS-Sendung, in einem Subrahmen im konstanten Subrahmensatz, dessen Aufwärtsstrecken- und Abwärtsstreckenattribut einer Senderichtung der SPS-Sendung gleicht; **dadurch gekennzeichnet, dass**
der konstante Subrahmensatz ein konstanter Aufwärtsstrecken-Subrahmensatz und/oder ein konstanter Abwärtsstrecken-Subrahmensatz ist, wobei Subrahmen im konstanten Aufwärtsstrecken-Subrahmensatz alle Aufwärtsstrecken-Subrahmen sind, wenn sich die Konfiguration des Aufwärtsstrecken- und Abwärtsstreckenverhältnisses des TDD-Rahmens dynamisch ändert, und Subrahmen im konstanten Abwärtsstrecken-Subrahmensatz alle Abwärtsstrecken-Subrahmen sind, wenn sich die Konfiguration des Aufwärtsstrecken- und Abwärtsstreckenverhältnisses des TDD-Rahmens dynamisch ändert; und
der Schritt zum Durchführen der SPS-Sendung in einem Subrahmen im konstanten Subrahmensatz, dessen Aufwärtsstrecken- und Abwärtsstreckenattribut einer Senderichtung der SPS-Sendung gleicht, ferner umfasst:
Durchführen einer Aufwärtsstrecken-SPS-Sendung im konstanten Aufwärtsstrecken-Subrahmensatz oder Durchführen einer Abwärtsstrecken-SPS-Sendung im konstanten Abwärtsstrecken-Subrahmensatz.

2. Verfahren für semipersistente Planung nach Anspruch 1, wobei der Schritt zum Bilden des konstanten Subrahmensatzes durch Subrahmen mit einem bestimmten Attribut in der ersten Referenzkonfiguration des Aufwärtsstrecken- und Abwärtsstreckenverhältnisses ferner umfasst:
Bilden des konstanten Aufwärtsstrecken-Subrahmensatzes durch einen Aufwärtsstrecken-Subrahmen in der ersten Referenzkonfiguration des Aufwärtsstrecken- und Abwärtsstreckenverhältnisses und Bilden des konstanten Abwärtsstrecken-Subrahmensatzes durch einen Abwärtsstrecken-Subrahmen und einen Sondersubrahmen in der ersten Referenzkonfiguration des Aufwärtsstrecken- und Abwärtsstreckenverhältnisses.

3. Verfahren für semipersistente Planung nach Anspruch 2, wobei die erste Referenzkonfiguration des Aufwärtsstrecken- und Abwärtsstreckenverhältnisses, die zum Bilden des konstanten Abwärtsstrecken-Subrahmensatzes verwendet wird, eine Verhältniskonfiguration ist, die durch einen ersten Systeminformationsblock angezeigt wird.

4. Verfahren für semipersistente Planung nach Anspruch 2 oder 3, wobei die erste Referenzkonfiguration des Aufwärtsstrecken- und Abwärtsstreckenverhältnisses eine Konfiguration des Aufwärtsstrecken- und Abwärtsstreckenverhältnisses einer Abwärtsstrecken-"HARQ"-Zeitgebungsreferenz und/oder eine Konfiguration des Aufwärtsstrecken- und Abwärtsstreckenverhältnisses einer Aufwärtsstrecken-"HARQ"-Zeitgebungsreferenz umfasst, wobei der konstante Aufwärtsstrecken-Subrahmensatz durch einen Aufwärtsstrecken-Subrahmen in der Konfiguration des

EP 3 038 398 B1

Aufwärtsstrecken- und Abwärtsstreckenverhältnisses der Abwärtsstrecken-"HARQ"-Zeitgebungsreferenz gebildet ist und der konstante Abwärtsstrecken-Subrahmensatz durch einen Abwärtsstrecken-Subrahmen und einen Sondersubrahmen in der Konfiguration des Aufwärtsstrecken- und Abwärtsstreckenverhältnisses der Aufwärtsstrecken-"HARQ"-Zeitgebungsreferenz gebildet ist.

5. Verfahren für semipersistente Planung nach einem der Ansprüche 1 bis 4, wobei der Konfigurationssatz des Aufwärtsstrecken- und Abwärtsstreckenverhältnisses des TDD-Rahmens durch Verwendung einer Systemrundsendenachricht und/oder einer dedizierten Funkressourcensteuerungsnachricht, RRC-Nachricht, erfasst wird.

6. Verfahren für semipersistente Planung nach einem der Ansprüche 1 bis 5, wobei das Verfahren für semipersistente Planung ferner umfasst:
Erfassen einer SPS-Steueranweisung aus Subrahmen im konstanten Subrahmensatz, deren Aufwärtsstrecken- und Abwärtsstreckenattribute einer Senderichtung der SPS-Steueranweisung gleichen, wobei die SPS-Steueranweisung eine oder eine Kombination von mehreren aus einer SPS-Aktivierungsanweisung, einer SPS-Anweisung zum neuen Senden eines Datenblocks, einer SPS-Anweisung zum erneuten Senden eines Datenblocks und einer SPS-Freigabeanweisung umfasst.

7. Verfahren für semipersistente Planung nach einem der Ansprüche 1 bis 6, wobei der Schritt zum Durchführen der SPS-Sendung in einem Subrahmen im konstanten Subrahmensatz umfasst:

Erfassen eines Periodenoffsets der Aufwärtsstrecken-SPS-Sendung; und
Versetzen einer Sendeperiode der Aufwärtsstrecken-SPS-Sendung in Übereinstimmung mit dem Periodenoffset.

8. Verfahren für semipersistente Planung nach Anspruch 7, wobei der Schritt zum Erfassen eines Periodenoffsets der Aufwärtsstrecken-SPS-Sendung genauer umfasst: Erfassen einer zweiten Referenzkonfiguration des Aufwärtsstrecken- und Abwärtsstreckenverhältnisses und Ermitteln des Periodenoffsets der Aufwärtsstrecken-SPS-Sendung unter Verwendung der zweiten Referenzkonfiguration des Aufwärtsstrecken- und Abwärtsstreckenverhältnisses und eines Subrahmens für die Aufwärtsstrecken-SPS-Sendung.

9. Verfahren für semipersistente Planung nach Anspruch 8, wobei die zweite Referenzkonfiguration des Aufwärtsstrecken- und Abwärtsstreckenverhältnisses eine aus der Konfiguration des Aufwärtsstrecken- und Abwärtsstreckenverhältnisses der Abwärtsstrecken-"HARQ"-Zeitgebungsreferenz, der Konfiguration des Aufwärtsstrecken- und Abwärtsstreckenverhältnisses der Aufwärtsstrecken-"HARQ"-Zeitgebungsreferenz und einer Konfiguration des Aufwärtsstrecken- und Abwärtsstreckenverhältnisses in der ersten Referenzkonfiguration des Aufwärtsstrecken- und Abwärtsstreckenverhältnisses mit einer Minimalanzahl an Aufwärtsstrecken-Subrahmen ist.

10. Endgerät (100), wobei das Endgerät ein Ermittlungsmodul (11) und ein erstes Ausführungsmodul (12) umfasst, wobei das Ermittlungsmodul ausgelegt ist, einen konstanten Subrahmensatz in einem TDD-Rahmen zu ermitteln, wobei ein Aufwärtsstrecken- und Abwärtsstreckenattribut jedes Subrahmens im konstanten Subrahmensatz unverändert bleibt, wenn sich eine Konfiguration des Aufwärtsstrecken- und Abwärtsstreckenverhältnisses des TDD-Rahmens dynamisch ändert; und
das erste Ausführungsmodul ausgelegt ist, eine SPS-Sendung in einem Subrahmen im vom Ermittlungsmodul ermittelten konstanten Subrahmensatz durchzuführen, dessen Aufwärtsstrecken- und Abwärtsstreckenattribut einer Senderichtung der SPS-Sendung gleicht; **dadurch gekennzeichnet, dass**
der konstante Subrahmensatz ein konstanter Aufwärtsstrecken-Subrahmensatz und/oder ein konstanter Abwärtsstrecken-Subrahmensatz ist, wobei Subrahmen im konstanten Aufwärtsstrecken-Subrahmensatz alle Aufwärtsstrecken-Subrahmen sind, wenn sich die Konfiguration des Aufwärtsstrecken- und Abwärtsstreckenverhältnisses des TDD-Rahmens dynamisch ändert, und Subrahmen im konstanten Abwärtsstrecken-Subrahmensatz alle Abwärtsstrecken-Subrahmen sind, wenn sich die Konfiguration des Aufwärtsstrecken- und Abwärtsstreckenverhältnisses des TDD-Rahmens dynamisch ändert; und das erste Ausführungsmodul ausgelegt ist, eine Aufwärtsstrecken-SPS-Sendung im konstanten Aufwärtsstrecken-Subrahmensatz durchzuführen oder eine Abwärtsstrecken-SPS-Sendung im konstanten Abwärtsstrecken-Subrahmensatz durchzuführen.

11. Endgerät nach Anspruch 10, wobei das Ermittlungsmodul ausgelegt ist, die mindestens eine erste Referenzkonfiguration des Aufwärtsstrecken- und Abwärtsstreckenverhältnisses zu erfassen; und den konstanten Aufwärtsstrecken-Subrahmensatz durch einen Aufwärtsstrecken-Subrahmen in der ersten Referenzkonfiguration des Aufwärtsstrecken- und Abwärtsstreckenverhältnisses zu bilden und den konstanten Abwärtsstrecken-Subrahmensatz durch einen Abwärtsstrecken-Subrahmen und einen Sondersubrahmen in der ersten Referenzkonfiguration des Aufwärtsstrecken- und Abwärtsstreckenverhältnisses zu bilden.

**12.** Endgerät nach Anspruch 10 oder 11, wobei die erste Referenzkonfiguration des Aufwärtsstrecken- und Abwärtsstreckenverhältnisses, die zum Bilden des konstanten Abwärtsstrecken-Subrahmensatzes verwendet wird, eine Verhältniskonfiguration ist, die durch einen ersten Systeminformationsblock angedeutet wird.

**13.** Endgerät nach Anspruch 10 oder 12, wobei die erste Referenzkonfiguration des Aufwärtsstrecken- und Abwärtsstreckenverhältnisses eine erste Referenzkonfiguration des Aufwärtsstrecken- und Abwärtsstreckenverhältnisses einer Abwärtsstrecken-"HARQ"-Zeitgebungsreferenz und/oder eine Konfiguration des Aufwärtsstrecken- und Abwärtsstreckenverhältnisses einer Aufwärtsstrecken-"HARQ"-Zeitgebungsreferenz umfasst; und das Ermittlungsmodul ausgelegt ist, die mindestens eine erste Referenzkonfiguration des Aufwärtsstrecken- und Abwärtsstreckenverhältnisses zu erfassen, wobei der konstante Aufwärtsstrecken-Subrahmensatz durch einen Aufwärtsstrecken-Subrahmen in der Konfiguration des Aufwärtsstrecken- und Abwärtsstreckenverhältnisses der Abwärtsstrecken-"HARQ"-Zeitgebungsreferenz gebildet ist und der konstante Abwärtsstrecken-Subrahmensatz durch einen Abwärtsstrecken-Subrahmen und einen Sondersubrahmen in der Konfiguration des Aufwärtsstrecken- und Abwärtsstreckenverhältnisses der Aufwärtsstrecken-"HARQ"-Zeitgebungsreferenz gebildet ist.

**14.** Endgerät nach einem der Ansprüche 10 bis 13, wobei das Ermittlungsmodul ausgelegt ist, den Konfigurationssatz des Aufwärtsstrecken- und Abwärtsstreckenverhältnisses des TDD-Rahmens durch Verwendung einer Systemrundsendenachricht und/oder einer dedizierten RRC-Nachricht zu erfassen.

**15.** Endgerät nach einem der Ansprüche 10 bis 14, wobei das Endgerät ferner ein Erfassungsmodul umfasst, wobei das Erfassungsmodul ausgelegt ist, eine SPS-Steueranweisung aus Subrahmen zu erfassen, im vom Ermittlungsmodul ermittelten konstanten Subrahmensatz, dessen Aufwärtsstrecken- und Abwärtsstreckenattribute einer Senderichtung der SPS-Steueranweisung gleichen, wobei die Sendesteueranweisung eine oder eine Kombination von mehreren aus einer SPS-Aktivierungsanweisung, einer SPS-Anweisung zum neuen Senden eines Datenblocks, einer SPS-Anweisung zum erneuten Senden eines Datenblocks und einer SPS-Freigabeanweisung umfasst.

**16.** Endgerät nach einem der Ansprüche 10 bis 15, wobei das erste Ausführungsmodul ausgelegt ist, einen Periodenoffset der Aufwärtsstrecken-SPS-Sendung zu erfassen; und eine Sendeperiode der Aufwärtsstrecken-SPS-Sendung in Übereinstimmung mit dem Periodenoffset zu versetzen.

**17.** Endgerät nach Anspruch 16, wobei das erste Ausführungsmodul ausgelegt ist, eine zweite Referenzkonfiguration des Aufwärtsstrecken- und Abwärtsstreckenverhältnisses zu erfassen und den Periodenoffset der Aufwärtsstrecken-SPS-Sendung unter Verwendung der zweiten Referenzkonfiguration des Aufwärtsstrecken- und Abwärtsstreckenverhältnisses und eines Subrahmens für die Aufwärtsstrecken-SPS-Sendung zu ermitteln.

**18.** Endgerät nach Anspruch 17, wobei die zweite Referenzkonfiguration des Aufwärtsstrecken- und Abwärtsstreckenverhältnisses eine aus der Konfiguration des Aufwärtsstrecken- und Abwärtsstreckenverhältnisses der Abwärtsstrecken-"HARQ"-Zeitgebungsreferenz, der Konfiguration des Aufwärtsstrecken- und Abwärtsstreckenverhältnisses der Aufwärtsstrecken-"HARQ"-Zeitgebungsreferenz und einer Konfiguration des Aufwärtsstrecken- und Abwärtsstreckenverhältnisses in der ersten Referenzkonfiguration des Aufwärtsstrecken- und Abwärtsstreckenverhältnisses mit einer Minimalanzahl an Aufwärtsstrecken-Subrahmen ist.

**Revendications**

**1.** Procédé de planification semi-permanente, dans lequel le procédé de planification semi-permanente consiste à :

déterminer (S101) un ensemble de sous-trames constant dans une trame de duplexage par répartition dans le temps, TDD, dans lequel un attribut de liaison montante et de liaison descendante de chaque sous-trame dans l'ensemble de sous-trames constant reste inchangé lorsqu'une configuration de proportions de liaison montante et de liaison descendante de la trame TDD change dynamiquement ; et
exécuter (S102) une transmission de planification semi-permanente, SPS, dans une sous-trame, dans l'ensemble de sous-trames constant, dont l'attribut de liaison montante et de liaison descendante est le même qu'une direction de transmission de la transmission SPS ; **caractérisé en ce que**
l'ensemble de sous-trames constant est au moins un ensemble parmi un ensemble de sous-trames constant de liaison montante et un ensemble de sous-trames constant de liaison descendante, dans lequel des sous-trames dans l'ensemble de sous-trames constant de liaison montante sont toutes des sous-trames de liaison montante lorsque la configuration de proportions de liaison montante et de liaison descendante de la trame TDD change dynamiquement, et des sous-trames dans l'ensemble de sous-trames constant de liaison descendante sont toutes des sous-trames de liaison descendante lorsque la configuration de proportions de liaison montante et de liaison descendante de la trame TDD change dynamiquement ; et

l'étape d'exécution d'une transmission SPS dans une sous-trame, dans l'ensemble de sous-trames constant, dont l'attribut de liaison montante et de liaison descendante est le même qu'une direction de transmission de la transmission SPS consiste en outre à : exécuter une transmission SPS de liaison montante dans l'ensemble de sous-trames constant de liaison montante, ou exécuter une transmission SPS de liaison descendante dans l'ensemble de sous-trames constant de liaison descendante.

2.  Procédé de planification semi-permanente selon la revendication 1, dans lequel l'étape consistant à former l'ensemble de sous-trames constant par des sous-trames avec un attribut spécifique dans la première configuration de proportions de référence de liaison montante et de liaison descendante consiste en outre à :
    former l'ensemble de sous-trames constant de liaison montante par une sous-trame de liaison montante dans la première configuration de proportions de référence de liaison montante et de liaison descendante, et former l'ensemble de sous-trames constant de liaison descendante par une sous-trame de liaison descendante et une sous-trame spéciale dans la première configuration de proportions de référence de liaison montante et de liaison descendante.

3.  Procédé de planification semi-permanente selon la revendication 2, dans lequel la première configuration de proportions de référence de liaison montante et de liaison descendante utilisée pour former l'ensemble de sous-trames constant de liaison descendante est une configuration de proportions indiquée par un premier bloc d'informations de système.

4.  Procédé de planification semi-permanente selon la revendication 2 ou 3, dans lequel la première configuration de proportions de référence de liaison montante et de liaison descendante comprend au moins une configuration parmi une configuration de proportions de liaison montante et de liaison descendante d'une référence temporelle HARQ de liaison descendante et une configuration de proportions de liaison montante et de liaison descendante d'une référence temporelle HARQ de liaison montante, dans lequel l'ensemble de sous-trames constant de liaison montante est formé par une sous-trame de liaison montante dans la configuration de proportions de liaison montante et de liaison descendante de la référence temporelle HARQ de liaison descendante, et l'ensemble de sous-trames constant de liaison descendante est formé par une sous-trame de liaison descendante et une sous-trame spéciale dans la configuration de proportions de liaison montante et de liaison descendante de la référence temporelle HARQ de liaison montante.

5.  Procédé de planification semi-permanente selon l'une quelconque des revendications 1 à 4, dans lequel l'ensemble de configurations de proportions de liaison montante et de liaison descendante de la trame TDD est acquis à l'aide d'au moins un message parmi un message de diffusion de système et un message de contrôle de ressources radio, RRC, dédié.

6.  Procédé de planification semi-permanente selon l'une quelconque des revendications 1 à 5, dans lequel le procédé de planification semi-permanente consiste en outre à :
    acquérir une instruction de commande SPS à partir de sous-trames, dans l'ensemble de sous-trames constant, dont les attributs de liaison montante et de liaison descendante sont les mêmes qu'une direction de transmission de l'instruction de commande SPS, dans lequel l'instruction de commande SPS comprend une instruction ou une combinaison de multiples instructions parmi une instruction d'activation SPS, une instruction SPS de nouvellement transmettre un bloc de données, une instruction SPS de retransmettre un bloc de données, et une instruction de libération SPS.

7.  Procédé de planification semi-permanente selon l'une quelconque des revendications 1 à 6, dans lequel l'étape consistant à exécuter une transmission SPS dans une sous-trame dans l'ensemble de sous-trames constant consiste à :

    acquérir un décalage de période de la transmission SPS de liaison montante ; et
    décaler une période de transmission de la transmission SPS de liaison montante en fonction du décalage de période.

**8.** Procédé de planification semi-permanente selon la revendication 7, dans lequel l'étape consistant à acquérir un décalage de période de la transmission SPS de liaison montante consiste spécifiquement à :

acquérir une seconde configuration de proportions de référence de liaison montante et de liaison descendante, et déterminer le décalage de période de la transmission SPS de liaison montante à l'aide de la seconde configuration de proportions de référence de liaison montante et de liaison descendante et d'une sous-trame pour la transmission SPS de liaison montante.

**9.** Procédé de planification semi-permanente selon la revendication 8, dans lequel la seconde configuration de proportions de référence de liaison montante et de liaison descendante est une configuration parmi la configuration de proportions de liaison montante et de liaison descendante de la référence temporelle HARQ de liaison descendante, la configuration de proportions de liaison montante et de liaison descendante de la référence temporelle HARQ de liaison montante, et une configuration de proportions de liaison montante et de liaison descendante, dans la première configuration de proportions de référence de liaison montante et de liaison descendante, avec une quantité minimum de sous-trames de liaison montante.

**10.** Équipement utilisateur (100), dans lequel l'équipement utilisateur comprend un module de détermination (11) et un premier module d'exécution (12), dans lequel le module de détermination est configuré pour déterminer un ensemble de sous-trames constant dans une trame TDD, dans lequel un attribut de liaison montante et de liaison descendante de chaque sous-trame dans l'ensemble de sous-trames constant reste inchangé lorsqu'une configuration de proportions de liaison montante et de liaison descendante de la trame TDD change dynamiquement ; et

le premier module d'exécution est configuré pour exécuter une transmission SPS dans une sous-trame, dans l'ensemble de sous-trames constant déterminé par le module de détermination, dont l'attribut de liaison montante et de liaison descendante est le même qu'une direction de transmission de la transmission SPS ; **caractérisé en ce que** l'ensemble de sous-trames constant est au moins un ensemble parmi un ensemble de sous-trames constant de liaison montante et un ensemble de sous-trames constant de liaison descendante, dans lequel des sous-trames dans l'ensemble de sous-trames constant de liaison montante sont toutes des sous-trames de liaison montante lorsque la configuration de proportions de liaison montante et de liaison descendante de la trame TDD change dynamiquement, et des sous-trames dans l'ensemble de sous-trames constant de liaison descendante sont toutes des sous-trames de liaison descendante lorsque la configuration de proportions de liaison montante et de liaison descendante de la trame TDD change dynamiquement ; et le premier module d'exécution est configuré pour exécuter une transmission SPS de liaison montante dans l'ensemble de sous-trames constant de liaison montante, ou exécuter une transmission SPS de liaison descendante dans l'ensemble de sous-trames constant de liaison descendante.

**11.** Équipement utilisateur selon la revendication 10, dans lequel le module de détermination est configuré pour acquérir l'au moins une première configuration de proportions de référence de liaison montante et de liaison descendante ; et former l'ensemble de sous-trames constant de liaison montante par une sous-trame de liaison montante dans la première configuration de proportions de référence de liaison montante et de liaison descendante, et former l'ensemble de sous-trames constant de liaison descendante par une sous-trame de liaison descendante et une sous-trame spéciale dans la première configuration de proportions de référence de liaison montante et de liaison descendante.

**12.** Équipement utilisateur selon la revendication 10 ou 11, dans lequel la première configuration de proportions de référence de liaison montante et de liaison descendante utilisée pour former l'ensemble de sous-trames constant de liaison descendante est une configuration de proportions indiquée par un premier bloc d'informations de système.

**13.** Équipement utilisateur selon la revendication 10 ou 12, dans lequel la première configuration de proportions de référence de liaison montante et de liaison descendante comprend au moins une configuration parmi une configuration de proportions de liaison montante et de liaison descendante d'une référence temporelle HARQ de liaison descendante et une configuration de proportions de liaison montante et de liaison descendante d'une référence temporelle HARQ de liaison montante ; et le module de détermination est configuré pour acquérir l'au moins une première configuration de proportions de référence de liaison montante et de liaison descendante, dans lequel l'ensemble de sous-trames constant de liaison montante est formé par une sous-trame de liaison montante dans la configuration de proportions de liaison montante et de liaison descendante de la référence temporelle HARQ de liaison descendante, et l'ensemble de sous-trames constant de liaison descendante est formé par une sous-trame de liaison descendante et une sous-trame spéciale dans la configuration de proportions de liaison montante et de liaison descendante de la référence temporelle HARQ de liaison montante.

**14.** Équipement utilisateur selon l'une quelconque des revendications 10 à 13, dans lequel le module de détermination est configuré pour acquérir l'ensemble de configurations de proportions de liaison montante et de liaison descendante de la trame TDD à l'aide d'au moins un message parmi un message de diffusion de système et un message RRC dédié.

**15.** Équipement utilisateur selon l'une quelconque des revendications 10 à 14, dans lequel l'équipement utilisateur comprend en outre un module d'acquisition, dans lequel le module d'acquisition est configuré pour acquérir une instruction de commande SPS à partir de sous-trames, dans l'ensemble de sous-trames constant déterminé par le module de détermination, dont les attributs de liaison montante et de liaison descendante sont les mêmes qu'une direction de transmission de l'instruction de commande SPS, dans lequel l'instruction de commande de transmission comprend une instruction ou une combinaison de multiples instructions parmi une instruction d'activation SPS, une instruction SPS de nouvellement transmettre un bloc de données, une instruction SPS de retransmettre un bloc de données, et une instruction de libération SPS.

**16.** Équipement utilisateur selon l'une quelconque des revendications 10 à 15, dans lequel le premier module d'exécution est configuré pour acquérir un décalage de période de la transmission SPS de liaison montante ; et décaler une période de transmission de la transmission SPS de liaison montante en fonction du décalage de période.

**17.** Équipement utilisateur selon la revendication 16, dans lequel le premier module d'exécution est configuré pour acquérir une seconde configuration de proportions de référence de liaison montante et de liaison descendante, et déterminer le décalage de période de la transmission SPS de liaison montante à l'aide de la seconde configuration de proportions de référence de liaison montante et de liaison descendante et d'une sous-trame pour la transmission SPS de liaison montante.

**18.** Équipement utilisateur selon la revendication 17, dans lequel la seconde configuration de proportions de référence de liaison montante et de liaison descendante est une configuration parmi la configuration de proportions de liaison montante et de liaison descendante de la référence temporelle HARQ de liaison descendante, la configuration de proportions de liaison montante et de liaison descendante de la référence temporelle HARQ de liaison montante, et une configuration de proportions de liaison montante et de liaison descendante, dans la première configuration de proportions de référence de liaison montante et de liaison descendante, avec une quantité minimum de sous-trames de liaison montante.

FIG. 1

FIG. 2

| Determine a constant subframe set in a TDD frame, where an uplink and downlink attribute of each subframe in the constant subframe set remains unchanged when an uplink and downlink proportion configuration of the TDD frame dynamically changes | S101 |

| Perform SPS transmission in a subframe, in the constant subframe set, whose uplink and downlink attribute is the same as a transmission direction of the SPS transmission | S102 |

FIG. 3

Acquire an uplink and downlink proportion configuration set of the TDD frame, where the uplink and downlink proportion configuration set includes at least two uplink and downlink proportion configurations — S1011

Determine subframes whose uplink and downlink attributes remain unchanged in the at least two uplink and downlink proportion configurations, to form the constant subframe set — S1012

FIG. 4

Acquire at least one first reference uplink and downlink proportion configuration — S1021

Form the constant subframe set by subframes with a specific attribute in the first reference uplink and downlink proportion configuration — S1022

FIG. 5

Acquire an uplink and downlink proportion configuration set of the TDD frame, where the uplink and downlink proportion configuration set includes at least two uplink and downlink proportion configurations — S1031

Select, from the at least two uplink and downlink proportion configurations, an uplink and downlink proportion configuration with a minimum quantity of subframes whose uplink and downlink attributes are the same as the transmission direction of the SPS transmission, and form the constant subframe set by subframes, in the selected uplink and downlink proportion configuration, which are the same as the transmission direction of the SPS transmission — S1032

FIG. 6

Determine a constant subframe set in a TDD frame, where an uplink and downlink attribute of each subframe in the constant subframe set remains unchanged when an uplink and downlink proportion configuration of the TDD frame dynamically changes — S201

Perform, in a subframe, in the constant subframe set, whose uplink and downlink attribute is the same as a transmission direction of feedback transmission corresponding to the SPS transmission, the feedback transmission corresponding to the SPS transmission — S202

FIG. 7

Acquire a period offset of uplink SPS transmission — S3011

Offset a transmission period of the uplink SPS transmission according to the period offset. — S3012

FIG. 8

A base station configures, for a UE, parameter information that can determine a constant subframe set, where an uplink and downlink attribute of each subframe in the constant subframe set remains unchanged when an uplink and downlink proportion configuration of a TDD frame dynamically changes — S301

Notify the parameter information to the UE — S302

FIG. 9

An uplink and downlink proportion configuration of a TDD frame dynamically changes — S401

No

Determine whether an uplink and downlink attribute of an SPS available subframe for performing SPS transmission changes — S402

Yes

Ignore the SPS transmission — S403

FIG. 10

100

11

Determining module

12

First execution module

FIG. 11

200

Determining module 11

Acquiring module 23

First execution module 22

Second execution module 24

FIG. 12

300

Input device 33

Output device 34

Processor 31

35

Memory 32

FIG. 13

400

Configuration module 41

Notification module 42

FIG. 14

FIG. 15

FIG. 16

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2012113131 A1